# EUROPEAN PATENT SPECIFICATION

(11) **EP 3 269 164 B1**
(45) Date of publication and mention of the grant of the patent: **21.06.2023**
(21) Application number: 16709547.0
(22) Date of filing: 07.03.2016
(51) Int. Cl.: H04W 8/24

(54) **SELF-ORGANISING NETWORK ENGINE FOR PER USER OPTIMISATION IN A TELECOMMUNICATIONS NETWORK**
SELBSTORGANISIERENDE NETZWERKMASCHINE FÜR OPTIMIERUNG PRO BENUTZER IN EINEM TELEKOMMUNIKATIONSNETZ
MOTEUR DE RÉSEAU AUTO-ORGANISATEUR POUR UNE OPTIMISATION PAR UTILISATEUR DANS UN RÉSEAU DE TÉLÉCOMMUNICATION

(30) Priority: 09.03.2015 GB 201503989; 17.11.2015 GB 201520263
(43) Date of publication of application: 17.01.2018
(73) Proprietor: Vodafone IP Licensing Limited, The Connection Newbury Berkshire RG14 2FN (GB)
(72) Inventor: ARULKKUMARAN, Arul, London Greater London W2 6BY (GB); MURRAY, Eric, London Greater London W2 6BY (GB); DE PASQUALE, Andrea, London Greater London W2 6BY (GB); TENORIO, Santiago, London Greater London W2 6BY (GB); TRAN LE, Mai, London Greater London W2 6BY (GB); POUS-FENOLLAR, Mabel, London Greater London W2 6BY (GB); BINDRIM, Walter, London Greater London W2 6BY (GB); OLIVER, Antonio, London Greater London W2 6BY (GB)
(74) Representative: Boult Wade Tennant LLP
(86) International application number: PCT/GB2016/050613
(87) International publication number: WO 2016/142684

(56) References cited:
- EP-A2- 3 026 950
- EP-A2- 3 026 950
- WO-A1-2014/056551
- US-A1- 2013 114 460
- US-A1- 2014 181 257
- US-A1- 2015 056 960
- "3rd Generation Partnership Project; Technical Specification Group Services and System Aspects; Telecommunication Management; Self-Organizing Networks (SON) Policy Network Resource Model (NRM) Integration Reference Point (IRP); Requirements (Release 11)", 3GPP STANDARD; 3GPP TS 32.521, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V11.1.0, 20 December 2012 (2012-12-20), pages 1-26, XP050691392,

## Description

### Background

Management and control of telecommunications networks is an ongoing problem. Service providers and infrastructure providers constantly look for ways to more efficiently use network resources, improve performance, balance traffic load, reduce risk of malfunction, and/or meet service level agreements.

This problem is made more complex by the variety and heterogeneous nature of telecommunications networks. For example, many telecommunications networks have equipment of different types and provide communications using different frequencies, different technologies (such as GSM, UMTS, LTE and Wi-Fi) and different hierarchical layers (such as macro cells, small cells, femto cells). Currently the management and control systems attempt to optimize telecommunications networks by optimizing the performance of network equipment, parameters and/or characteristics of the telecommunications network (e.g. cell(s), network element(s), radio broadcast system (RBS), radio network controller (RNC), and/or base station(s), etc.), which typically affect all the users in the optimized area.

For example, the so-called Self-Organising Network (SON) is an intelligent platform that automatically optimises 2G, 3G and 4G networks at a cellular level. The Third Generation Partnership Project (3GPP) has introduced the SON concept into Release 8, and defined a set of use cases that govern a network including the planning, deployment, optimisation and maintenance activities

The SON use cases include Automatic Neighbour Relation (ANR), Coverage and Capacity Optimization (CCO), Mobility Load Balancing (MLB), Mobility Robustness Optimization (MRO) etc.; each use case will optimise different network parameters automatically. For example, ANR adds or deletes neighbour relations to reduce overall user call drops due to missing or incorrect neighbour cells. CCO optimises base station pilot transmission power, antenna tilting and some handover threshold to balance the coverage and capacity. MLB optimises the pilot transmission power and handover parameters to balance the traffic between different sites, different frequency layers and different technologies (2G/3G/LTE).

Current SON solutions are required to operate through a 3GPP standardized Operation Support System (OSS) function in which OSS vendors can only provide a limited set of OSS applications to operators for optimizing a network only to a minimum granularity of the network equipment, network parameters and/or characteristics (e.g. cell wide management). As current SON solutions are only able to apply the optimization to network equipment that affects cells, they cannot perform an optimization that targets a specific user of a specific cell without targeting other users within that cell and possibly adversely affecting such users.

Furthermore, SON solutions are limited to the existing Radio Access Network (RAN) technologies and do not capture all requirements towards heterogeneous networks where different technologies and user equipment such as smart devices coexist together. The OSS allows an operator to optimize the network using the configuration management application. The OSS configuration management is limited to a set of parameters and features defined by the network vendor which the operator can only apply to the network equipment.
European Patent Publication EP 3 026 950 A2 is prior art under Article 54(3) EPC only. EP 3 026 950 A2, according to its abstract, describes a self-organizing network engine for use in a telecommunications network. The self-organizing network engine is configured to receive one or more quality of service indicators describing a quality of service experienced by a user equipment device when receiving a service from a telecommunications network comprising the self-organizing network engine.
WO 2014/056551 A1, according to its abstract, describes a method comprising receiving at least one of a) usage condition information relating to one or more usage conditions of a user equipment and b) network performance information; and using said information to cause a change in one or more parameters which individually control a or said user equipment, said parameters being radio resource management parameters.
US 2013/114460 A1, according to its abstract, describes a technique for generating or updating a user profile based on a packet flow in a communications network from a user terminal to a destination address. A method implementation of this technique comprises receiving, by a Policy Control and Charging Rules Function (PCRF) from a Policy and Charging Enforcement Function (PCEF), at least one item of information indicative of at least one of the destination address and a service provided at the destination address to the user terminal. Based on this item of information, a user profile for a user associated with the user terminal is generated or updated

The embodiments described below are not limited to implementations which solve any or all of the disadvantages of known telecommunications network control systems.

### Summary

The claims define the matter for which protection is sought. This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Methods and apparatus are provided for management, control and optimization of a telecommunications network using a self-organizing network (SON) engine configured to optimize the communication problems, performance issues and/or user experience of user equipment devices (UEs) on a per user basis. The methods and apparatus collect communications data for each user related to the performance, the mobility and/or the communications of the UE including historical behaviour of the UE. This user data is analysed to identify communication issues, communication problems, user experience and/or performance issues associated with the UE in which one or more optimisation strategy(ies) are determined/selected to generate actions for configuring the telecommunication network on a per user basis for optimizing the user experience. For example, the radio access network may be configured to optimise the user experience of the UE and/or the behaviour of the UE. The SON engine may define an optimisation loop in which the current status of the UE is determined, an optimisation strategy may be selected based on the status of the UE for optimising the user experience of the UE. As well, further communication data associated with the UE is collected, analysed to identify further communication issues, communication problems, user experience and/or performance issues and the like, determining/selecting further optimisation strategy(ies) and taking appropriate action to optimise the user experience.

### Brief Description of the Drawings

Embodiments of the invention will be described, by way of example, with reference to the following drawings, in which:
Figure 1 is a schematic diagram of a telecommunications network comprising a plurality of end UE devices;
Figure 2a is a schematic diagram of the telecommunications network of Figure 1 with an example self-organizing network node according to the invention;
Figure 2b is a schematic diagram of the example self-organizing network node of Figure 2a including a SON engine and user profile database;
Figure 3a is a flow diagram of an example method performed by the SON engine of Figure 2b;
Figure 3b is a flow diagram of another example method performed by the SON engine of Figure 2b;
Figure 3c is a flow diagram of another example method performed by a UE or a network element in response to a command received by the SON engine of Figure 2b;
Figure 4a is a schematic diagram of a further example telecommunication network with another example SON engine according to the invention;
Figure 4b is another schematic diagram of the telecommunication network and SON engine of Figure 4a;
Figure 5a is a schematic diagram of an example SON engine of Figures 4a and 4b;
Figure 5b is a schematic diagram of an example SON engine of figure 5a;
Figure 5c is a schematic diagram of an example performance analysis engine of the for use in the example SON engine of figure 5b;
Figure 5d is a schematic diagram of an example database for use in the example SON engine of figure 5b;
Figure 5e is a schematic diagram of an example optimisation engine for use in the SON engine of figure 5b;
Figure 5f is a schematic diagram of the example optimisation engine of figure 5e;
Figure 5g is a flow diagram illustrating an example method(s) for use with an example operation engine of SON engine of figure 5b;
Figure 6a is a flow diagram of an example method performed by the SON engine of Figure 5a;
Figure 6b is another flow diagram of an example method performed by the SON engine of Figure 5a;
Figure 6c is a further flow diagram of an example method performed by the SON engine of Figure 5a;
Figure 7 is another schematic diagram of an example SON engine according to the invention;
Figure 8 is a schematic diagram of an example UE for use with the SON engine of Figure 7;
Figure 9 is a schematic diagram of an example network element for user with the SON engine of Figure 7;
Figure 10 is a signalling diagram of an example signal flow between an example SON engine, network element(s) and UE in response to performance issue(s);
Figure 11 is a signalling diagram of an example signal flow between an example SON engine, network element(s) and UE in response to handover performance issue(s);
Figure 12 is an alternative signalling diagram of another example signal flow between a SON engine, network element(s) and a UE in response to handover performance issue(s);
Figure 13 is a flow diagram illustrating the operation of SON engine, network elements, and UE in response to handover performance issue(s) of Figures 11 or 12;
Figure 14 is a signalling diagram of the signal flow between a SON engine, network elements, and a UE in response to power consumption performance issue(s); and
Figure 15 is another signalling diagram of the signal flow between a SON engine and a UE in response to power consumption performance issue(s);

Common reference numerals are used throughout the figures to indicate similar features.

### Detailed Description

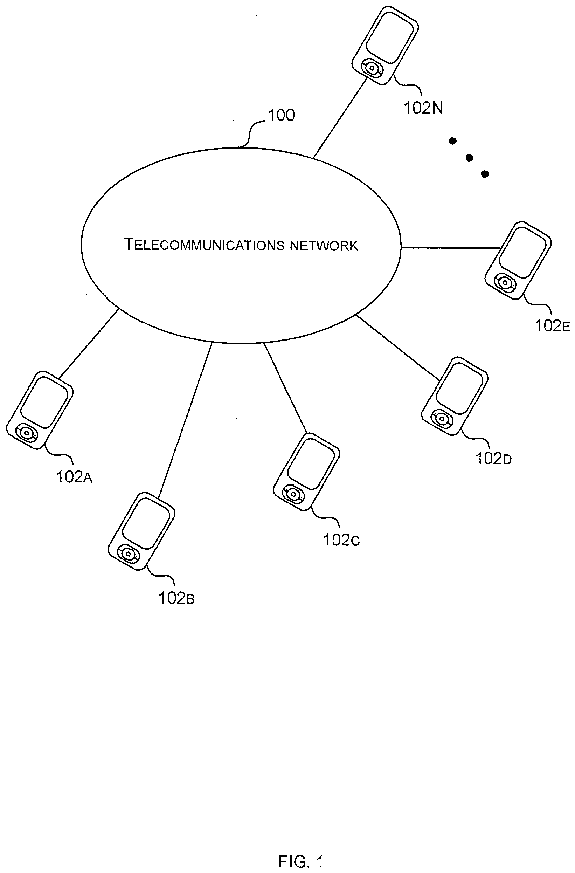

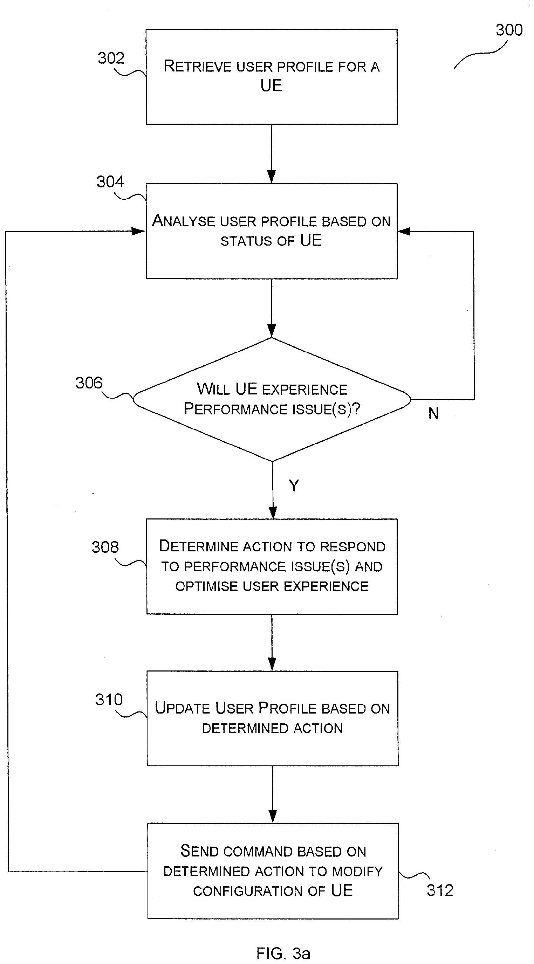

The embodiments described with reference to Figure 3a and all figures related to it (including figures 1 to 2b) fall within the scope of the claims. All other embodiments are useful to better understand the invention.

The inventors have found that it is possible to improve management and control of a telecommunications network using a self-organising network (SON) engine configured to optimize the performance and/or continuation of service for a particular end user equipment device can be met in a more efficient manner whilst not affecting or severely impacting any remaining end user devices. The invention is suited to controlling the telecommunications network and/or user equipment to ensure that user experience is optimized on a per user basis in an efficient manner, even where the telecommunications network is heterogeneous. For example, where the telecommunications network has equipment of different types, provides communications using different frequencies, different technologies (such as GSM, UMTS, LTE and Wi-Fi) and different hierarchical layers (such as macro cells, small cells, femto cells etc.). In the examples described herein, a SON engine is used to manage and control network elements and equipment in a telecommunications network and/or user equipment devices. As a result of optimizing the user experience for each user in the telecommunications network in a more efficient manner, overall network performance is improved and faults, congestion and the need for maintenance is reduced.

Previous SON engines for telecommunications have not been able to manage and control telecommunications networks or heterogeneous telecommunications networks in a manner that allows optimization of the performance of a particular end user equipment device in the telecommunications network.

A SON engine comprises computer-implemented functionality for executing an optimization algorithm which uses efficient methods to search huge numbers of combinations of possible values of parameters of a telecommunications network (such as a 2G, 3G, 4G mobile radio access network), to find solutions which are optimal according to one or more assessment metrics. For example, in current SON engines, the parameters include but are not limited to hand-over parameters, antenna tilt parameters, pilot transmission power, common channel transmission power, automatic neighbour relations, and traffic load etc. The assessment metric may comprise thresholds and or criteria to be met by telecommunications network performance data. Examples of telecommunications network performance data include but are not limited to key performance indicators such as dropped call rate, call setup failure rate. However, these cannot be used to determine the performance issue(s) associated with a particular UE and for adapting or configuring the UE to optimize the user experience and mitigate the performance issue(s) of the particular UE.

Various embodiments and examples of the invention use an adaptable, intelligent, or *"smart" SON* engine that comprises computer-implemented functionality that is configured to provide for management, control and optimization of a telecommunications network and optimize the performance of UEs on a per user basis. The term smart SON engine or SSON engine is used to describe one or more examples of the SON engine according to the invention.

As an example, the SSON engine may be configured to collect, for each user, communications data and/or user data related to the performance, the mobility and the communications of the UE including historical behaviour of the UE. This user data is analysed to identify performance issues associated with the UE in which actions are determined to optimize the user experience. The current status of the UE is used to determine which action(s) are required for mitigating, if any, the performance issue(s) that may affect the UE. The selected action(s) are used to command one or more network element(s) or equipment in the telecommunication network that are associated with the performance issue(s) to modify the configuration of the UE to optimize the user experience.

Alternatively or additionally, the selected actions may be used to directly command the UE to modify the configuration of the UE to optimize the user experience and thus mitigate the performance issue(s) for the UE. The further user data based on performance, the mobility and the communications of the UE in the telecommunications network may be collected and feedback to the SON engine for identifying further performance issue(s) for the UE and/or updating, modifying and/or generating further actions and triggers for mitigating performance issue(s) for the UE and thus further optimizing the user experience.

The SSON engine functionality may be centralized or distributed through a telecommunications network. Hybrid deployments using a mix of centralized and distributed SSON technology may also be used.

An operation support system (OSS) is computer-implemented apparatus interfacing between a conventional SON engine and telecommunications infrastructure. An example OSS is described in more detail below.

As previously described, the Third Generation Partnership Project (3GPP) introduced into Release 8 the concept of a SON, an intelligent platform that automatically optimizes 2G, 3G and 4G networks, and defined a set of use cases that govern a network including the planning, deployment, optimization and maintenance activities. 3GPP does not specify how to implement these use cases: SON vendors may implement the use cases using their own proprietary algorithms. The use cases include ANR, CCO, MLB, and MRO.

However, solutions associate with the ANR, CCO, MLB and MRO user cases only provide optimized parameters that can only be applied on the network side and at the network level (e.g. cell level), which can only be used to improve the communication conditions for all users of a cell or group of cells. These solutions and their optimized parameters cannot be applied for specific users without impacting all other users of a cell. It is apparent that these solutions are not suitable for optimizing the user experience for a specific UE or for mitigating performance issue(s) experienced by a specific UE in a cell and thus improving the communication conditions for a specific UE even though the majority of users may not be experiencing performance issue(s).

Figure 1 is a schematic diagram of a telecommunications network 100 comprising a plurality of end user equipment devices (UEs) 1 02a-1 02n. The telecommunications network comprises a plurality of cells or coverage regions that are supported by communications network elements or nodes connected by links. The links may be wired or wireless (for example, radio communications links, optical fibre). In this example, the UEs 1 02a-1 02n are located within one or more of the plurality of cells enabling the UEs to access the telecommunications network for communication. The telecommunications network may comprise one or more communications networks enabling one or more of the UEs 1 02a-1 02n to communicate with each other or other devices and equipment over the network.

Examples of telecommunication network 100 that may be used in certain embodiments of the described apparatus, methods and systems may be at least one communication network or combination thereof including, but not limited to, one or more wired and/or wireless telecommunication network(s), one or more core network(s), one or more radio access network(s), one or more end UE device network(s), one or more wireless adhoc network(s), one or more computer networks, one or more data communication network(s), the Internet, the telephone network, wireless network(s) such as the WiMAX, WLAN(s) based on, by way of example only, the IEEE 802.11 standards and/or Wi-Fi networks, or Internet Protocol (IP) networks, packet-switched networks or enhanced packet switched networks, IP Multimedia Subsystem (IMS) networks, or communications networks based on wireless, cellular or satellite technologies such as mobile networks, Global System for Mobile Communications (GSM), GPRS networks, Wideband Code Division Multiple Access (W-CDMA), CDMA2000 or Long Term Evolution (LTE)/LTE Advanced networks or any 2nd, 3rd or 4th Generation and beyond type communication networks.

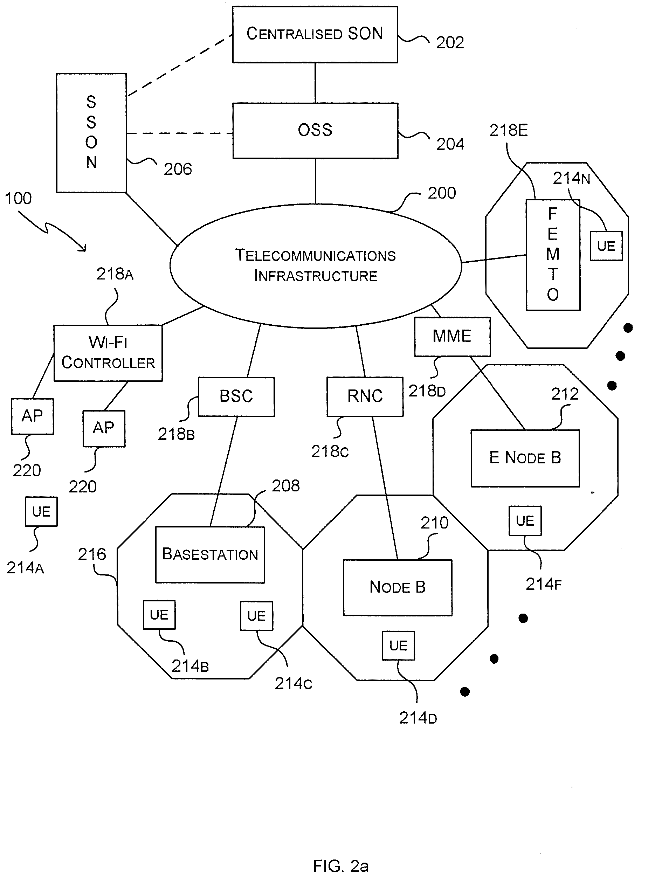

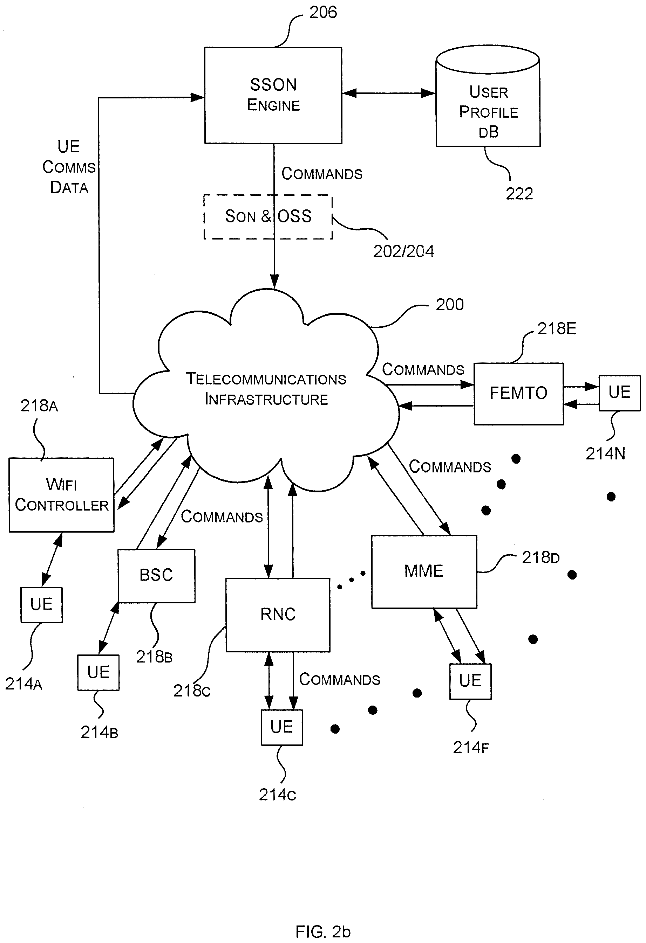

Figures 2a and 2b are schematic diagrams of the telecommunications network of Figure 1 with a conventional centralized SON engine 202 and OSS 204 with an example of a SSON engine 206 coupled to the telecommunications network. The conventional SON engine 202 is connected to telecommunications infrastructure 200 of the telecommunications network 100 via an OSS 204. The conventional SON engine 202 may be computer-implemented using, for example, a server or a group of servers, and is coupled to OSS 204 for implementing the 3GPP use cases including ANR, CCO, MLB, and MRO. The OSS 204 is also computer-implemented and is arranged to interface with telecommunications infrastructure 200. The SSON engine 206 may also be computer-implemented using, for example, a server or a group of servers, and may be coupled directly to the telecommunications infrastructure 200, and/or coupled to the telecommunications infrastructure 200 via the conventional SON engine 202 and/or OSS 204.

The telecommunications infrastructure 200 includes different types of telecommunications network nodes and/or elements. These include, by way of example only but are not limited to, base stations, access points, network elements, network controller elements, switches, and routers etc. In this example, telecommunications infrastructure 200 is in communication with a variety of communication networks such as a Wi-Fi network, cellular telecommunications networks and a femto network. The cellular telecommunications networks are based on 2G, 3G and 4G technologies. The base stations of the cellular telecommunications networks include base stations 208, 210, and 212 with each base station having a footprint indicated schematically in the figure as a hexagonal cell.

The base stations 208, 210 and 212 are controlled by network controller elements 218b, 218c and 218d. The 2G network includes base station controller 218b and base station 208, the 3G network includes radio network controller 218c and base station 210 (e.g. a NodeB), and the 4G network includes the MME 218d and base station 212 (e.g. an eNodeB). The Wi-Fi network includes network controller element 218a (e.g. Wi-Fi controller) that controls access points 220 and the femto network includes femto network controller/base station 218e functionality. Although several communications networks are illustrated, it is to be appreciated by the skilled person that these are illustrated by way of example only and that the telecommunications infrastructure 200 may include any suitable communication network.

In this example, UEs 214a-214n are distributed throughout the telecommunications network in which some, i.e. UEs 214b-214f, are able to receive services from the cellular telecommunications networks telecommunications network 100 such as voice, video, data and other services. Other UEs 214a and 214n may receive voice, video, data and other services from the Wi-Fi and femto networks.

The OSS 204 is configured to receive data from the telecommunications network such as performance statistics and other data. The operation support system 204 may compute higher level statistics from the performance data it receives, for example, by aggregating data after filtering out outliers. The OSS 204 may probe the telecommunications network to obtain the performance data in some examples. The OSS 204 comprises interfaces for interoperating with various different types of telecommunications network node, such as base stations and/or other nodes in the telecommunications infrastructure. In this way the OSS is able to issue commands to telecommunications network nodes in order to only control the behaviour of those nodes.

As described above, although the higher level statistics from performance data are used by the conventional SON 202 and OSS 204 to optimize the overall telecommunications network infrastructure 200, these systems cannot be used to optimize the user experience and/or performance of the UEs 214a-214n on a per user basis.

In this example, the SSON engine 206 is configured to collect user/UE communications data associated with each of the UEs 214a-214n of each user including the historical behaviour of the users and UEs 214a-214n (e.g. locations, routes, services, etc.) and identify which users and UEs may have or are envisaged to have a communications problem or performance issue during a communication session based on the current UE status. The communications data for each UE or user and associated communications problem(s)/performance issue(s) are may be stored in a user profile database 222 accessible by the SSON engine 206. The database may comprise one or more user profile records, in which each user profile record includes data representative of the communications data for each user and one or more communication problems/performance issues associated with the UE or user.

A communications problem or performance issue may include, but is not limited to, communications outages and/or poor communications performance (e.g. handover failures at a particular location or interference with other users at a particular location); insufficient data throughout or bandwidth during a communications session depending on mobility status and locations (e.g. stalling issues related to video playback while travelling through the same set of cells or regions each day); poor hardware and/or software configuration of the UE resulting in non-optimal performance of the UE (e.g. poor power consumption leading to short battery life and/or poor communications performance of the UE); poor user experience associated with the UE; and/or sub-optimal user experience associated with the UE, even though the user experience may be adequate, it can still be improved.

For each UE 214a-214n that experiences or is envisaged to experience an identified performance issue or problem during a communications session, the SSON engine 206 is configured to identify or determine the actions or responses that can be taken by the telecommunications network (e.g. network elements) and/or the UE itself to mitigate the performance issue(s). The determined actions/responses associated with the problem(s)/performance issue(s) for each user may be stored in the user profile database 222.

The SSON engine 206 may be configured to trigger or schedule monitoring of those UEs 214a-214n identified with problem(s)/performance issue(s) based on the status of the UE for determining when the corresponding action(s) or response(s) can be executed to mitigate the performance issues associated with each of the UEs 214a-214n. The status of a UE 214a may comprise or represent the current behaviour of the UE 214a. For example, the status of a UE 214a may comprise or represent one or more of the location and/or mobility of the UE 214a, the services used by the UE, which network the UE is using, or any other characteristic or information corresponding to the UE 214a that is detectable by the network and the SSON engine 206 to allow the SSON engine 206 to determine whether the UE 214a will experience one or more of the problem(s)/performance issue(s) associated with the UE 214a.

Once the SSON engine 206 determines whether the UE 214a may experience or is experiencing one or more of the problem(s)/performance issue(s) associated with the UE, the SSON engine 206 is configured to execute the corresponding determined action(s)/response(s). This is performed by the SSON engine 206 sending one or more commands (as illustrated in Figure 2b) associated with the actions/responses to one or more network element(s) (e.g. network controller elements such as Wi-Fi controller 218a, BSC 218b, RNC 218c and/or FEMTO controller 218e) and/or one or more of the UEs 214a-214n (e.g. UE 214c). On receipt of the one or more command(s) the network element(s) and/or the UE are configured to respond by modifying the configuration for the UE to mitigate the associated performance issue(s) based on the information provided within the command(s).

The configuration for a UE comprises or represents any controllable aspect associated with the UE that may be configured to improve the user experience for a communications session in the telecommunications network. For example, the configuration for the UE may comprise or represent any controllable aspect associated with, but not limited to: the hardware and/or software configuration of the UE (e.g. hardware/software components being used based on the number and types of applications executing on the UE); the communications configuration of the UE or configuration of the UE's communication session in the telecommunications network (e.g. cell neighbour lists, number of communications signals; uplink/downlink communications, transmit power, number of transmission channels or resource blocks allocated to the UE, etc.); and/or any other controllable aspect associated with the UE for communicating over the telecommunications network.

Modifying the configuration of the UE may comprise or represent modifying the behaviour of the network associated with the UE and/or modifying the behaviour of the UE itself. For example, modifying the configuration of the UE may include, by way of example, but it not limited to modifying the behaviour of the network associated with the UE, modifying the behaviour of the communication session associated with the UE, modifying the behaviour of one or more network elements associated with the UE, modifying the behaviour of the UE, modifying the communications behaviour of the network associated with the UE, modifying the communications behaviour of one or more network elements associated with the UE, and/or modifying the communications behaviour of the UE.

The SSON engine 206 is further configured to continue to collect, gather and analyse user communications data associated with the users and UEs over time for evaluating whether the determined actions have mitigated the identified performance issue(s)/problem(s) associated with the UE. This allows the SSON engine 206 to receive feedback on the determined actions/responses and, depending on the outcome, to determine whether the performance issue(s) and/or problem(s) associated with the UE have been resolved or require alternative or modified actions/response. The actions/responses used for resolving performance issues associated with the UE are stored for this user to allow the user and UE to avoid the performance issue/problem in a future communication session.

Figure 3a is a flow diagram of an example method 300 for optimizing and controlling the performance of one or more particular UEs 214a-214n in a telecommunications network 100, which may, by way of example only, be performed by SSON engine 206 or similar distributed SSON engine functionality as described with reference to Figures 1-2b. In this example, for simplicity, the functionality of the SSON engine 206 will be described with reference to a particular user of a UE 214c. Although the user experience for a particular user of a UE 214c is optimized by the functionality of the SSON engine 206, it is to be appreciated by the skilled person that the SSON engine 206 functionality may optimize the user experience for each user in a group of UEs 214a-214n serially and/or concurrently in a similar manner.

At 302, retrieving, by the functionality of the SSON engine 206, a user profile for a UE 214c or particular user that is stored in a database (e.g. user profile database 222). It is assumed that the UE 214c has a user profile stored in database 222. The user profile includes communications data such as historical data on the communications behaviour and/or performance of the particular user or corresponding UE 214c in the telecommunications network 100. It is to be appreciated that the communications data may be continually and/or collected concurrently by the SSON engine 206 and stored in the database 222.

The user profile may also include data representative of one or more action(s) or response(s) associated with already identified performance issue(s) of the UE 214c. The action(s)/response(s) and may be triggered based on the status of the UE 214c within the telecommunications network 100. The one or more actions are associated with mitigating the performance issue(s) associated with the UE 214c that the user has or may experience at some time during one or more communication session(s) in the telecommunications network 100.

At 304, the SSON engine 206 analyses the retrieved user profile in relation to the current status of the UE 214c. At 306, during the analysis the SSON engine 206 may identify one or more performance issue(s) associated with the UE 214c that the user may experience. Additionally or alternatively, the SSON engine 206 may identify whether the user of UE 214c may experience one or more performance issue(s) already stored in the user profile.

At 308, if one or more performance issue(s) are identified (these may be new performance issue(s) or current performance issue(s)), the SSON engine 206 includes functionality for determining one or more action(s)/response(s) for use in modifying the configuration for the UE prior to the performance issue(s) occurring to optimise the user experience at the UE 214c. The action(s)/response(s) may be based on performance optimization algorithms or other functionality that evaluates the performance issue(s) and identifies a proposed set of one or more action(s)/response(s) that can be taken by the UE 214c and/or one or more network element(s) (e.g. one or more network element(s) 208-212, 218a-218e and/or 220) of the telecommunications network 100 to modify the configuration for the UE 214c and mitigate the corresponding performance issue(s).

The user profile for each user may include one or more action(s) associated with one or more network elements 208-210, 218a-218e and 220 for responding to one or more performance issue(s) to be experienced by the UE 214c based on the status of the UE 214c. Each action is associated with a specific network element and includes data representative of a command for modifying the specific network element to change the configuration for the UE whilst avoiding modifying the configuration for other UEs.

The user profile for each user may also include one or more action trigger conditions associated with the status of the UE 214c, where an action is triggered when one or more corresponding action trigger condition(s) is met based on the current status of the UE 214c in the telecommunication network 100. For example, the one or more action trigger conditions for the user may include one or more from the group of: location and service information associated with the UE 214c; potential routes of travel associated with the UE 214c; current status of the UE 214c; determination of an imminent performance issue associated with the configuration for the UE 214c; date and/or time when an associated action was performed; and positive outcome of performing the associated action.

At 310, the SSON engine 206 may update the user profile to include the determined action(s)/response(s) and/or trigger condition(s) associated with the performance issue(s) for the UE 214c. The SSON engine 206 may also update the user profile to include any new performance issue(s) associated with the UE 214c and the corresponding action(s)/response(s) for mitigating the performance issue(s) depending on the status of the UE.

At 312, depending on the status of the UE 214c and whether the SSON engine 206 determines that the user of the UE 214c is about to experience or is experiencing one or more performance issue(s) during a communication session, the SSON engine 206 sends one or more commands associated with the determined action(s)/response(s) to modify the configuration for the UE 214c and thus mitigate the corresponding performance issue(s) and optimize the user experience for the user of the UE 214c.

At step 304, the SSON engine 206 may further analyse the updated user profile in relation to the current status of the UE in response to responding to performance issue(s) to determine whether the UE experience has been optimized. The SSON engine 206 may also determine a further action for controlling a network element 218c to adjust the configuration for the UE 214c to further optimize the user experience of the UE 214c; and update the user profile by amending the previous determined action associated with responding to the performance issue of the UE 214c with the determined further action.

For example, at least one command set from the SSON engine 206 directs a network element (e.g. RNC 218c) to send one or more configuration messages to the UE 214c. The configuration message may include one or more parameters associated with the action(s) directed for use by the UE 214c to modify the configuration for the UE 214c. For example, the UE 214c may experience a performance issue such as handover failure or successful handover at the cost of lower performance (e.g. from a 4G cell to a 2G cell) at the same location in the telecommunications network 100. The SSON engine 206 may have identified that the UE 214c should not perform cell measurements of the cell that cause the handover failure/lower performance handover.

As such the SSON engine 206 may have determined that a handover action/response to be that the UE 214c not be given a neighbour cell list including the cell causing the performance issue. This means the UE 214c will not measure the offending cell and thus would not handover to it, which will "solve" the performance issue. The SSON engine 206, on detecting from the current UE status that the UE 214c is in the vicinity of the location causing the performance issue, sends a command associated with the handover action to the corresponding RNC 218c instructing the RNC 218c to not allow the UE 214c to handover to the offending cell. The RNC 218c may be configured to remove this cell from the cell neighbour list for the UE 214c and send a configuration message to the UE 214c with the new cell neighbour list that it should use to perform cell measurements for handover. Since the UE 214c does not measure the offending cell, the RNC 218c will not receive any measurements from the UE 214c regarding the offending cell and thus will not handover the UE 214c to the offending cell.

Additionally or alternatively, the SSON engine 206 may send at least one command that directs a network element (e.g. RNC 218c) to modify the configuration for the UE 214c transparently to the UE 214c. For example, in the above example regarding the handover failure/low performance after handover, the network element (e.g. RNC 218c) may be configured to allow the UE 214c to provide measurements of all cells in the vicinity of the location of the UE 214c, but on receiving the measurements for use in determining the handover cell for the UE 214c, the RNC 218c may not use the measurements from the UE 214c associated with the offending cell and so the UE 214c will not be handed over to the offending cell.

In another example, in responding to a performance issue associated with a handover failure from a base station 210 of a first cell to a base station 208 of a second cell, the SSON engine 206 may be further configured to: analyse the retrieved user profile of the user of UE 214c by evaluating the retrieved user profile and status of the UE 214c to determine the UE 214c is passing through the first cell and determine an action or response for mitigating the performance issue associated with the handover failure. The SSON engine 206 may then send a command to a network element (e.g. RNC 218c) associated with modifying the configuration for the UE 214c based on the determined action.

For example, the command sent by the SSON engine 206 may be based on the SSON engine 206 selecting a set of cells from a cell neighbour list associated with the current status of the UE 214c, where the set of cells comprises only those cells from the cell neighbour list that minimize the performance issues associated with the handover failure. The SSON engine 206 may then include in the command, data associated with the selected set of cells. The SON engine 206 may then send the command to instruct a network element 218c to modify the configuration of the UE 214c by sending the UE 214c a configuration message such as a measurement control message corresponding to the selected set of cells.

Alternatively or additionally, in another example, the SSON engine 206 may be further configured to send the command to instruct a network element 218c to modify the communication configuration of the UE 214c by allowing the UE 214c to only hand over to a base station 212 of a cell in the selected set of cells. For example, the network element 218c determines which cell, other than the cell that is causing the performance issue that the UE 214c should hand over to. In another example, the SSON engine 206 may directly instruct the UE 214c to select another radio access technology (e.g. Wi-Fi), which may also mitigate the performance issue.

Other performance issue(s) of the UE 214c may be associated with low battery power or excessive power consumption by the UE 214c such that may not provide an optimal user experience during a communication session. The SSON engine 206 may determine that an action/response to such a performance issue may be to direct a network element (e.g. RAN 218c) to reduce unnecessary communications between the UE 214c and the telecommunications network 100.

In an example, for responding to performance issues associated with excessive power consumption of the UE 214c, the SSON engine 206 may during the analysis of the user profile and communication data associated with the UE 214c determine the current mobility status of the UE 214c and identify a set of communications signals for reducing unnecessary communications with the UE 214c based on the mobility status of the UE 214c. The SSON engine 206 may then send a command to the network element 218c to reduce sending communication signals to the UE 214c or requiring the UE 214c to send communication signals from the set of communication signals. This may then extend the battery life and reduce unnecessary power consumption of the UE 214c due to conserving the UEs power consumption by reducing the UE 214c transmitting and/or receiving. In an example, reducing unnecessary communications based on the set of communication signals comprises reducing the periodicity of transmitting a communication signal to the UE from the set of communication signals.

By way of example only, the set of communications signals may include one or more from the group of: paging signals associated with the UE 214c; power control signals associated with the UE 214c; measurement signals associated with the UE 214c; location services signals associated with the UE 214c; and any other communication signal associated with the UE 214c that originates from a network element 218c or is required by the UE 214c to be transmitted to the network element 218c of the telecommunications network 100.

In another example, for responding to performance issues associated with excessive power consumption of the UE 214c, the SSON engine 206 may determine the configuration for the UE 214c and identify one or more components of the UE 214c for reducing the power consumption of the UE 214c based on the configuration for the UE 214c; and send a command to the UE 214c associated with reducing the power consumption based one or more identified components. For example, one or more components of the UE 214c may include any component associated with one or more from the group of hardware components of the UE 214c and/or software components of the UE 214c.

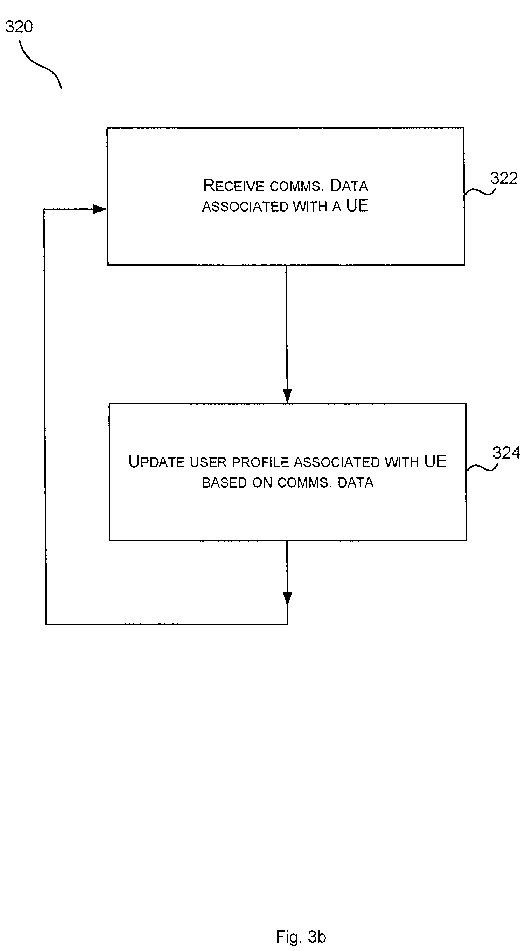

Figure 3b is a flow diagram of an example method 320 for collecting user communications data associated with one or more UEs 214a-214n and maintaining and updating the database 222 of user profiles for one or more UEs 214a-214n in the telecommunications network 100. The database 222 may include user communications data and performance statistics associated with one or more UEs 214a-214n and user profiles associated with one or more UEs 214a-214n. The user profiles for each associated with one or more UEs 214a-214d may each include the associated user communications data for the UEs 214a-214d associated with that user.

The user profile for each user may include user communications data associated with the user and/or UE(s) 214c of the user compiled from multiple sources, the communications data associated with the user and/or UE(s) 214c of the user comprising data from one or more of the group of: traces and performance measurements associated with the UE 214c; user habits associated with the UE 214c; locations associated with the UE 214c; routes determined to be associated with the UE 214c; services associated with the UE 214c; hardware configuration, hardware settings, and/or hardware status associated with the UE 214c; and performance issues associated with the UE 214c. The user profile may also include one or more trigger condition(s) associated with one or more action(s)/response(s).

At 322 the SSON engine 206 receives user communications data associated with one or more UEs 214a-214n communicating over the telecommunications network. The received user communications data associated the one or more users 214a-214n can be received from many disparate sources. For example, the received user communications data may be received from one or more from the group of: one or more network elements 208-212, 218a-218e and 220 of the telecommunications network 100; a SON component 202; an OSS component 204; a performance management component of an OSS 204 or SON 202; traces from one or more of a network element 208-212, 218a-218e and 220, SON 202, or OSS 204; probes from one or more of an OSS 204 or SON 202; topology information from a network design database the UEs 214a-214n of the users; and one or more location databases associated with the location of each of the UEs 214a-214n.

At 324, the SSON engine 206 processes the user communications data associated with each user of the one or more UEs 214a-214n and updates the user profile for each UE 214c based on the received communications data associated with that user. For example, the SSON engine 206 may filter and/or sort the received user communications data associated with each of the UEs 214a-214n to extract the user communications data associated with each user or UE. This may be performed by correlating identifiers within the received user communications data to that of the user and/or the UE 214c. The user communications data for a UE 214c can then be used by the SSON engine 206 in step 304 for analysing whether the user of the UE 214 experiences or may experience any performance issue(s).

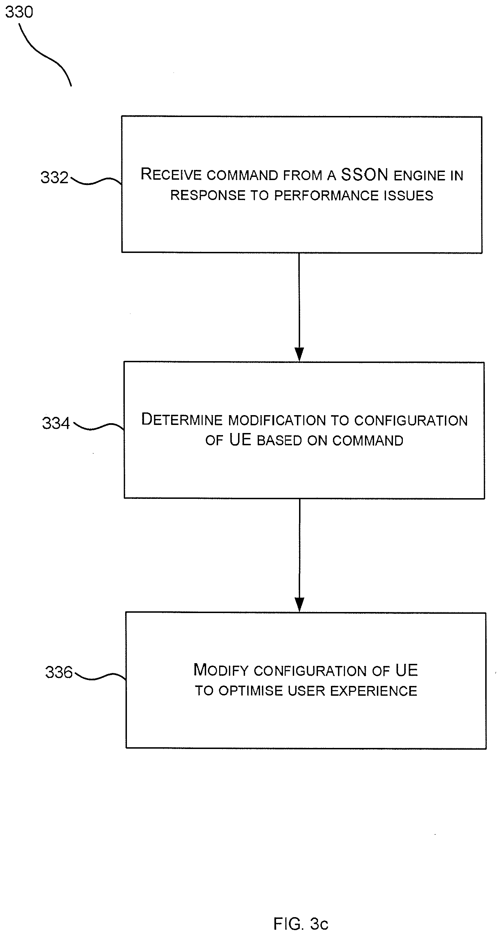

Figure 3c illustrates a flow diagram of a method 330 that may be performed by a UE 214c or a network element 208-210, 218a-218e and/or 220 for modifying the configuration of the UE 214c in response to receiving a command from the SSON engine 206.

At 332, the UE 214c or the network element 208-210, 218a-218e and/or 220 receives a command from the SSON engine 206 for modifying the configuration for the UE 214c. As described above, the command is based on a determined action/response for controlling the UE 214a to respond to one or more performance issue(s) associated with the UE 214a.

At 334, the command includes data representative of the action for use by the UE 214c and/or the network element to determine a modification to the configuration for the UE 214c. For example, the at least one command includes one or more parameters that directs the UE 214c to modify the communication configuration of the UE 214c. As another example, the command directs the network element to send one or more configuration messages to the UE 214c, wherein a configuration message includes one or more parameters associated with the action for use by the UE 214c to modify the configuration for the UE 214c. Alternatively or additionally, the command may direct the network element to modify the configuration for the UE 214c transparently to the UE 214c, e.g. without informing the UE 214c.

At 336, the UE 214c and/or the network element are configured to modify the configuration for the UE 214c to mitigate the performance issue(s) and thereby optimize the user experience. For example, optimizing the user experience includes responding to performance issue(s) associated with, by way of example only, at least one from the group of: a handover failure from a first base station to a second base station; and an excessive power consumption associated with the UE 214c; or any other performance related issue associated with the UE 214c or user experience when communicating using the UE 214c.

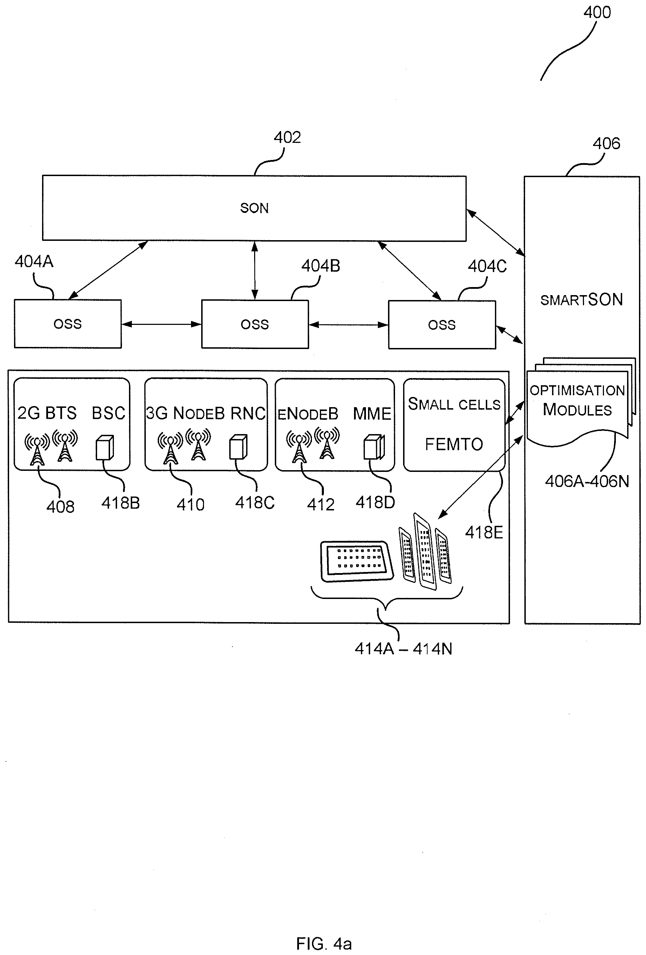

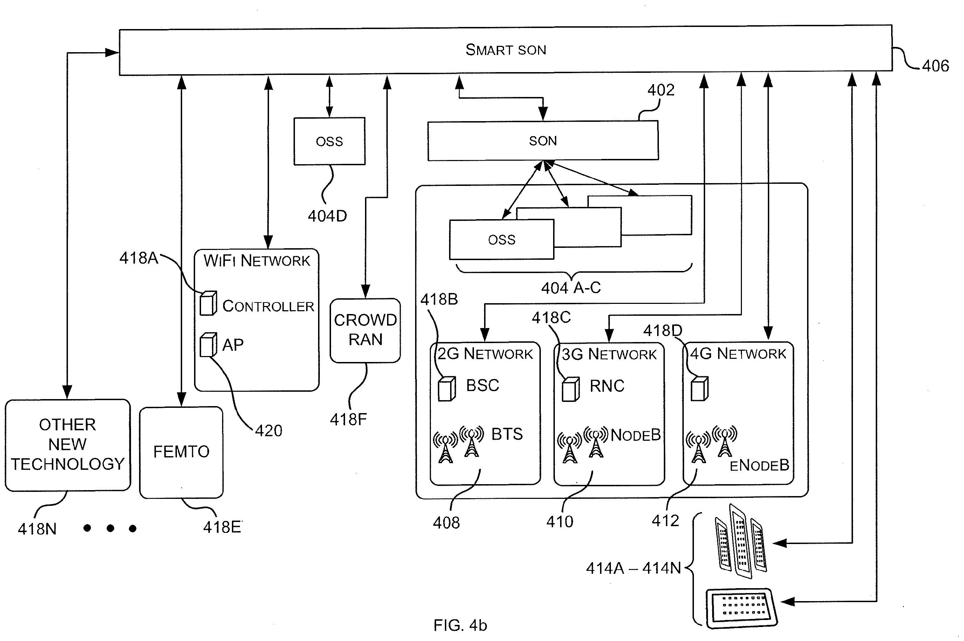

Figures 4a and 4b are schematic diagrams illustrating further examples of a telecommunication network 400 with an example SSON engine 406. The telecommunications network 400 includes a conventional SON 402 and multiple OSS 404A-404D from multiple vendors and telecommunications infrastructure including radio access technologies 418a-418n and user equipment devices 414a-414n (UEs). As illustrated, the SSON engine 406 can be connected to one or more of the conventional SON 402, the OSSs 404a-404d, the radio access technologies 418a-418n and the UEs 414a-414n. The SSON engine 406 is computer-implemented using, for example, a server or a group of servers, and may be coupled directly to the telecommunications infrastructure, and/or coupled to the telecommunications infrastructure via the conventional SON engine 402 and/or OSS 404.

In this example, the telecommunications infrastructure includes network elements from different types of radio access technologies. In this example, the telecommunications infrastructure includes a Wi-Fi network, 2G, 3G and 4G telecommunications networks, adhoc wireless network such as a Crowd RAN network, a femto network, and any other new network technologies. The Wi-Fi network includes a Wi-Fi network controller 418a and access point 420. The cellular telecommunications networks are based on 2G, 3G and 4G technologies. The base stations of the cellular telecommunications networks include base stations 408, 410, and 412, which are controlled by network controller elements 418b, 418c and 418d, respectively. The femto network includes femto network controller/base station 418e. The adhoc network includes a Crowd RAN element 418f. These communication networks provide access for UEs 414a-414n to access and receive voice, video, data services from the telecommunications network 400. Although several communications networks are illustrated, it is to be appreciated by the skilled person that these are illustrated by way of example only and that the telecommunications infrastructure may include any suitable communication network.

As illustrated in Figures 4a and 4b, the network elements with which the SSON engine 406 interfaces with may include the existing proprietary SON layer 402, the RAN vendors' OSS layers 404a-404d, core network elements (e.g. RNC 418c, MME 418d), RAN elements themselves (e.g. NodeB 410, eNB 412). The SSON engine 406 also interfaces with the UEs 414a-414n. It is to be appreciated by the skilled person that the SSON engine 406 may also be configured to implement the methods and operations described with reference to Figures 1-3c.

The SSON engine 406 creates an additional layer to the existing SON 402 and OSS 404 allowing operators to further define and implement optimization techniques focused on optimizing the user experience for each of the UEs 414a-414n. The SSON engine 406 is configured to not only interface with one or more of the OSSs 404a-404d, but it is also configured to interface directly with 2G, 3G and 4G network elements such as the BSCs 418b, base stations 408, RNCs 418c, NodeBs 410, MMEs 418d, eNodeBs 412, network elements of Femto and other small cells 418E, Wi-Fi controllers 418a, access points 420, adhoc network elements such as crowd RAN 418f, and other new network technologies 418n, etc. The SSON engine 406 may also be configured to interface directly with one or more UEs 414a-414n. The SSON engine 406 may also interface with other databases, such as Geographic Information System (GIS) databases, device capability databases or propagation measurements / models databases.

Although the SSON engine 406 is described as directly interfacing with each of the above-mentioned network elements and UEs, it is to be appreciated that the SSON engine 406 may be indirectly interfaced with one or more network elements and/or one or more UEs. For example, instead of requiring that a new dedicated interface between the SSON engine 406 and a network element be implemented, it may be that the interfaces are modified between existing network elements so that direct interfaces are not necessary. For example, rather than implement new interfaces to each of the OSS systems 404a-404d, it may that the existing interface between OSS 404a-404c and SON 402 is modified so that the required information is available in SON 402 and can be passed to/from the SSON engine 406.

The SSON engine 406 may be configured to interface with one or more UEs 414a-414n by an application (or app) on each of the UEs 414a-414n to allow communication with the SSON engine 406. The communication may be performed via a dedicated connection or secure Internet connections. For example, the UEs 414a-414n may communication via an access point name (APN) or secure internet connection. The app may communicate solely with the UE operating system (e.g. Android, iOS) or may use other application interfaces (APIs) for access to the UE chipsets and other hardware/software components if the UE. Although an application may be used by a UE 414a-414n to connect/communicate with the SSON engine 406, it is to be appreciated that such an interface may be standardized, e.g. by 3GPP, and that dedicated app may not be required. For legacy UEs which do not support apps, additional information associated with a given UE may be acquired by the SSON engine 406 via an interface to the network elements (e.g. the RAN elements).

As previously described with reference to Figures 1-3c, the functionality of the SSON engine 406 may also be centralized for controlling/interfacing with the whole telecommunications network 400 to optimise the user experience for UEs 414a-414n. Additionally or alternatively, the functionality of the SSON engine 406 may be distributed according to, for example, region, technology, or operator.

Currently, operators can only support optimisation actions that are limited by the changes that the RAN vendors publish through the OSS 404a-404d or conventional SON 402, e.g. parameters and features for only optimizing the telecommunication network at the network level. The SSON engine 406 is configured to control/interact directly and/or indirectly with any existing communication networks and the associated network elements 402, 404a-404d, 408-412, 418a-418n and 420 or new network technologies 418n. In addition, the SSON engine 406 is configured to control/interact directly with UEs 414a-414n. For example, using an app (e.g. application) or agent or other controlling software (e.g. in the operating system of the UE) in the UE (e.g. handset) it may be possible to control the behaviour (e.g. configuration of the UE) of the UE. This allows the SSON engine 406 and hence the operators to perform per user optimization of the network for optimizing the user experience of a UE 414a.

The SSON engine 406 includes optimization modules 406a-406n that are configured to optimise the telecommunication network 400 at the user level without affecting other users in the same location doing the same service. Each optimization module 406a-406n may be used to optimise the user experience for one of the UEs 414a-414n. Traditional telecommunication network optimization using SON 402 and OSS 404 implementing the 3GPP user cases as previously described only optimise the overall telecommunication network 400 at the network level. The SSON engine 406 is focused on optimizing the user experience and performance for a user of a UE 414a rather than the overall telecommunication network 400. This allows operators to perform action(s) for a particular user's UE 414a at, by way of example only, a location, service and/or user level without having to impact other users.

The SSON engine 406 includes user analytics, optimization, and operation functionality that are combined and for building user profiles of users based on communications data associated with the UE of each user, analysing the user profiles and communications data to identify potential performance issue(s)/problem(s) associated with the UE of each user, optimizing the performance of the UEs using determined actions/responses and repeating this process to further optimise the user experience.

Each user profile specifies actions/responses required for optimizing the user experience for a user of a UE 414a when certain trigger conditions associated with the use of the UE 414a are met.

The SSON engine 406 and/or the optimisation modules 406a-406n may include one or more of the following functionality:
a) For each user, determine (or learn), from user communications data associated with the user using the UE 414a, the user's habits, location, routes, services and/or performance issues/problems the user experiences when their UE 414a connects/communicates over an operator's network, and storing the user communications data and associated information by building, maintaining, updating this user information in a user profile for each user;
b) For each user, evaluate the performance issue(s)/problem(s) associated with the UE 414a of the user and causing the user to have a poor user experience based on the user communications data, which may include, by way of example only, data associated with performance counters, radio traces, probe data or any other information available from the network and other accessible databases about the user using the UE 414a;
c) For each user, determine a recommended optimization action/response to the performance issue(s)/problem(s) associated with the UE 414a of the user to mitigate and/or avoid the poor user experience i.e. optimize the user experience for the UE 414a. The analytics engine may also specify the trigger condition(s) associated with the UE 414a under which the action(s)/response(s) will be executed to mitigate and/or avoid the poor user experience based on the status of the UE 414a. The action/response may be addressed to one or more specific network element(s) for modifying the configuration for the UE 414a and thus modify the existing behaviour of the network in relation to the UE or the UE itself. The optimization actions and associated performance issue(s)/problem(s) are stored in the user profile.
d) For each user, evaluate the user communication data associated with the UE 414a in relation to the one or more trigger condition(s). When the trigger condition(s) are met in relation to an action/response, the SSON engine 406 is configured to send the action/response as a command to the specific network element(s) and/or the UE to execute the optimization action/response; and
e) For each user, generate and/or build user profiles based on all the above user information, e.g. user communications data, performance issue(s)/problem(s) associated with the UE 414a of the user and corresponding action(s)/response(s) for mitigating and/or avoiding the performance issue(s)/problem(s) and optimizing the user experience.

Although the above functionality a)-e) may be implemented serially, it is to be appreciated by the skilled person that one or more of the functionalities a)-e) may be performed concurrently or groups of functionalities a)-e) may be performed serially and/or concurrently, or any other combination thereof.

As an example, the user profile for a user may include the following information: an identifier for the user, e.g. International Mobile Subscriber Identifier (IMSI) or International Mobile Equipment Identifier (IMEI); one or more trigger condition(s) (e.g. a profile trigger) which is a set of pre-conditions that need to be met before an action/response is executed for modifying the configuration for the UE to optimise the user experience. The pre-conditions may include at least a particular location and/or service information associated with the performance issue(s)/problems of the UE 414a; one or more performance issue(s)/problem(s) of the UE 414a and experienced by the user of the UE 414a; one or more optimisation action(s)/response(s) for each of the performance issue(s)/problem(s) associated with the UE 414a of the user; date and time when previous action(s)/response(s) have been performed/executed; and/or results of those previous action(s)/response(s) that have been executed.

The above functionalities a)-e) may be repeated or performed continually on new user communication data associated with the user using the UE 414a and which is fed back to the SSON engine 406 and/or the optimization modules 406a-406n for further enhancement of the user profile as further performance issue(s)/problem(s) associated with the UE of the user may arise and/or new optimisation action(s)/response(s) are determined and executed in relation to the UE 414a of the user for further optimizing the user experience.

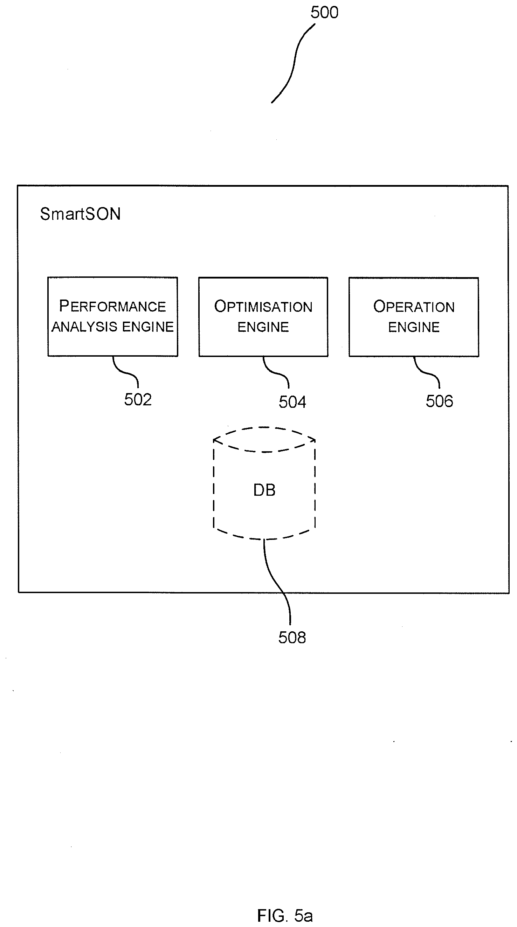

Figure 5a is a schematic diagram of an example SSON engine 500 corresponding to the same or similar functionality of the SSON engine 400 of Figures 4a and 4b. In addition to the functionality described below, it is to be appreciated that the SSON engine 500 may include or implement one or more combination(s) of the functionality of the SSON engines 206 and 406 as described with reference to Figures 1-4b.

The SSON engine 500 includes a performance analysis engine 502, an optimization engine 504, an operation engine 506, and a database 508. The performance analysis engine 503 is coupled to the optimization engine 504, the operation engine 506 and the database 508, and vice versa. The SSON engine 500 may comprise computer-implemented functionality and may use, for example, a server or a group of servers, and may be coupled directly to the telecommunications infrastructure 400, and/or coupled to the telecommunications infrastructure 400 via a conventional SON engine 402 and/or OSS 404a-404d.

The performance analysis engine 502 may include computer-implemented functionality for identifying UEs of users with performance issue(s)/problem(s). This is achieved by performing user analytics on user communication data associated with the UE 414a of a user. The performance analysis engine 502 is configured based on a set of input criteria and user communication data, which may be defined by the operator or other users of the SSON engine 500. For example, the set of input criteria may define aspects or characteristics of the telecommunications network that may require optimizing at the user level.

By way of example, the set of input criteria may be set to a region of the telecommunications network and/or time period that the SSON engine 500 should focus its optimization on. The performance analysis engine 502 may then analyse the user communication data associated with the region and set of inputs. The associated user communication data for users within the region or whom frequent the region within the time period is analysed or data mined to identify the users experiencing one or more performance issue(s)/problem(s) associated with their UEs and thus causing a poor user experience.

In another example, the set of inputs may simply be to analyse all users of the telecommunication network. Thus the SSON engine 500 should focus its optimization on each user of the communications system. The performance analysis engine 502 may then analyse the user communication data associated with all the users in the telecommunications network 400. Thus, all the user communication data for the users in the telecommunications network 400 is analysed or data mined to identify the users experiencing one or more performance issue(s)/problem(s) associated with their UEs and thus causing a poor user experience.

As another example, a user such as an optimization engineer decides that the telecommunications network on a route from London to Newbury needs to be optimized. The SSON engine 500 configures the performance analysis engine 502 to evaluate the performance of UEs for all cells along the route. This may be performed using network topology information (e.g. flat file input), the OSS configuration, the performance KPIs from OSS and the output from the traces enabled for this specific route which will provide a set of user information or user communication data associated with the corresponding UEs to understand their communications problems, performance and/or user experience.

Although the above examples relate to particular regions or routes travelled by users and their associated UEs, it is to be appreciated by the skilled person that other examples may include where the communications data or input does not relate to a particular region or route, but instead to other parameters than may indicate or require improvement. For example, the communication data may include one or more KPIs that may need to improved and used to find a group of UEs or corresponding UEs that require their performance analysed and improved based on the KPIs. For example, certain call counters (e.g. dropped calls, missed calls etc.) may be analysed for finding a group of UEs experiencing KPIs that indicate poor communication performance, performance issues, and/or poor user experience. For example, a high number of dropped calls, not linked to an area but to a KPI may be analysed to determine the group of UEs or corresponding UEs etc.

As another example, other communication data such as customer relationship management (CRM) information may be used to assist in determining a specific set of customers or users (e.g. VIPs or premium customers or users, customers providing a large Average revenue Per User; corporate customers with a large pool of UEs being used by their employees etc.) that are to be analysed for understanding the communications problems, performance and/or user experience for the corresponding UEs.

Once all the user communication data has been collected, the user communication data may be ranked and filtered by service and user to identify which users are experiencing poor service performance and thus a poor user experience. Once the user communications data has been processed, the performance analysis engine 502 will have a list of users and their UEs that have been or are experiencing performance issue(s)/problem(s) along with the key radio information for determining the cause of the performance issue(s)/problem(s).

The optimization engine 504 may include computer-implemented functionality for identifying one or more action(s)/response(s) corresponding to each of the UEs of users with performance issue(s)/problem(s). On identifying the UEs of users with performance issue(s)/problem(s), the optimization engine triggers the collection of further communication data for the UE of each user. This includes performing detailed tracing of the UEs of users and network elements and/or network cells that have been identified causing performance issue(s)/problem(s) to the UEs of the users. The detailed tracing generates further user communication data for the UE of each user, which allows the optimization engine 504 to build a historical view of the performance issue(s)/problem(s) for the UE of each user.

Once the optimization engine 504 has gathered sufficient information, the optimization engine 504 evaluates the further user communication data for the UE of each user and determines one or more proposed optimization action(s)/response(s) associated with the identified performance issue(s)/problem(s) for the UE of each user. Once the action(s)/response(s) is identified the optimization engine 504 updates the user profile for the user with the proposed optimization action(s)/response(s), which includes data representative of the specific desired action(s)/response(s) and the corresponding trigger point(s) for executing the action(s)/response(s).

The operation engine 506 may include computer-implemented functionality for identifying when and how to execute the one or more action(s)/response(s) for mitigating or avoiding the performance issue(s)/problem(s) for the UE of the user. The operation engine 506 is configured to access detailed user communication data and information associated with the UEs of users having performance issue(s)/problem(s) (e.g. users with poor performance experiences). The operation engine 506 evaluates the detailed user communication data to determine the various trigger parameters such as, by way of example only and not limited to, location of the UE in real time, service information associated with the UE in real time, communication conditions of the UE in real time, configuration of the UE in real time, and/or user experiences of the user using the UE in real time. When the trigger parameters for the UE of the user meet the conditions defined by the trigger point(s) the operation engine 506 will command the associated network element/component and/or command the UE to perform the action(s)/response(s) for specifically modifying the configuration of the UE to mitigate or avoid the corresponding performance issue(s)/problem(s) for the UE.

The performance analysis engine 502, optimization engine 504 and operation engine 508 store the collected user communication data for the UE of each user and the evaluated results for the UE of each user in a user profile for the user. The user profile for the user may include the following information: an identifier for the user, e.g. International Mobile Subscriber Identifier (IMSI) or International Mobile Equipment Identifier (IMEI); one or more trigger point(s)/condition(s) which is are a set of pre-conditions that need to be met before an action/response is executed for modifying the configuration for the UE to optimise the user experience, where the pre-conditions may include at least a particular location and/or service information associated with the performance issue(s)/problems of the UE; one or more performance issue(s)/problem(s) of the UE and experienced by the user of the UE; one or more optimisation action(s)/response(s) for each of the performance issue(s)/problem(s) associated with the UE of the user; date and time when previous action(s)/response(s) have been performed/executed; and/or results of those previous action(s)/response(s) that have been executed; user communication data for the UE of the user. Although the user profile of the user has been described in relation to one UE, it is to be appreciated that a user may have more than one UE and that the user profile of a user may store data associated with more than one UE. For example, the user profile of the user may be identified by a user identifier and the remaining data associated with each UE may be stored under a UE identifier.

The SSON engine 500 stores the user profile of each user having performance issue(s)/problem(s), which enables the SSON engine 500 to store and learn the historical behaviour of the UE of the user over time. Each action/response performed can be evaluated by the performance analysis engine 502, optimization engine 504 and operation engine 506 to determine whether the identified performance issue(s)/problem(s) for the UE of the user have been resolved, mitigated or avoided. If, based on the evaluation, they have, then the corresponding action(s)/response(s) are stored in the user profile for the user allowing the UE of the user to avoid the performance issue(s)/problem(s). However, if one or more identified performance issue(s)/problem(s) persist after executing the corresponding action(s)/response(s), then the optimization engine 504 evaluates further user communication data for the UE of the user to identify one or more further action(s)/response(s) for mitigating and/or avoiding the corresponding performance issue(s)/problems for the UE of the user. The SSON engine 500 may be configured to perform one or more of the functions of the performance analysis engine 502, optimization engine 504 and/or operation engine 506 for optimizing the user experience for the UE of each user and for maintaining an optimal user experience for the UE of each user.

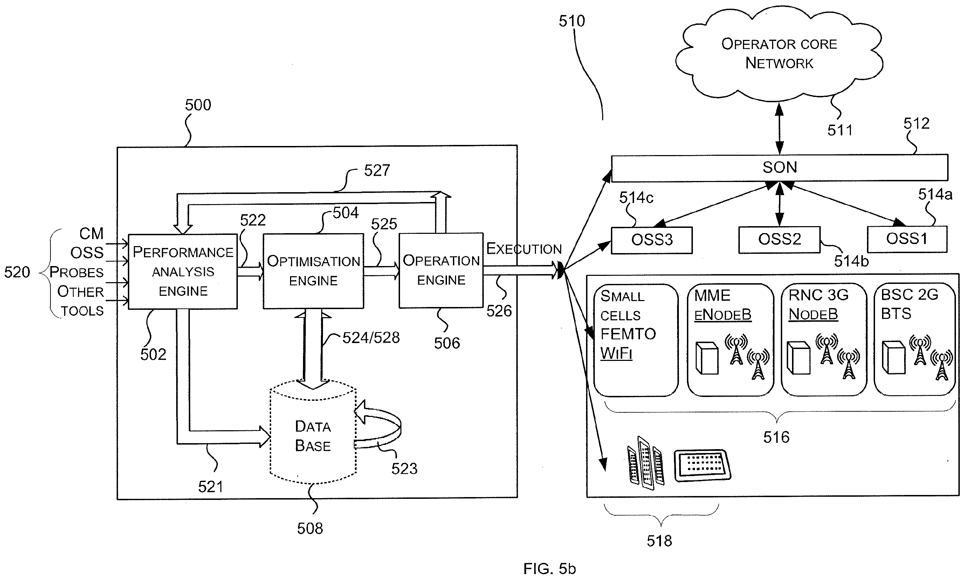

Figure 5b is a schematic diagram of another example SSON engine 500 corresponding to the same or similar functionality to the SSON engines with respect to figures 2-5a. In addition to the functionality described below, it is to be appreciated that this example SSON engine 500 may include or implement one or more combinations of the functionality of the SSON engines as described with reference to Figures 1-5a.

In this example, the SSON engine 500 includes performance analysis engine 502, optimisation engine 504, operation engine 506, and database 508, which communicate with each other to form an optimisation feedback structure or loop for optimising the telecommunications network infrastructure 510 (or network infrastructure) in relation to one or more group(s) of users and thus optimising the user experience in relation to the one or more group(s) of users and corresponding UEs. The SSON engine 500 may comprise computer-implemented functionality and may use, for example, a server or a group of servers, and may be coupled directly to one or more elements of the telecommunications infrastructure 510.

Although the following description with respect to figures 5b-6c, may by way of example only, describe the functionality of the performance analysis engine 502, optimisation engine 504, operation engine 506, and database 508, it is to be appreciated by the skilled person that the functionality and/or method steps and features of each of the performance analysis engine 502, optimisation engine 504, operation engine 506, and/or database 508 may be implemented separately and/or in combination with one or more other functionality and/or method steps and features of these engines the performance analysis engine 502, optimisation engine 504, operation engine 506, and/or database 508. It is also to be appreciated that the functionality of each of and/or or one or more of the performance analysis engine 502, optimisation engine 504, operation engine 506, and database 508 may be implemented in a centralised fashion on a computing device, and/or the one or more servers, network elements or devices in a centralised manner and/or a distributed manner.

The telecommunications infrastructure 510 includes, by way of example only but is not limited to, one or more elements such as a core operator network 511, one or more conventional SON(s) 512, one or more OSS(es) 514a-514c, one or more radio access network(s) 516 such as, by way of example but not limited to, one or more pico and/or femto cell access point(s), one or more Wi-Fi access point(s), one or more of 2-4G or beyond radio network controllers such as, by way of example but not limited to one or more BSC(s), one or more RNC(s), one or more MME(s), one or more of 2G-4G or beyond cellular access points such as, by way of example but not limited to, one or more eNodeB(s), one or more NodeB(s), one or more base station(s) (BTS(s)) and the like, and/or UEs 518 of the plurality of users.

A user may include, by way of example only but is not limited to, a user associated with a UE 518, a subscriber associated with a UE 518, and/or customer associated with the UEs 518. It is noted that a user of a UE 518 may be different from the subscriber and/or customer of the same UE 518. For example, a user may be an employee of a company that is allowed to use a UE, while the company may be a customer or subscriber of a telecommunications operator that provides services for one or more UE including the UE of the employee. This means that while the employee is a user associated with the UE the company is also a subscriber or customer associated with the UE used by the employee.

As described above, the conventional SON 512 includes functionality that defines various SON use cases (e.g. Automatic Neighbour Relation (ANR), Coverage and Capacity Optimization (CCO), Mobility Load Balancing (MLB), Mobility Robustness Optimization (MRO) etc.) for 4G networks such as LTE (Long Term Evolution) networks. However, conventional SON 512 is only capable of optimising the telecommunications infrastructure 510 down to the cell level or radio access network 516 level and no further. Thus, any conventional SON 512 optimisation that is directed to one or more users will cause an entire cell or radio access network 516 to be adjusted, which will most likely adversely affect other users of the same cell or radio access network 516.

The SSON engine 500 includes functionality 502-508 that allows a telecommunications operator to optimise the telecommunications infrastructure 510 down to the user/customer and/or user group level without affecting other users in the same cell, radio access network 516, same location and/or using the same telecommunications service. SSON 500 analyses a wider range of user data or user communication data 520 and 527 including data representative of communication performance related data, location and service related data, and data associated with user behaviour, user preferences, historical user data, and also current or past optimisation strategies (e.g. from optimisation engine 504) and/or operations (e.g. from operations engine 506) performed on the telecommunications infrastructure 510 associated with one or more of the plurality of users. The user communication data 520 and 527 includes user communication data 520 received from sources in the telecommunications network infrastructure 510 as well as user communication data 527 received from the optimisation engine 504, operations engine 506 and/or database 508, or a combination thereof.

Receiving as much user communication data 520 and 527 as possible that is associated with the plurality of users communicating over the telecommunications infrastructure 510 allows an operator system to analyse, determine actions/strategies, perform and/or execute those actions/strategies in real time at the user or user group level to improve communication performance for one or more groups of users affected by a communication performance issue without impacting other users or groups of users.

At the beginning of the "optimisation feedback loop" of the SSON engine 500 is the performance analysis engine 502, which receives user communication data 520 and 527 associated with one or more of the plurality of UEs 518 of the plurality of users. The performance analysis engine 502 analyses the user communication data 520 and 527 to identify and categorise the plurality of users into one or more user group(s) that are experiencing poor user experience, communication problems and/or performance issues with their associated UE. A user group may include, by way of example but is not limited to, one or more of the plurality of users and/or may include a set of users of the plurality of users that are experiencing the same or similar user experience, communication problems, and/or performance issues and the like. If left unchecked, this may lead to worsening or poor user experience for those users of the identified user group and may increase churn and user dissatisfaction.

As well, the performance analysis engine 502 may also store user profile data representative of the identified and/or categorised one or more groups of users and associated current or past optimisation strategies and/or operations performed on the telecommunications infrastructure 510 in database 508 for future reference by the optimisation engine 504. This may also include user data for storage for future reference, i.e. historical user data. For example, this may allow the optimisation engine 504 to take into account, for each of the identified groups of users, previous successful/unsuccessful optimisation strategies when forming an optimisation strategy for each of the identified groups of users output by the performance analysis engine 502 to the optimisation engine 504.

It is to be appreciated by the skilled person that the performance analysis engine 502 may continue to receive new or further user communication data 520 and/or 527 associated with the plurality of users and/or their UEs 518 during or after the performance analysis engine 502 has sent the analysis result data 522 to the optimisation engine 504 and/or the user profile data 521 to the database 508. The new user communication data and information is fed into the optimisation feedback loop of the SSON engine 500 for further optimising the performance of the telecommunication infrastructure 510 in relation to one or more further identified and categorised groups of users.

The optimisation engine 504 receives the analysis result data 522 from the performance analysis engine 502, which includes data representative of the identified and categorised one or more groups of users and associated UE experiencing communication performance issues. As well, the optimisation engine 504 may also receive user profile data stored in database 508 in one or more user profiles, which may include past successful/unsuccessful optimisation strategies and/or historical user data associated with one or more of the users of the identified groups of users received in the analysis result data 522. The optimisation engine 504 uses the identified and categorised groups of users, user profiles, and/or past successful/unsuccessful optimisation strategies to determine, for each of the identified groups of users an optimisation strategy for adjusting the telecommunications infrastructure 510 without impacting the performance of other users.

The optimisation engine 504 outputs optimisation data 525 representative of one or more of a group of optimisation strategies for each of the identified one or more groups of users to the operation engine 506. The operation engine 506 receives the optimisation data 525 and determines the appropriate commands for executing the optimisation strategies, in which the execution data 526 comprising data representative of the commands and/or instructions is directed towards the telecommunications infrastructure 510 (e.g. SON 512, OSS 514a-514c, radio access network(s) 516, and/or UEs 518) for adjusting and optimising the related network elements (e.g. SON 512, OSS 514a-514c, radio access network(s) 516), and/or adjusting and optimising the UEs 518 in relation to the identified or targeted one or more groups of users.

The optimisation engine 504 may also output database optimisation data 528 representative of the one or more of the group of optimisation strategies, and/or unsuccessful or successful optimisation strategy(ies) and/or actions associated with each of the users and corresponding profiles. The database 508 may receive the database optimisation data 528 and updates 523 the corresponding profiles with the optimisation strategy(ies), unsuccessful/successful optimisation strategy(ies), and/or action(s) associated with the unsuccessful/successful optimisation strategy(ies) in relation to the users and/or the targeted group of users.

For example, in the operation engine 506, the execution data 526 comprising data representative of the actions, commands and/or instructions that are directed towards parts of the telecommunications infrastructure 510 may configure those parts of the telecommunications infrastructure 510 to modify or adapt the configuration of the UE(s) 518 of the targeted group of users. Those parts of the telecommunications infrastructure 510 may be configured by the execution data to either a) send a corresponding configuration message towards one or more of the UEs 518 of the targeted group of users for modifying the configuration of those UEs 518 of those users and thereby executing the command(s) and mitigating and/or avoiding the performance issue/problem for the UE(s) 518 of one or more users of the targeted group of users; or b) execute the command message(s) to modify or control the configuration of the UEs 518 of the targeted group of users from that part of the telecommunication infrastructure 510 to mitigate and/or avoid the communication performance issue/problem for the one or more UEs 518 of the target group of users; or c) execute the command message(s) to modify or control the configuration of the UEs of the targeted group of users by modifying the configuration of the that part of the telecommunication infrastructure 510 in relation to the target group of users to mitigate and/or avoid the performance issue/problem for the UEs 518 of the targeted group of users.

The operation engine 506 also feeds back operation data 527 representative of the actions, commands and/or instructions associated with the optimisation strategies, and/or the optimisation strategies, applied to the telecommunications infrastructure 510 towards the performance analysis engine 502, which is received as user data or user communications data 520 and 527. The performance analysis engine 502 continues to receive and analyse the user communication data 520 and/or 527 being received from the telecommunications infrastructure 510 and/or operations engine 506 for input to the optimisation feedback loop of the SSON engine 500.

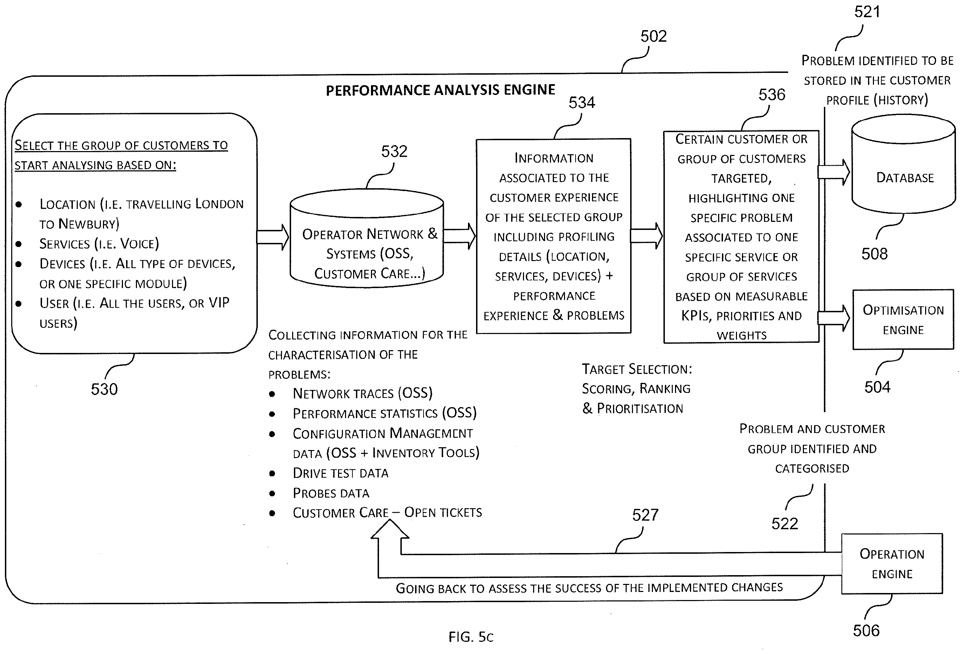

Figure 5c is a schematic diagram of an example performance analysis engine 502 for use in the example SSON engine 500 as described in figure 5b. Conventional SON 512 does not have the capability or functions for analysing the user communication data 520 and 527 at a user level. The user communication data 520 and 527 may include data representative of user, customer and/or service experience of one or more groups of users. The user communication data 520 may be collected from multiple sources in the telecommunication network infrastructure 510 and assessed, by the performance analysis engine 502, using measurable indicators for characterising the communications performance of the telecommunication network 510 at the user level.

The performance analysis engine 502 includes functionality that analyses the user communication data in relation to, by way of example only but not limited to, user and/or customer experience from various perspectives using, by way of example only but not limited to, KPIs (Key Performance Indicators) that allow the identification of specific situations (e.g. problems in the radio access network(s) 516 or poor user experience for one or more group(s) of users) to one or more specific user(s)/customer(s) or group(s) of users. The performance analysis engine 502 performs user/customer and service level characterisation down to the user level rather than only using network traces and KPIs at the cell level as is done in conventional SON 512.

The user communication data 520 received from the telecommunications network infrastructure 510 includes data that is received from different sources for analysing and to determine/understand certain patterns in the user/customer and service behaviour and/or habits of groups of users, which allows identification and categorisation of one or more groups of users that have communications performance issues that need to be addressed.

The performance analysis engine 502 may receive user communication data 520 from the telecommunications infrastructure 510, which may include user communication data 520 received of various types and from various sources of the telecommunications infrastructure 510 such as, by way of example only but it not limited to:
- Network Trace data (e.g. from OSS) associated with one or more telecommunication network/infrastructure technologies such as, by way of example but not limited to, radio access networks 516 such as 2G/3G/4G RAN and/or Heterogeneous Networks;
- Performance monitoring (PM) data or statistics data (e.g. from OSS and/or PM files, reports and/or data) associated with one or more telecommunication network/infrastructure technologies such as, by way of example but not limited to, radio access networks 516 such as 2G/3G/4G RAN and/or Heterogeneous Networks;
- Configuration Management (CM) data (e.g. from OSS, and/or CM files, reports and/or information from inventory tools) associated with one or more telecommunication network/infrastructure technologies such as, by way of example but not limited to, radio access networks 516 such as 2G/3G/4G RAN and/or Heterogeneous Networks;
- Drive test data and/or measurements including drive test data representative of drive testing by measuring and recording sets of received signal strengths from one or more transmitters associated with network/infrastructure technologies such as, by way of example but not limited to, radio access networks 516 such as 2G/3G/4G RAN and/or Heterogeneous Networks;
- Probes and/or call traces data;
- Customer Care data and/or customer relationship management data such as open tickets (e.g. complaints) associated with users (e.g. users, subscribers and/or customers) associated with UEs 518 being analysed;
- Common User Repository data from core elements such as, by way of example only but not limited to, Home Subscriber Server (HSS) or Home Location Register (HLR) and/or any other core element or node and/or operator billing system that includes data representative of the user, subscriber and/or customer information such as, by way of example only but not limited to, company, tariff, type of customer, user, subscriber, etc.
- Real time measurement data; and/or
- Communications/performance related data from future information sources associated with communications and/or performance of the infrastructure network 510 and/or UEs 518 of the plurality of users.

In order for the performance analysis engine 502 to receive the user communications data 520 from the telecommunications infrastructure 510, the performance analysis engine 502 may be configured to interface with one or more of the different sources or systems that generate the different types of user communication data 520 as described, by way of example but not limited to, the above bulleted list. For example, the performance analysis engine 502 may be configured to interface to all the different systems and/or sources producing the required communications data or information for retrieving the user communications data 520.

Although it is described that the performance analysis engine 502 may require an interface to all the different systems/sources of the user communication data 520, it is to be appreciated by the skilled person that one or more of these interfaces may be optional for a given implementation of the SSON engine 500. Furthermore, it may be that the interfaces between existing elements and sources are modified so that direct interfaces are not necessary, rather the user communications data 520 for each source might be retrieve indirectly via other interfaces. For example, rather than implement new interfaces to each of the different RANs 516 or different OSS system 514a-514c for directly retrieving the associated user communications data 520, it may that an existing interface between an OSS 514a and a SON 512 is modified so that the required user communication data 520 associated with the RANs 516 is indirectly retrieved via SON 512 and passed to the performance analysis engine 502.

The performance analysis engine 502 may include a selection unit 530 for selecting and/or target one or more groups of users for whom the communication performance is going to be analysed. The selection unit 530 may include an interface such that the selection may be manually entered by an operator of the SSON engine 500. For example, customer relationship management may have relayed a complaint associated with a group of users, such that the operator users the selection unit 530 to select or target the performance analysis engine 502 to perform an analysis on this specific group of users using the received user communications data 520 and 527.

Additionally or alternatively, the selection unit 530 may include one or more performance identification algorithms and/or modules that may perform a proactive analysis and/or data mining operations on the user communications data 520 and 527 that is received for targeting or selecting one or more groups of users. For example, from this one or more groups of users that have specific communication problems or issues may be determined, identified (selected and targeted) and categorised to form analysis results data 522. For example, the performance analysis engine 502 may, using one or more of the performance identification modules, analyse the user communications data 520 received from the telecommunications infrastructure 510 and determine the grouping together of certain users that may share the same or similar specific criteria such as communication problems based on, by way of example only but not limited to, a telecommunications service, or an area or route (e.g. cell area or route travelled by one or more users) covered by the telecommunications network infrastructure 510, types of users, and/or types of UEs.

It is to be appreciated by the skilled person that the criteria for associating or grouping one or more users into one or more groups of users may be varied and/or vary over time, where each of the groups of users may define a certain user profile that may be based on service, location, device, application being used, or any other criteria in relation to one or more communication problem(s)/issue(s) associated with one or more users.

For example, one or more groups of users (e.g. customers) may be selected and/or targeted based on, by way of example only but not limited to: location or a common location or route travelled by one or more users (e.g. the users are all travelling from one location to another location (e.g. London to Newbury)); types of services or common services used by one or more users such as, by way of example only, but not limited to, voice services, video services, multimedia services, VoIP services or any other telecommunications services used by one or more users; types of devices or UEs used by one or more users, or types of components used by the UEs of one or more users (e.g. the same type of devices or UE; or a specific module or component of one or more UEs, etc.); and/or types of users such as, by way of example only but not limited to, low priority users, high priority users, all users, users of a particular service or subscription plan, privileged users etc.

Once one or more groups of users are selected (or targeted) and identified by the selection unit 530, then the collection unit 532 may collect the relevant user communication data 520 for these selected groups of users. As described above, the user communication data 520 is received from the telecommunications infrastructure 510 from various sources such as operator network 511 and one or more other systems (e.g. SON 512, OSS 514a-514c, RANs 516 and/or UEs 518 etc.) Additionally, other user/customer/user group or service information stored in the database 508 may also be received or input for the analysis to be performed, where examples of this additional other information can be, by way of example only but not limited to, the location/area where the users/customers are, services the user/customer is paying for, the device/s and/or UEs that the users are using, their Average Revenue Per User (ARPU), whether the users are VIP or privileged users or customers, or corporate users or customers, etc.

Once enough user communication data 520 and/or additional other user information has been collected an analysis unit 534 of the performance analysis engine 502 is used to analyse the selected groups of users and their user and service experiences, the analysis of which includes compiling different profiling details (e.g. locations, services, devices being used) and performance experiences and communications problems being suffered.

For each selected group of users, there is still a wealth of user communication data 520, thus with all this information the user communication data 520 for the selected group of users may be analysed by the analysis unit 534 to determine or output one or more measureable Key Performance Indicators (KPIs), which may be defined (or predefined) that focus on one or more specific communication situation(s)/problem(s) that can be identified, prioritised and solved. The one or more measureable KPIs may be determined for each user in the selected group of users. For example, different groups of KPIs may be identified in terms of user experience such as, by way of example but not limited to, a group of KPIs associated with network performance fails (e.g. Drop Call Rate DCR, Block Call Rate BCR, etc.) and a group of KPIs associated with poor user or service experience (e.g. low throughput, high latency, high error rates, etc.). Thus, different groups of KPIs will have a different importance depending on the operator strategy and the types of communication problem(s) that are prioritised to be mitigated or solved. Additionally, depending on different ranges of values for the defined KPIs, different levels of importance can be assigned to each of the defined KPIs. This may be implemented as a weight being applied to each of the defined KPIs. For example, a weight may be set or assigned based on the level of importance of the KPI.

A target selection unit 536 may receive analysed performance data for each selected group of users from the analysis unit 534. For each selected group of users, the analysed performance data may include, by way of example only but is not limited to, the determined KPIs associated with the selected group of users and/or the determined KPIs for each user of the selected group of users. From this, one or more subgroups of users (or certain user(s), one or more sets of users) of the selected group of users may be identified, based on the associated KPIs, to be experiencing one or more common specific communication situation(s)/problem(s).

The one or more subgroups of users may be scored, ranked and prioritised to enable efficient targeting of the most important or critical subgroup of users experiencing one or more communication situation(s)/problem(s). This may involve assigning various priorities and weights to the KPIs of the one or more subgroups of users. As described above, each KPI may be assigned a weight according to the importance an operator or dynamic process assigns to the KPI. The KPIs may be weighted according to different priorities, and those weights can be either assigned manually by the operator of the SSON engine 500 or even dynamically allocated or determined by self-learning tools such as machine learning tools that may apply LIFT type analysis to optimise the weights etc. For example, LIFT is a measure of the performance of a particular selection of weighted KPIs in selecting targeted group of users at having an enhanced response or improved communication performance against a randomly selected group of users or the average of the plurality of users. LIFT may be a ratio of these concepts or values: i.e. proposed target communication performance divided by the average communication performance when the proposed target is not selected. This measure may be used to adjust the weights of the KPIs over a period of time. As an example, machine learning approaches such as, by way of example only but it not limited to, neural networks (e.g. self-learning neural networks) for adjusting the weights depending on the potential outcome experienced by the operator, user(s) of the UE(s) and/or both (e.g. the neural network detects a pattern that when fixing voice problems the churn rate of users reduces in a higher percentage than when fixing data problems).

Thus, the resulting combined weighted KPIs for each subgroup of users may be ranked and the topmost ranked subgroup(s) of users may become the targeted subgroup(s) of users. For example, target selection unit 536 may target, for each selected group of users, a certain user or a certain group of users highlighting a specific communication problem associated with one specific service or group of services based on the determined measureable KPIs, priorities and weights.

Additionally or alternatively, the target selection unit 536, on receiving the analysed performance data for each selected group of users from the analysis unit 534, may determine one or more subgroups of users from the selected groups of users based on the determined KPIs associated with the selected groups of users and/or the determined KPIs for each user of the selected groups of users. From this, one or more subgroups of users (or certain user(s), one or more sets of users, a plurality or multiple users) may be identified from the selected groups of users based on the associated KPIs in which users of a subgroup of users are experiencing one or more common communication situation(s)/problem(s).

When there are multiple subgroups of users, the multiple subgroups of users may be scored, ranked and prioritised to enable efficient targeting of the most important or critical one or more of the multiple subgroups of users experiencing communication situation(s)/problem(s). This may involve assigning various priorities and weights to the KPIs of the multiple subgroups of users. The KPIs for each of the multiple subgroups of users may be weighted according to different priorities, and those weights can be either assigned manually by the operator of the SSON engine 500 or even dynamically allocated or determined by self-learning tools such as machine learning tools that may apply LIFT type analysis to optimise the weights etc. Thus, the resulting combined KPIs for each of the multiple subgroup(s) of users may be ranked and the topmost ranked subgroup(s) of users of the multiple subgroup(s) of users may become the targeted subgroup(s) of users. For example, target selection unit 536 may target, for all the selected groups of users, a certain user or a certain group of users that highlights a specific communication problem associated with one specific service or group of services based on the determined measureable KPIs, priorities and weights.

As an example scenario, a selected group of users for a particular neighbourhood or route has been selected for the initial analysis. In the analysis, two communication problems may be identified as occurring along one specific route from one point to another point of the neighbourhood. The first communication problem may be associated with a first group of KPIs associated with high Voice DCR for a first subgroup of users, and the second communication problem may be associated with a second group of KPIs associated with poor throughput (e.g. problems when using streaming services) for a second subgroup of users. Additionally, it is assumed that these two communication problems are especially visible when the users are moving "at car speed".

The target selection unit 536 will need to decide which one of these problems should be addressed first. That is the target selection unit 536 may score, rank and prioritise the subgroup(s) of users based on the KPIs associated with each subgroup of users. For example, the first group of KPIs may be weighted based on the types of users in the first subgroup of users. For example, users of a corporate customer may travel along the route to some specific company facilities, thus if the corporate customer is a major client of the operator or if there have already been numerous complaints from users of the corporate customer, then the first group of KPIs may be weighted based on whether there are users from the corporate customer in the first subgroup of users.

The second group of KPIs may be weighted based on the type of devices used by users of the second subgroup of users. For example, users of a specific high-end handset or UE that has been sold and marketed by the operator in a marketing campaign for which streaming problems may be known, but if made public may damage the operator brand image, may also be travelling along the route. Thus, the second group of KPIs may be weighted according to the type of user device used by users of the second group of users. Thus, the target selection unit 536 may make a decision depending on the ranking and prioritisation of the first group of KPIs with the second group of KPIs. For example, if the first group of KPIs be ranked and prioritised to be higher than the second group of KPIs, then the target selection unit 536 may prioritise fixing the Voice DCR along the route for the corporate users travelling to one specific Company facilities over the fixing of the steaming problems.

Again, different KPIs, priorities and/or weights and optimisation tools could be manually entered into the SSON engine 500 depending on the current strategy of the operator. Additionally or alternatively, the SSON engine 500 may be continuously monitoring and learning which communication situation(s)/problem(s) and users, groups of users, subgroups of users, and/or services should be targeted sooner. For example, if after a period of time to fixing the Voice DCR problems, the SSON engine 500 detects that the number of user complaints decreases on this matter and/or the churn rate associated to these users decreases accordingly, then the weights associated with the first group of KPIs may adjusted such that the first group of KPIs will be ranked higher than the second group of KPIs. However, if it is determined after a period of time that not fixing the streaming problems for the high end handset users increases churn rate associated to these users and that user complaints increases on this matter such that it may start impacting brand image of the operator, then the second group of KPIs may be adjusted to be ranked higher than the first group of KPIs, such that the system starts fixing the streaming problems associated with the second subgroup of users.

The target selection unit 536 identifies one or more targeted subgroups of users that have been identified and classified as having one or more communication problem(s) (issue(s)). For these targeted subgroup(s), a solution or optimisation strategy needs to be identified for mitigating or eliminating the one or more communication problem(s). For that purpose, the target selection unit 536 of the performance analysis engine passes analysis results data 522 including data representative of the communication problem(s) and the subgroups of users identified and categorised to the optimisation engine 504, which will determine a solution or optimisation strategy for improving the user/customer and service experience associated with the targeted subgroup(s) of users.

The performance analysis engine 502 also passes user profile data 521 associated with the targeted subgroups of users to the database 508. The user profile data 521 that is passed may include information associated with the targeted subgroups of users describing the communication situation(s)/problem(s) being experienced, which is shared and stored in the database 508. This forms a "history log" or historical user data that may be used to assist in the SSON engine 500 making further decisions and actions in the future. For example, the user profile data 521 will be used as part of a profiling process that enables the database 508 to store the historical information on communications situations/problems or services being experienced by the targeted subgroups of users. For example, a profile may be defined from the user profile data 521 by certain corporate users having voice performance problems in one particular town.

The SSON engine 500 includes a self-learning process that will consider tools, algorithms and/or processes that can identify correlations/patterns between groups of users, subgroups of users, services, location, time of day, devices and/or components of UE(s) 518 etc., which are not capable of being manually made apparent or visible to one or more operators of a SSON engine 500.

The analysis result data 522 associated with the targeted subgroup(s) of users is sent to the optimisation engine 504, which will determine one or more optimisation strategies for implementing by the telecommunications infrastructure 510 that will target the user(s) of the targeted subgroup(s) of users. These optimisation strategies are passed as optimisation data 525 to the operation engine 506, which will determine and execute one or more actions based on the optimisation strategies of the optimisation engine 504 to deal with the communication issue(s)/problem(s) of the targeted subgroup(s) of users. After the change/action is implemented, and executed by the operation engine 506, the optimisation engine 506 will send user communication data 527 to the performance analysis engine 502 via the collection unit 532 so it can collect the optimisation strategies and operation action information that have been implemented/executed in relation to targeted subgroups of users. This allows the performance analysis engine 502 to analyse the new situation after the changes brought about by the optimisation strategies and operation action information have been implemented.

If the changes resulted in, by way of example only but not limited to, a service or user experience improvement, the performance analysis engine 504 will update the database 508 by incorporating this data in the user profile data 521 in which the associated profile(s) related to the users in the database 508 will include data representative of the optimisation strategies and/or associated actions being successful (e.g. a "lesson-learnt"). However, if the changes do not result in an improvement, the performance analysis engine 504 will still update the database 508 by incorporating this data in the user profile data 521 in which the associated user profile stored in the database 508 will include data representative of the optimisation strategies and/or actions being unsuccessful. The profile associated with the user(s) with this data may be communicated from database 508 to the optimisation engine 504 so that the "lessons learnt" are assessed and/or, if necessary, alternative solutions or optimisation strategies and actions are assessed to try and solve the specific communications problem(s) for one or more further targeted subgroups of users.

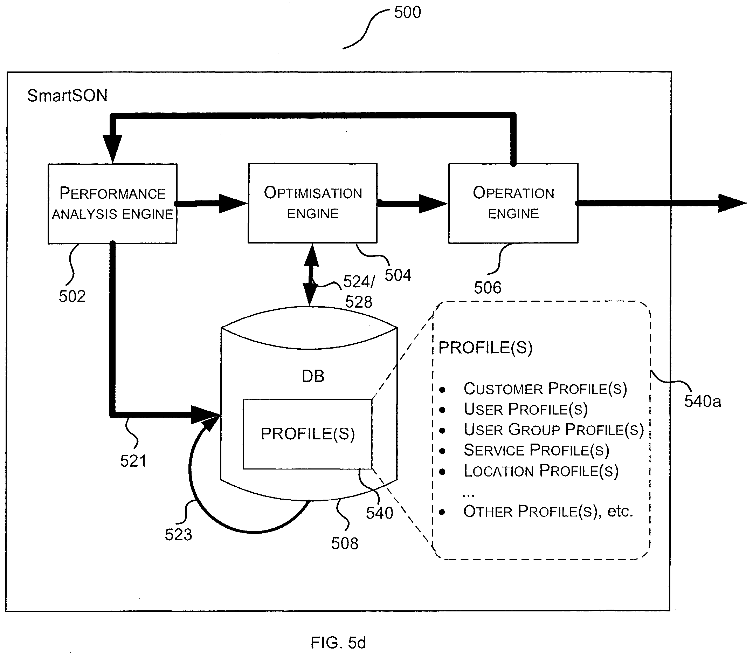

Figure 5d is a schematic diagram of an example database and/or server 508 for use in the example SSON engine 500 as described in figure 5b. The term database is used here but it will be appreciated from the described functionality that the system does not function as a traditional database or datastore that merely stores data to be accessed by another entity. The terms data controller, data engine, controller, controlling entity or mediator are example terms that could be representative of the same entity. What is key, as will be understood, is the functionality of the entity rather than the terminology used. Although a database 508 is described herein, this is for simplicity and by way of example only, and it is to be appreciated by the skilled person that the functionality of the database 508 may be implemented on or by, by way of example only but not limited to, one or more server(s), computing device(s) and/or network element(s) and/or associated storage, which may be implemented in, by way of example only but not limited to, a centralised manner and/or a distributed manner amongst the one or more servers, network elements and other computing devices of the telecommunication network infrastructure 510. For simplicity the term database 508 or similar term will be used herein for simplicity and by way of example only.

The performance analysis engine 502 may identify and categorise targeted subgroup(s) of users and their associated communication problem(s) for input as analysis result data 522 to the optimisation engine 504. In addition, the performance analysis engine 502 may send the database 508 user profile data 521 based on the analysis result data 522 and also operation data 527 associated with optimisation strategies and/or actions performed for targeted subgroups of users. The database 508 may include the functionality of a profiling unit or engine 540 for categorizing and profiling the user profile data 521 received by the database 508 into one or more profiles according with, by way of example only but not limited to, user identifiers, repetitive user preferences, user routines or user behaviours, optimisation strategies, etc. This may enable the optimisation engine 504 to use one or more profiles associated with users when targeting solutions or optimisation strategies towards those users in the targeted subgroup(s) of users that will best benefit from improvements in user experience.

Although the profiling unit or engine 540 is described, by way of example only, as being part of a database 508, it is to be appreciated by the skilled person that this is, by way of example only and is not limited to being a part of the database 508. For example, the functionality of the profiling apparatus, unit or engine 540 may be implemented on or by, by way of example only but not limited to, one or more server(s), computing device(s), network element(s) and/or associated storage within the telecommunication network infrastructure 510, which may be implemented in, by way of example only but not limited to, a centralised manner and/or a distributed manner amongst the one or more server(s), network element(s) and other computing device(s) of the telecommunication network infrastructure 510.

The profiling unit or engine 540 may receive user profile data 521 from the performance analysis engine 502 based on the communications data 520, analysis result data 522, database optimisation data 528 representative of the one or more of the group of optimisation strategies, and/or unsuccessful or successful optimisation strategy(ies) and/or actions associated with each of the users and corresponding profiles, and also operation data 527 associated with optimisation strategies and/or actions performed for targeted subgroups of users, which may include successful optimisation strategies and/or actions and/or unsuccessful optimisation strategies and/or actions. The profiling engine 540 may include functionality for categorizing and profiling the user profile data 521 received from the performance analysis engine 502 into one or more profiles according with, by way of example only but not limited to, user identifiers, repetitive user preferences, user routines or user behaviours, optimisation strategies, etc.

Although the profiling unit or engine 540 may receive user profile data from the performance analysis engine 502, it is to be appreciated that the profiling unit 540 may further include at least part or all of the functionality of the performance analysis engine 502 for receiving communication data 520 for identifying and categorising targeted subgroup(s) of users and their associated communication problem(s), and for receiving operation data 527 associated with optimisation strategies and/or actions performed for the targeted subgroups of users. Using this data, the profiling engine 540 may then categorize and profile the targeted subgroups of users into one or more profiles according with, by way of example only but not limited to, user identifiers, repetitive user preferences, user routines or user behaviours, optimisation strategies, etc. The profiling unit or engine 540 may also create and/or update 523 one or more profile(s) in the database 508 for further use by the SON engine 500.

The optimisation engine 504 may feedback one or more chosen or selected optimisation strategy(ies) and/or successful/unsuccessful optimisation strategies for each user of the targeted group(s) of users. The profiling unit or engine 540 may also receive this feedback data from the optimisation engine 504 in the form of database optimisation data 528 comprising data representative of the one or more of the group of optimisation strategies, and/or unsuccessful or successful optimisation strategy(ies) and/or actions associated with each of the users and/or targeted group(s) of users and their corresponding profiles. On receiving this data, the profiling unit and/or engine 540 may then create and/or update 523 the corresponding profiles with the optimisation strategy(ies), unsuccessful/successful optimisation strategy(ies), and/or action(s) associated with the unsuccessful/successful optimisation strategy(ies) in relation to the users and/or the targeted group of users.

For example, the profiling unit or engine 540 may include computer implemented functionality for receiving communication data associated with a plurality of UEs 518 from the telecommunication network. The profiling unit 540 may identify and categorize the plurality of users into one or more groups of users or targeted groups of users. From this identification and categorization, the profiling unit 540 may generate one or more profile(s) associated with the identified and categorized plurality of users. Each of the profile(s) may include data representative of a collection of information characterising each of the group(s) of users and/or targeted groups of user. The generated profile(s) may be stored in appropriate storage in the network 510 for retrieval. For example, profile information may be retrieved by the profile unit 540 and sent, in response to a profile request associated with one or more users or a targeted set of users, one or more profile(s) for use in optimizing the user experience of the UEs associated with the one or more profile(s). For example, the optimisation unit 504 may request one or more profile(s) associated with one or more users or a targeted group of users. Alternatively or additionally, the profiling engine or unit 540 may be implemented as a profiling apparatus or computing device that includes a processor, memory and a communication interface, the processor connected to the memory and the communication interface, wherein the memory includes computer instructions stored thereon which, when executed on the processor, causes the processor to perform any one of the functions or steps of the computer-implemented functionality or method(s) as described herein in relation to profiling one or more users or generating profiles for one or more users or groups of users as described with reference to figures 1-15.

A profile may comprise or represent data representative of a collection of information characterising one individual user or a group or set of one or more users. A profile may comprise at least one from the following groups of information:
1) one or more identifiers such as, by way of example only but not limited to:
   - MSISDN;
   - IMSI;
   - Cell ID (current or set of cell IDs it's been connected to);
   - Device;
   - Services booked;
   - Tariff booked;
   - Customer Preference (i.e. no roaming is allowed);
   - Location using e.g. GPS or similar functions on the mobile device
   - User Preferences (i.e. setting in the core systems like roaming preferences; and/or
   - Others or future fields; and/or
   - one or more identifiers of the UEs associated with the group of users and/or targeted group of users;
2) Routines/ habits identifiers, such as:
   - Time of the day (morning, afternoon, night);
   - Day of the week (Monday, Tuesday...etc.);
   - Week days;
   - Weekend;
   - Services pattern i.e. YouTube, Facebook, Voice call duration routes i.e. work route (cells covering the specific route);
   - Specific user behaviours and associated performance impact, such as ping pong effect, allocated resources but not needed, and the like;
   - Other or future fields; and/or
   - one or more routines or habit identifiers of each user using a UE in the group of users and/or targeted groups of users; and/or
3) Performance/optimisation/operation identifiers, such as:
   - Information associated with details on performance experience such as, by way of example only but not limited to, detecting a pattern that will define a certain group of individuals experiencing the same kind of performance problem;
   - Information associated with previously successful/unsuccessful optimisation strategies (e.g. from the optimisation engine 504) that are associated with the profile;
   - Information associated with actions implementing such previously successful/unsuccessful optimisation strategies (e.g. from operations engine 506) that are associated with the profile; and/or
   - one or more performance, optimisation or operation identifiers associated with optimising the user experience of the UE(s).

Although only some example profiles are described herein, it is to be appreciated by the skilled person that these described profiles are described herein, by way of example only, and that criteria to build different profiles can be varied and complex. Examples of profiles that may be built or determined by the profiling unit or engine 540 of the database 508 may be based on the following:

**Customer profile:** A customer is a user that is the owner of the SIM card and has a contract with the mobile operator. This could be, by way of example only but not limited to, a private person, an enterprise or corporation, or a M2M service. Therefore the customer profile considers, by way of example only but is not limited to, services, functions, priorities which are valid for, by way of example only but is not limited to, all users in the same enterprise or having the same M2M contract. For example, a customer profile may be a profile that is associated with a customer including a user that is an owner of one or more UEs and has an associated one or more contract(s) with a mobile operator. The user or owner may be an individual user, or a legal entity such as a corporation or enterprise user.

**User profile:** A user may be an individual using the device with the SIM card of the owner/customer. That could be the same person in case of private customer/user. But it is also possible that a user has a M2M or company SIM card with specific company services or functions booked/selected by the customer. For example, a user profile may include a profile that is associated with an individual user using a UE associated with a customer. That customer may be the individual user and/or may be another user and/or legal entity etc.

**User Group profile:** A user group could be considered as a group of users or people using a specific service at that same time (e.g. gaming, Facebook usage at a school; or football fans moving at the same time towards a football stadium). For example, a user group profile may be a profile that is associated with a group of users using a common telecommunications service and/or common devices or UEs.

**Service requirements profile:** It is required to identify a specific service and the requirements of the service against the network. For example, a gaming service requires a low ping time, so if the access network optimises the ping time while having a lower data rate, the user experience is much better (e.g. optimising QoS (Quality of Service) Class Identifier (QCI)). Examples on service requirements can be "real time", "best effort", "low jitter", "low round trip time", etc. For example, a service requirements profile may include a profile that is associated with a specific service and the requirements of that service against the network, where the specific service may be used by one or more of a group of users, a plurality of users and/or targeted group of users.

**Area profile:** (rural/urban areas/suburban, etc.) It is obvious that the services used are different depending on the geographical area of, by way of example only but not limited to, a cell site in the centre of a city (e.g. London) compared with a cell site in a rural area. Therefore, it would be beneficial if the access network will be capable to optimise a specific cell site for the specific requirements at that location. Examples on definition of locations where certain characteristics can be identified could be, by way of example only but is not limited to:
- Business areas: more mobile calls during a day;
- Home areas: more TV streaming in the evening;
- School areas: more YouTube or Facebook during the school hours;
- any other area or region based on common user activities, behaviour or communications behaviour amongst one or more users and their associated UEs.
For example, an area profile may include a profile that is associated with one or more users using one or more telecommunication service(s) and/or one or more common telecommunication service(s) in a geographical region, area, cell site and/or other location. Alternatively or additionally, an area profile may include a profile that is associated with one or more users using one or more telecommunication service(s) and/or one or more common telecommunication service(s) in a geographical region, area, cell site and/or other location at a particular time.

The profiling unit or engine 540 generates and/or updates one or more profiles 540a based on user profile data 521 input from performance analysis engine 502. For example, the database 508 may receive the necessary input from the performance analysis engine 502 as user profile data 521. As described with reference to figures 5b and 5c, the performance analysis engine 502 collects user communications data 520 and 527 (e.g. all the user/customer and service SON relevant information) from different sources in the telecommunications infrastructure 510 such as, by way of example only but not limited to, existing tracing tools or core elements such as HSS, HLR, common user repositories or user/customer neutral information from Charging Data Records (CDRs) and the like, as well as optimisation/operations data 527 from the optimisation/operation engines 504 and/or 506.

The performance analysis engine 502 after performing its analysis, which may include applying dynamic configurable filters to the received user communications data 520 and 527 will pass the filtered information as user profile data 521 to database 508. Also after operations engine 506 applies any optimisation, the performance analysis engine 502 may receive further user communication data 520 and/or 527 in which the new information or updated information may also be past as user profile data 521 to database 508.

The profiling unit or engine 540 may dynamically create profiles depending on the profile information (e.g. user profile data 521) selected and available. The profiling unit or engine 540 of the database 508 may internally process the received profile information (e.g. user profile data 521) categorizing and profiling it. New entries or data could be added in the identifiers, routines, performance/optimisation/operations indicators following feedback from existing or new functions such as a performance analysis engine 502, optimisation engine 504 and/or operations engine 506. The profiling unit or engine 540 may also receive from the optimisation engine 504 database optimisation data 528 representative of the one or more of the group of optimisation strategies, and/or unsuccessful or successful optimisation strategy(ies) and/or actions associated with each of the users and corresponding profiles. The profiling unit or engine 540 may then update the corresponding profiles associated with the user and/or the targeted group of users.

The one or more profiles, due to the different profiling/categorization, are input to the optimisation engine 504 to target and improve communication performance of groups of users (e.g. specific user/user group/customers) in various situations (e.g. specific areas/time/services/routes/day). After the operations engine 506 applies any optimisation strategies using associated actions, the performance/optimisation/operation indicators of one or more associated profile(s) may be updated so that the SSON engine 500 keeps learning.

The profiling unit or engine 540 of the database 508 allows the database 508 to dynamically store user/customer performance and service requirements, categorize them, creating profiles and storing successful and unsuccessful actions/profiles per user/customer and service optimisation solutions and provide input of all the necessary data to the optimisation engine 504 to improve the associated user experience(s).

With the profiles, the database 508 may distinguish between customers, users and services. For example, a customer could be, by way of example only but is not limited to, a car developer with a specific M2M requirements or a Bank with specific security requirements. The database 508 may also differentiate the services and the user preferences. Further the behaviour of a specific user group may be stored and used by the database 508. For example, a user group could be, by way of example only but is not limited to, visitors of a football game. User groups may be configured to show a similar behaviour as, by way of example only but it not limited to, the users in the group moving at a similar time towards a common location (e.g. a stadium) or using similar services.

The database 508 via the profiling unit or engine 540 may also be configured to provide input 524 to the optimisation engine 504 to provide successful and/or unsuccessful optimisation strategies that have been performed in the past. This may provide the advantage of reducing the time required to perform or determine one or more optimisation strategies by the optimisation engine 504, as the optimisation engine 504 and the SSON engine 500 does not need to spend unnecessary time developing or determining successful or unsuccessful strategies. For example, if an optimisation strategy was previously successful, the database 508 may store data representative of the optimisation strategy such as, by way of example only but not limited to, the optimisation algorithm and/or processes used and actions taken.

The database 508 may then be configured to check if the same communication problem/situation occurs that is being contemplated by the optimisation engine 504. This is because the performance analysis engine 502 may send the user profile data 521 to database 508 and also the analysis result data 522 to optimisation engine 504 in which both sets of data outline a communication problem/situation for a targeted subgroup of users. Thus, if the database 508 determines and retrieves one or more user profiles associated with the communication problem/situation and the targeted subgroup of users, then these determined user profiles may be sent to the optimisation engine 504 for use in determining an optimisation strategy. For example, if one or more user profiles include data representative of a successful optimisation strategy, then this strategy may be used by the optimisation engine 504. On the other hand, if the one or more user profiles include data representative of an unsuccessful optimisation strategy, then these strategies may be avoided by the optimisation engine 504.

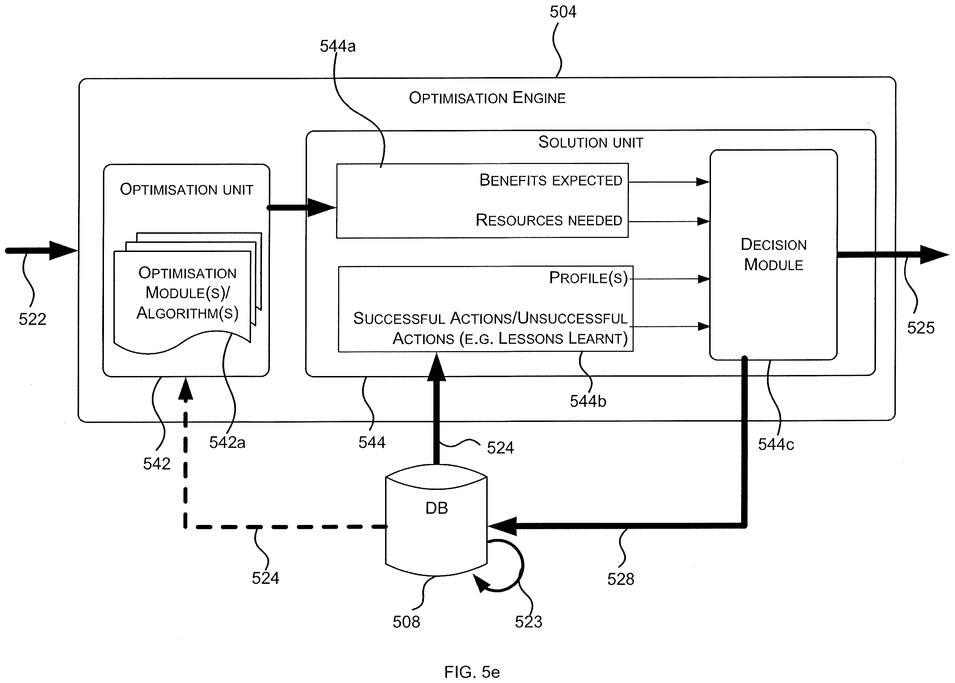

Figure 5e is a schematic diagram illustrating an example optimisation engine 504 for use with the SSON engine 500 as described with respect to figure 5b. The optimisation engine 504 is one of the key components of the SSON engine 500 and is responsible for analysing received analysis results data 522 from the performance analysis engine 502 for overcoming the communication situation(s)/problem(s) associated with the one or more targeted groups of users (or targeted subgroups of users). The optimisation engine 504 may analyse different optimisation strategies or approaches for each targeted subgroup of users and make a decision or selection on which optimisation strategy(ies) of the available options may be applied to manage/optimise the communication situation(s)/problem(s) associated with the targeted subgroup(s) of users. The optimisation engine 504 may output the decision as optimisation data 525 representative of the selected optimisation strategy(ies) that the operations engine 506 should action and implement in the telecommunication infrastructure 510.

The optimisation engine 504 may also feedback the chosen/selected optimisation strategy(ies) to the database 508, which may be output as database optimisation data 528 comprising data representative of the one or more of the group of optimisation strategies, and/or unsuccessful or successful optimisation strategy(ies) and/or actions associated with each of the users of the targeted group of users and corresponding profiles. The database 508 may receive the database optimisation data 528 and updates 523 the corresponding profiles with the optimisation strategy(ies), unsuccessful/successful optimisation strategy(ies), and/or action(s) associated with the unsuccessful/successful optimisation strategy(ies) in relation to the users and/or the targeted group of users.

In this example, the optimisation engine 504 may include an optimisation unit 542 that includes a plurality of optimisation module(s) or algorithm(s) 542a for determining from the received analysis result data 522 a plurality of optimisation strategies or one or more optimisation strategy(ies) that may be suitable for overcoming the communication situation(s)/problem(s) associated with one or more targeted groups of users (or targeted subgroups of users). The optimisation engine 504 also includes a solution unit 544 that receives the one or more optimisation strategy(ies) and makes a decision using a decision module 544c on the best one or more optimisation strategy(ies) that will most likely overcome of improve the communication performance of the target subgroup(s) of users. The chosen optimisation strategy(ies) are sent as optimisation data 525 representing the chosen optimisation strategy(ies) to the operations unit 506 for actioning to adjust the telecommunications infrastructure 510 and/or UEs 518 in relation to the target subgroup(s) of users. The optimisation engine 504 may also output from the decision module 544c database optimisation data 528 representative of the chosen or selected one or more of the group of optimisation strategies, and/or unsuccessful or successful optimisation strategy(ies) and/or actions associated with each of the users of the targeted group of users. The database 508 may receive the database optimisation data 528 and updates 523 the corresponding profiles associated with the users or the targeted group of users with the optimisation strategy(ies), unsuccessful/successful optimisation strategy(ies), and/or action(s) associated with the unsuccessful/successful optimisation strategy(ies).

The plurality of optimisation module(s) or algorithm(s) 542a may include proprietary software or computer implemented optimisation module(s), method(s) and/or algorithm(s) and/or open source software or computer implemented optimisation module(s), method(s) and/or algorithm(s) such that the module(s) can be added to the optimisation engine 504, as and when, to enable the variety of possible optimisation strategies and/or actions that the system can provide and design to increase and improve over time. Thus, the number of communication problems, user experience issues, performance issues and the like that the optimisation engine 504 and the SSON engine 500 as a whole can overcome may increase to cover an ever wider range of scenarios, situations, communication problems, user experience issues, performance issues and the like. This also allows the optimisation engine 504 and/or the SSON engine 500 to adapt to, by way of example but not limited to, future changes in communication standards, telecommunications network infrastructure and user expectations.

In conventional SON 512, there is no process that can decide which one of the possible available optimisation strategy(ies)/action(s)/method(s) may be used to best handle the various communication situation(s)/problem(s). In conventional SON 512, the decision making is predefined, and there is no optimisation engine 504 that may optimally decide the best approach(es) or optimisation strategy(ies) to manage each different communication situation/problem. As previously discussed, conventional SON 512 are limited to communication situation(s)/problem(s) at the cell-level and the associated solutions/optimisation strategy(ies) are fixed and limited to cell-level only changes for all users within a cell. Typically, conventional SON 512 may be able to identify some specific predetermined communication situation(s)/problem(s) (e.g. lack of a specific neighbour relation), but the optimisation approach relies on a 1:1 relation of predefined problems and solutions. This means that for one communication problem identified (e.g. only at the cell level as the minimum granularity) there is only one solution available that can be used to adjust the configuration of a cell, which affects all the users in the same cell in the same way.

The optimisation engine 504 of the SSON engine 500 allows the operator to define and verify a set of optimisation module(s)/algorithm(s) 542a that are used by the optimisation unit 542a for optimising the communication performance of a target subgroup of users experiencing one or more communication problem(s) without affecting other users in, by way of example only but not limited to, the same location, cell, and/or using the same telecommunication service etc. Depending on the implementation, an operator (or radio vendor) may include indications or tips on the best parameter changes / features to tackle one or more specific problems, and rank them, for example, in terms of the number of network resources needed to fix each problem. The SSON engine 500 and/or optimisation engine 504 may then learn in terms of what optimisation strategies and/or actions can provide a better outcome, based on experience gained from previous situations and/or problems. The optimisation module(s)/algorithm(s) may define or bring to bear different approaches/tools for solving the same or similar kinds of communication situation(s)/problem(s) defined or outlined by the analysis results data 522 of the performance analysis engine 502. The optimisation unit 542 then provides one or more options of the possible optimisation strategy(ies) to a solution unit 544.

The solution unit 544 is configured to make a decision to choose, among the possible optimisation strategy(ies) output by the optimisation unit 542, one or more of the possible optimisation strategy(ies) that may be applied by the operation engine 506 for improving the communication performance of the target subgroup(s) of users. For each of the possible optimisation strategy(ies) determined for the targeted subgroup of users, the solution unit 544 analyses, by way of example only but is not limited to, in a first optimisation analysis module 544a the benefits that are to be expected and the communication resources that are expected to be adjusted and consumed. The results of the first optimisation analysis module 544a are provided to a decision module 544c.

The solution unit 544 may also include a second analysis optimisation module 544a that receives profile data 524 representative of a selection of one or more profiles 524 from database 508. The database 508 may detect and select which of the stored profiles 540a may be associated with the communication situation(s)/problem(s) associated with one or more targeted subgroup(s) of users. Alternatively or additionally, the optimisation engine 504 may query the database 508 based on the communication situation(s)/problem(s) associated with one or more targeted subgroup(s) of users and/or the targeted group(s) of users to retrieve one or more selections of profiles that may be similar to previous communications situation(s)/problem(s) and users. In any event, the second analysis optimisation module 544a receives selected profiles, which may include profile data representative of successful optimisation strategy(ies)/action(s) and/or unsuccessful optimisation strategy(ies)/action(s) (e.g. lessons learnt) associated with similar communication situations/problem(s). This profile data is also provided to the decision module 544c, which can use this data to prune the possible optimisation strategy(ies) for a target subgroup of users to the most likely or best optimisation strategy(ies) that will improve the communication performance of the targeted subgroup(s) of users.

Alternatively or additionally to the second analysis optimisation module 544a receiving the profile data 524, the optimisation unit 542 may also optionally be configured to receive profile data 524 (depicted by the dashed profile data 524 line) representative of a selection of one or more profiles 524 from database 508. This profile data 524 may be used by the optimisation unit 542 to prune the possible optimisation strategy(ies) for a target subgroup of users to the most likely or best optimisation strategy(ies) that will improve the communication performance of the targeted subgroup(s) of users.

In any event, the decision module 544c, on receiving the required data from the first and/or second analysis optimisation modules 544a and/or 544b, is configured to choose (among the determined optimisation options) the optimisation strategy(ies) and change(s) that will fit the purpose of managing the communication situation(s)/problem(s) associated with the targeted subgroup(s) of users. The decision module 544c of the solution module 544 may be configured to choose among those optimisation strategy(ies) (e.g. tools and actions) the best one or more optimisation strategy(ies) that may finally be used to manage the communication situation(s)/problem(s) of the target subgroup(s) of users. The decision module 544c of the solution module 544 may, by way of example only but is not limited to, take into account the following:
- Benefits expected from partially or totally fixing the communication situation(s)/problem(s) affecting the target subgroup(s) of users;
- Communication resources needed to implement the chosen optimisation strategy(ies)/action(s);
- Profile data 524 received from the database 508 including, by way of example only but not limited to, User/Customer/user groups and service profiles;
- Data representative of the lessons learnt, which may be part of the profile data 524. For example, if the communication situation(s)/problem(s) are already known or have been encountered before and an optimisation strategy (e.g. a specific tool/action) has been successful in the past, then this may be one of the best options to consider or start with. Conversely, if the optimisation strategy has not been successful in the past, then this optimisation strategy(ies) may be considered not worthy for consideration, or one of the lower priority options to consider;
- Self-learning tools to do correlations between specific communication situations or problems; and
- Potential impact on other users that are not targeted, by way of example only but not limited to, determining whether less communication resources will be available for other users and how adversely impacted these other users may be.

As an example, a Voice Drop Call Rate (DCR) communication problem may have been identified for a targeted subgroup of users that use iPhones (RTM). The optimisation unit 542 may identify two different optimisation strategies/actions that may be taken to attempt to fix the identified communication problem. A first optimisation strategy/action may fix 50% of the communications problem, in which 50% of a certain amount of communication resources is used. The second optimisation strategy/action may fix 60% of the communication problem, but instead take 100% of a certain amount of communication resources. The first and second analysis optimisation modules 544a and 544b on receiving the two optimisation strategies/actions may determine the expected benefits and the expected resources required, in which a decision needs to be made by the decision module 544c.

Furthermore, it could happen that the decision module 544c, after weighing up the options, choses the first optimisation strategy. However, after sending the optimisation strategy to the operations engine 506, which implements it, the optimisation strategy is not successful in fixing the communication problem. For example, the decision module 544c may use a weighting method or approach and/or perform a cost-benefit analysis/approach by taking into account the pros and cons of each optimisation strategy as positive and negative values, and ranking to generate options for which optimisation strategy(ies) to select or choose depending on the option with the highest net score.

As discussed above, this kind of information is stored in one or more profiles 540a of the database 508, so that when the same existing communication problem "re-enters" or is experienced by the the optimisation engine 504, these associated one or more profiles 540a will be sent to the optimisation unit 542 and/or solution unit 544 informing the optimisation engine 504 that the first optimisation strategy was previously tried and was not successful. This allows the number of possible optimisation strategies that may be generated to fix the communication problem to be pruned by removing the unsuccessful first optimisation strategy or weighting the first optimisation strategy such that it has a lower priority to be chosen by the decision module 544c. Given this, the decision module 544c on receiving the first and second possible optimisation strategies may then select the second optimisation strategy/action as the most likely optimisation strategy that will fix the communications problem. The second optimisation strategy/action may be sent to the operations engine 506 for execution/implementation.

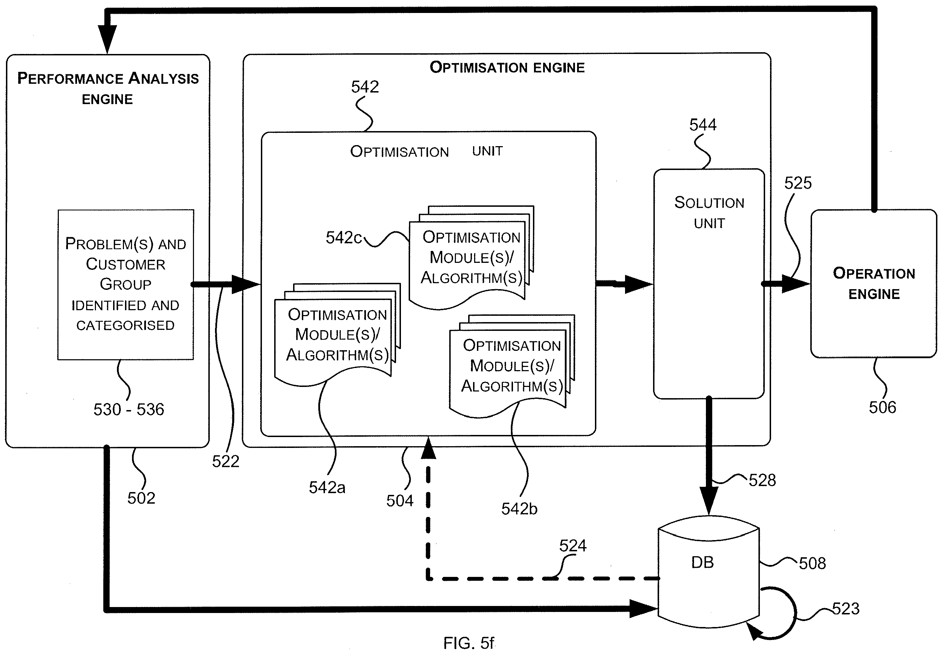

Figure 5f is a schematic diagram of the optimisation engine 504 of figure 5e connected to the performance analysis engine 502, operation engine 506 and database 508 of the example SSON engine 500 of figure 5b. As described, with reference to figure 5e, the optimisation engine 504 performs an analysis of the communications situation/problem(s) for a targeted subgroup of users to determine one or more optimisation strategy(ies)/solution(s)/ action(s) that will most likely improve the communication performance of the targeted subgroup of users (e.g. mitigate or even fix the communication problem(s) associated with the targeted subgroup of users).

The optimisation engine 504 may be configured to receive analysis result data 522 from the performance analysis engine 502 in which the analysis result data 522 output from 530-526 includes communication situation/problems associated with a identified and categorised targeted subgroup of users (e.g. targeted user/customer/user group or services), this may include all the information that the performance analysis engine 502 has been collecting in relation to the targeted subgroup of users. For example, the analysis result data 522 may include, by way of example but not limited to, data representative of the details of the communications performance being experienced by the targeted subgroup of users (e.g. user customer/user group or services). The optimisation engine 504 may be further configured to receive and/or retrieve profile data 524 from database 508, in which the profile data may include data representative of the detailed information on the profiles of the targeted subgroup of users (e.g. user/customer/user group or services profiles) and in general, any useful information (e.g. successful and/or unsuccessful optimisation strategies that have been applied in the past) that would help the optimisation analysis and decision making process of optimisation unit 542 and solution unit 544 of the optimisation engine 504.

The optimisation unit 542 of the optimisation engine 504 may include multiple groups of optimisation module(s)/algorithm(s) 542a-542c, which may operate independently of each other and may have different and/or multipurpose approaches. For example, one of the groups of module(s)/algorithm(s) 542a may target and/or optimise the communication performance of the RAN 516 equipment in relation to the targeted subgroup of users; another group of module(s)/algorithm(s) 542b may target and/or optimise the communication performance of the core network 511 equipment and/or SON 512 and/or OSSs 514a-514c in relation to the targeted subgroup of users; while a further group of module(s)/algorithm(s) 542c may target and/or optimise the communication performance of UE and/or future products/UE in relation to the targeted subgroup of users.

The multiple groups of module(s)/algorithm(s) may allow the optimisation engine 504 to be scalable and allow the SSON engine 500 and system to grow as further requirements develop for targeting other aspects of the telecommunication infrastructure (e.g. Heterogeneous Network(s), etc.) that needs to be optimised in relation to the targeted subgroup of users. Although each of the groups of optimisation module(s)/algorithm(s) 542a-542c are described as being directed or targeted to a different part of the telecommunications infrastructure 510, it is to be appreciated by the skilled person that one or more groups of the optimisation module(s)/algorithm(s) 542a-542c may focus on multiple parts of the telecommunications infrastructure 510 at the same time, this may provide a joint optimisation approach to optimising the telecommunications infrastructure 510 in relation to the targeted subgroup of users.

In any event, the optimisation unit 542 of the optimisation engine 504 may be configured to execute or run the different optimisation module(s)/algorithm(s) 542a-542c, which are programmable and can be adjusted accordingly (e.g. by the operator), to determine one or more different optimisation strategies (e.g. different approaches) for use in attempting to mitigate, fix and/or solve the communication situation(s)/problem(s) for the targeted subgroup of users. Once the available optimisation strategy(ies) (e.g. solutions) are identified by the optimisation unit 542, a decision needs to be made, taking into account all the information that the performance analysis engine 502 collected, plus any extra information required and already stored as, by way of example only but not limited to, profile data in the database 508.

For example, the solution unit 544 receives the optimisation strategies output from the optimisation unit 542 and weighs the advantages and disadvantages of each optimisation strategy taking into account the expected benefits, expected resources needed, related profile data and previous successful/unsuccessful optimisation strategies that have been applied, as well as other inputs that may assist in the solution unit 544 choosing one or more of the optimisation strategy(ies). The solution unit 544 may use the above mentioned information to weight and/or rank the optimisation strategies and such that the first ranked optimisation strategy and/or the topmost ranked one or more optimisation strategy(ies) are selected for implementation by the operation engine 506.

Once one or more optimisation strategy(ies) have been selected or chosen (e.g. there may be more than one depending on the complexities of the communication problem(s)), then the selected optimisation strategy(ies) are communicated to the operation engine 506 as optimisation data 525. For example, a unique optimisation strategy may be selected by the optimisation engine 504 and send to the operation engine 506, which determines the required actions for performing the selected optimisation strategy. If the selected optimisation strategy does not perform as expected, or fails, i.e. the user experience is not improved or optimised, then on a second iteration through the optimisation loop, the optimisation engine 504 may select a second ranked optimisation strategy for the operation engine 506 to perform, and so forth. Thus, it is possible to have several iterations before an optimisation strategy that works is found to improve or optimize the user experience for each UE.

The optimisation engine 504 may feedback one or more chosen or selected optimisation strategy(ies) and/or successful/unsuccessful optimisation strategies for each user of the targeted subgroup(s) of users to the database 508 (and/or profiling unit or engine (not shown)). The database 508 may receive feedback data from the optimisation engine 504 in the form of database optimisation data 528 comprising data representative of the chosen or selected one or more optimisation strategies, and/or also unsuccessful or successful optimisation strategy(ies) and/or actions associated with each of the users, and/or targeted subgroup(s) of users and/or corresponding profiles. On receiving this data, the database 508 may then create and/or update 523 the corresponding profiles associated with the users and/or the targeted subgroup(s) of users and the selected/chosen optimisation strategy(ies) for each user, unsuccessful/successful optimisation strategy(ies) applied for each user, and/or action(s) associated with the unsuccessful/successful optimisation strategy(ies) in relation to the users and/or the targeted subgroup(s) of users.

The operation engine 506 may receive the optimisation data 525 which includes data representative of the selected optimisation strategy(ies) associated with the targeted subgroup of users. The operation engine 506 is configured for implementing the optimisation strategy(ies) associated with the targeted subgroup of users, which includes executing actions/instructions or commands on parts of the telecommunication infrastructure 510 to implement the chosen optimisation strategy(ies) associated with the targeted subgroup of users.

Note that it could happen that the decided or selected optimisation strategy(ies) associated with the targeted subgroup of users do not mitigate, alleviate or solve the communication problem(s) or improve the user experience associated with the targeted subgroup of users. Thus, on another round of optimisation through the SSON engine 500, to avoid processing the unsuccessful optimisation strategy(ies) again, the second ranked optimisation strategy(ies) and/or second set of topmost optimisation strategy(ies) may be selected/chosen. This communication/optimisation information and behaviour may be used to optimise the optimisation module(s)/algorithm(s) 542a-542c and to learn from the previous decision taken by storing the unsuccessful strategy(ies) associated with the communication problem(s) and targeted subgroup of users. As described above, the optimisation engine 506 may also receive input profile data 524 from the database 508, which may categorise and store historical communication/optimisation data such as successful or unsuccessful optimisation strategy(ies)/algorithm(s) that were previously run to avoid re-processing a communication situation/problem that has happened previously using an unsuccessful strategy.

Figures 5b-5d and 5f illustrate an example operation engine 506 for use with the example SSON engine 500. The operation engine 506 receives optimisation data 525 representative of one or more optimisation strategy(ies) associated with targeted subgroups of users. The operation engine 506 on receiving the optimisation strategy(ies) for the targeted subgroups of users (e.g. specific user/customers/user groups or services in specific areas/time/services/routes/day) translates the optimisation strategy(ies) into appropriate command and/or actions for interacting directly with one or more parts of the telecommunications infrastructure 510 and/or any UEs 518. The operation engine 506 sends execution data 526 including data representative of these command(s), instruction(s) and/or action(s) to one or more parts of the telecommunication infrastructure 510 for implementing the associated optimisation strategy(ies).

For example, on receiving optimisation data 525 including one or more optimisation strategy(ies) associated with a targeted group of users and/or targeted subgroup(s) of users, the operation engine 506 may take the required action by instructing and sending execution data 526 associated with the optimisation strategy(ies) to the SON 512 or OSS 514a-514c for performing the appropriate optimisation actions that implement the one or more optimisation strategy(ies). Alternatively or additionally, the operation engine 506 may take the required action by instructing directly one or more parts of the telecommunications infrastructure associated with the targeted subgroup of users such as, by way of example but not limited to, one or more RAN(s) 516 , one or more pico and/or femto cell access point(s), one or more Wi-Fi access point(s), one or more of 2-4G or beyond radio network controllers such as, by way of example but not limited to one or more BSC(s), one or more RNC(s), one or more MME(s), one or more of 2G-4G or beyond cellular access points such as, by way of example but not limited to, one or more eNodeB(s), one or more NodeB(s), one or more base station(s) (BTS(s)) and the like, and/or UEs 518 of the targeted subgroup of users. The execution data 526 associated with the instructions and/or commands may be sent directly sent to the element or part of the telecommunication infrastructure 510 that provides the best real-time improvement in the communication performance or user/service experience of the targeted subgroup of users.

As previously described, the operation engine 506 may need to have direct or indirect interfaces to, by way of example only but not limited to, at least one or more or a combination of one or more of the following parts of telecommunication infrastructure 510:
- Radio Access Network(s)/Element(s)/Node(s) 516 such as, by way of example only but not limited to, one or more RNC(s), BSC(s), eNodeB(s), Small Cell(s), Femto cell(s), Wi-Fi access point(s) and other access nodes or elements and the like;
- Network Management System (NMS/OSS 514a-415c);
- Self-organizing system or self-optimising network(s) (SON) 512;
- New Network Element such as CrowdRAN boxes
- Any UE(s) 518;
- If required, to core network nodes, elements and/or functions such as, by way of example only but not limited to, Policy and Charging Rules Function (PCRF) or other traffic management functions; and
- other parts of the telecommunication infrastructure 510 that may be affect the communication performance or even assist in the optimisation/improvement of the communication performance of the targeted subgroup(s) of users.

The operation engine 506 may perform a selection of the interface(s) that will be most suitable for receiving the execution data associated with the optimisation strategy(ies) of the targeted subgroup of users. The selection of which interface will be the most suitable, by way of example only but not limited to, direct to one or more parts of the telecommunication infrastructure 510 such as, by way of example only but not limited to, existing/new network elements, core network 511, one or more RAN(s) 516, SON 512, NSM/OSS 514a-514c, and/or UE(s) 518, will be assessed depending on:
- Real time needs;
- Availability of different interfaces;
- Availability of different network elements; and
- Best experience avoiding any impact on other user.

Once the interfaces or parts of the telecommunications infrastructure 510 have been selected, the execution data 526 may be sent to the selected interfaces of the parts of the telecommunication infrastructure 510 and/or UE. Before executing the optimization precondition/conditions need to be met and the performance monitoring engine 502 will allow monitoring of the condition and the target subgroup of users and associated profiles (e.g. user/customer/user groups or services profile) before the execution data associated with the optimisation strategy(ies) is sent to the various parts of the telecommunication infrastructure 510. There are many method(s) or ways to determine the optimisation preconditions/conditions that need to be met, which, by way of example but not limited to, the performance monitoring engine may monitor. For example, each UE 518 may include an application (or app) that may communicate further communication data associated with the UE for use in monitoring the status of the UE and thus determine whether the UE status matches the optimisation pre-conditions/conditions before triggering an optimisation strategy. Additionally or alternatively, specific messages, command and/or instructions may be sent to the UE via a network element such as, by way of example only but not limited to, an base station or network controller (e.g. BS/eNodeB or BSC/RNC/... etc.). Alternatively or additionally, the performance monitoring engine 502 may receive communication data 520 associated with all targeted UEs and monitor and track their associated performance for determining the status of each of the UEs and whether certain pre-conditions/conditions are met for implementing an optimisation strategy associated with said each UE being targeted.

In addition to sending the execution data 526 that executes the actions associated with optimisation data 525 received from the optimisation engine 504, the operation engine 506 may also send user communications data including operations/optimisation data 527 to the performance analysis engine 502 for use by the performance analysis engine 502 in real-time monitoring of any changes made, assessing the benefits of the changes made to the telecommunications infrastructure 510, and storing the past successful and/or unsuccessful optimisation strategy(ies) in relation to the associated communication problem(s) and/or targeted subgroup(s) of users. This closes the optimisation loop between the performance analysis engine 502, optimisation engine 504, operations engine 506, and database 508.

The operation engine 506 may also feedback (not shown) one or more command/actions/instructions associated with the chosen or selected optimisation strategy(ies) and/or successful/unsuccessful optimisation strategies for each user of the targeted subgroup(s) of users to the database 508 (and/or profiling unit or engine (not shown)). The database 508 may receive this feedback data from the operation engine 506 in the form of database operations data (not shown) comprising data representative of command/actions/instructions associated with the chosen or selected optimisation strategy(ies) and/or successful/unsuccessful optimisation strategies for each user of the targeted subgroup(s) of users. On receiving this data, the database 508 may then create and/or update 523 the corresponding profiles associated with the users and/or the targeted subgroup(s) of users with this database operations data for use by the optimisation engine 504 and/or in profiling the users etc.

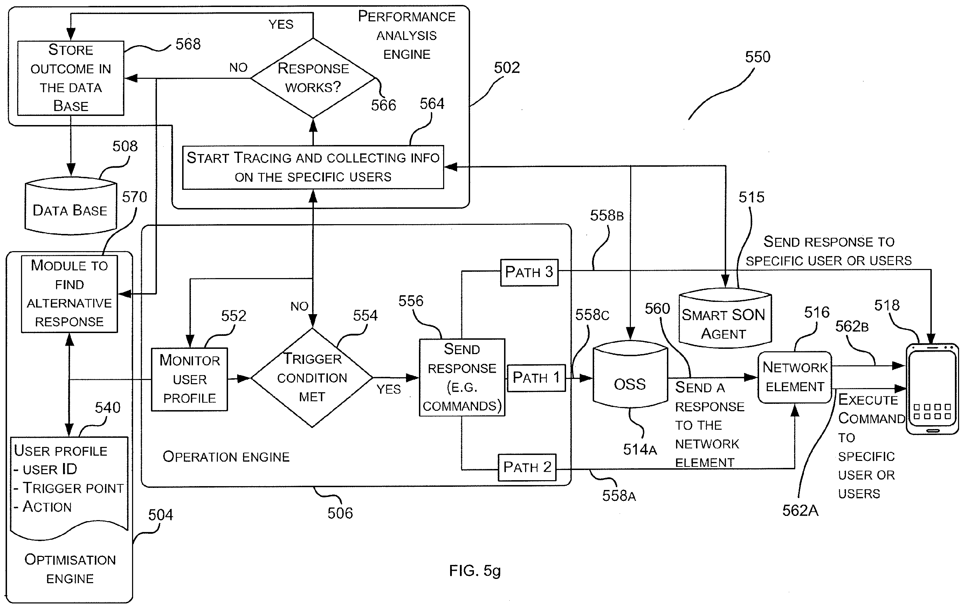

Figure 5g is a further flow diagram of an example one or more method(s) 550 performed by the performance analysis engine 502, optimisation engine 504, operation engine 506 and database 508 during operation of the SSON engine 500 of Figures 5b-5f. The operation engine 506 analyses and monitors the profile data (e.g. user profile data) of targeted subgroups of users as well as user communication data associated with the targeted subgroup of users in real time to determine when to send the execution data associated with executing the action(s)/response(s) of the optimisation strategy(ies) associated with the performance issue(s)/problem(s) for the targeted subgroup of users.

At 552, the operation engine 506 monitors the profile data for each user of the targeted subgroup of users. At 564 the performance analysis engine 502 is configured to start tracing and collecting detailed user communication data 520 associated with the targeted subgroup of users having communication performance issue(s)/problem(s) (e.g. users with poor performance experiences). The detailed user communication data 520 may be generated as described with reference to figure 5b and/or by the OSS 514a-514b and/or a SSON agent 515. During monitoring 552 of the profile data for each user, the operation engine 506 evaluates the detailed user communication data 520 to determine various trigger parameters such as, by way of example only and not limited to, location(s) of the UEs 518 for each of the targeted subgroup of users in real time, service information associated with each of these UEs 518 in real time, communication conditions of each of these UEs 518 in real time, configuration of each of these UEs 518 in real time, and/or user experiences of each of the user(s) using the UE(s) 518 in real time. At 554, if the trigger parameters for each one of these UE(s) of the targeted subgroup of users meets the conditions defined by the trigger point(s) associated with action(s)/response(s) of the optimisation strategy(ies) for the targeted subgroup of users, then the operation proceeds to 556 for each of those UEs and corresponding users. The action(s)/response(s) of the optimisation strategy(ies) are associated with mitigating or avoiding a corresponding performance issue/problem for each of the UEs of the targeted subgroup of users.

At 556, for each user and UE that triggers the conditions in 554, the operation engine 506 sends a response in the form of execution data 526 including data representative of command messages to the associated parts of the telecommunication infrastructure 510 and/or each UE 518 for performing the required action(s)/response(s) for specifically modifying the configuration of the UE 518 of the user of the targeted subgroup of users to mitigate or avoid the corresponding performance issue(s)/problem(s) for the UE 518 of the user. This may be performed for each of the users of the targeted subgroup of users. The command message includes data representative of implementing the action(s)/response(s) associated with the optimisation strategy(ies) corresponding to the performance issue(s)/problem(s) for the user of the UE.

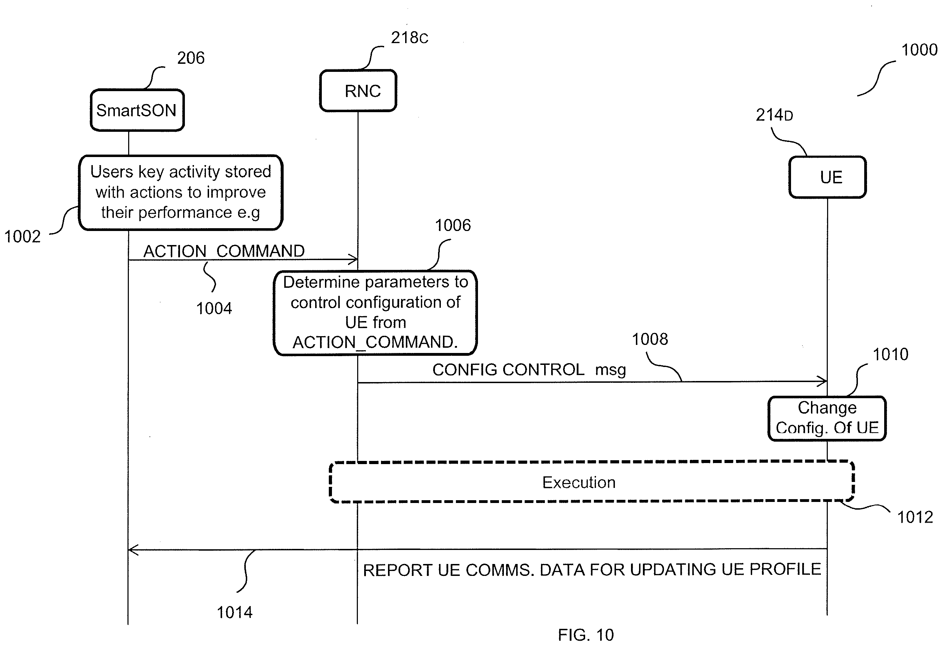

In this example, the operation engine may send execution data 526 comprising one or more command message(s) or instruction(s) over one or more communication paths, e.g. communication path 1 558c to OSS 514a, communication path 2 558a to network element 516, and/or communication path 3 558b to UE 518. If the execution data comprising the command message(s) is sent down communication path 2 558a to the network element 516, the network element 516 receives the command message and is configured to either a) send a corresponding configuration message on path 562a to the UE 518 for modifying the configuration of the UE 518 of the user and thereby executing the command and mitigating and/or avoiding the performance issue/problem for the UE of the user of the targeted subgroup of users; or b) execute the command message(s) to modify or control the configuration of the UE at the network element 516 to mitigate and/or avoid the performance issue/problem for the UE of the user; or c) execute the command message(s) to modify or control the configuration of the UE by modifying the configuration of the network element 516 to mitigate and/or avoid the performance issue/problem for the UE 518 of the user. Figures 10-15 describe various examples of the network element 516 modifying/controlling the configuration of the UE 518.

If the execution data comprising the command message(s) is sent down communication path 3 558b to the UE 518 of the user, the UE 518 of the user receives the execution data and executes the command message(s) and is configured to modify the configuration of the UE 518 of the user and thereby executing the command and mitigating and/or avoiding the performance issue/problem for the UE 518 of the user. Figures 10-15 describe various examples of the UE 518 (e.g. 414a) being configured to modify the configuration of the UE 518 (e.g. 414a) of the user.

If the execution data comprising command message(s) or instruction(s) is sent down communication path 1 558c to the OSS 514a, the OSS 514a is configured to send the command message(s) to the network element 516 via communication path 560. When the network element 516 receives the command message(s) it is configured to either a) send a corresponding configuration message on path 562b to the UE 518 of the user for modifying the configuration of the UE 518 of the user and thereby executing the command(s) and mitigating and/or avoiding the performance issue/problem for the UE 518 of the user of the targeted subgroup of users; or b) execute the command message(s) to modify or control the configuration of the UE 518 or the user from the network element 516 to mitigate and/or avoid the performance issue/problem for the UE 518 of the user; or c) execute the command message(s) to modify or control the configuration of the UE by modifying the configuration of the network element 516 to mitigate and/or avoid the performance issue/problem for the UE 518 of the user. Figures 10-15 describe various examples of the network element 516 (e.g. network element 418) modifying/controlling the configuration of the UE 518 of the user (e.g. UE 414a).

At 564, when the operations engine 506 is configured to start tracing and collecting detailed user communication data and information associated with the UEs of the targeted subgroups of users having performance issue(s)/problem(s), then at 566 each action/response performed can be evaluated by the performance analysis engine 502 and/or optimization engine 504 to determine whether the identified performance issue(s)/problem(s) for the UE of the user of the targeted subgroup of users have been resolved, mitigated or avoided. At 566, if, based on the evaluation, the identified performance issue(s) have been resolved, then at 568 the corresponding action(s)/response(s) and/or associated successful optimisation strategy(ies) are stored in the database 508 in the profile data of a profile associated with the user or targeted subgroup of users. This allows the UE 518 of the user to avoid the performance issue(s)/problem(s) when the UE 518 of the user again meets the required trigger conditions 554.

However, at 566, if, based on the evaluation, the identified performance issue(s) have not been resolved, then at 568 the corresponding action(s)/response(s) and/or associated unsuccessful optimisation strategy(ies) are also stored in the database 508 in the profile data of a profile associated with the user or targeted subgroup of users. The data associated with the successful and/or unsuccessful optimisation strategy(ies) may be retrieved from the database 508 and provided as profile data 524 to the optimisation engine 504 for use in pruning the possible number of available optimisation strategy(ies) in relation to the communication problem(s) of the targeted subgroup of users as described with reference to, for example, figures 5b, 5e and 5f.

As well, at 566, if one or more identified performance issue(s)/problem(s) persist after executing the corresponding action(s)/response(s) in relation to the UE 518 of a user of the targeted subgroup of users, then in 570 a module of the optimization engine 504 may evaluate further user communication data for the UE of the user and/or UEs of the targeted subgroup of users including the user to identify one or more alternative or further optimisation strategy(ies) that may yield further action(s)/response(s) for mitigating and/or avoiding the corresponding performance issue(s)/problems for the UEs of the targeted subgroup of users. The profile data (e.g. customer/service/user group/user profiles) associated with the user and/or the targeted subgroup of users may then be updated based on the alternative optimisation strategy(ies) and/or further action(s)/response(s). Thus, the SSON engine 500 may be configured by using an optimisation feedback loop comprising the performance analysis engine 502, the optimisation engine 504, the operations engine 506 and database 508 and which are configured for optimizing the user experience for UEs of users associated with targeted groups or subgroups of users, and thus maintaining an optimal user experience for the UEs 518 of each user of the plurality of users.

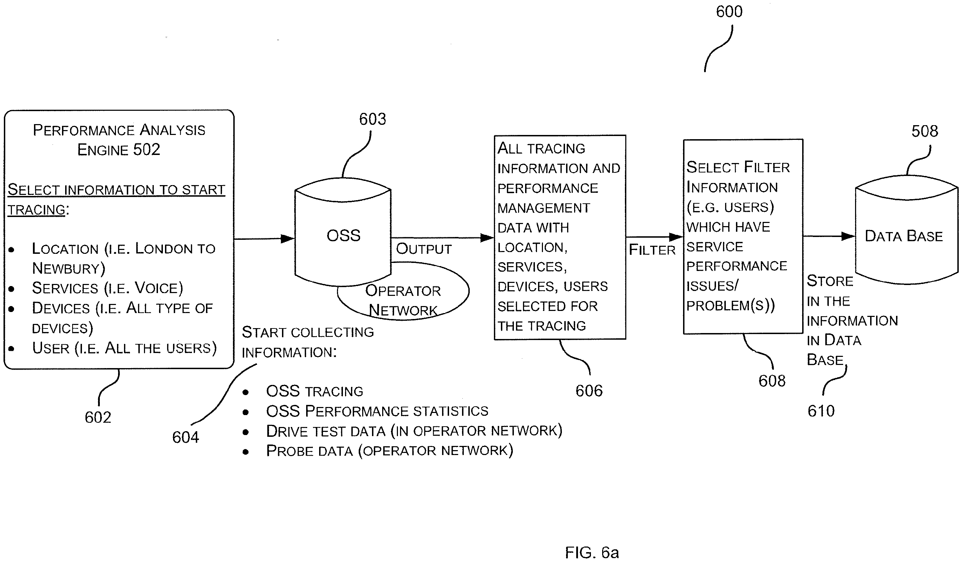

Figure 6a is a flow diagram of an example method performed by the performance analysis engine 502 of the SSON engine 500 of Figure 5a. The performance analysis engine 502 performs user analytics on user communication data associated with the UE of a user to identify users with UEs experiencing performance issue(s)/problem(s).

At 602, the performance analysis determines and/or selects a set of input criteria to allow tracing to start retrieving user communication data based on the set of input criteria. The set of input criteria may include, by way of example only and not limited to, the type of location, region or route of the telecommunication network that is to be optimized (e.g. the telecommunications network along a route between London and Newbury); the services being optimised (e.g. voice or data etc.); the types of UE devices being optimized (e.g. all types of UEs; UEs associated with a particular operator or operator(s); UEs associated with a particular enterprise/business, etc.); and types of users (e.g. all the users; business users; premium service/subscription users; etc.).

At 603 the OSS 404 may be directed to start tracing and retrieving the user communication data or communication data associated with the set of input criteria determined in 602. At 604 the performance analysis starts collecting user communication data based on, by way of example only but not limited to, OSS tracing, OSS performance statistics, drive test data (in operator network), and/or probe data (in operator network).

At 606, the OSS 404 outputs the user communication data associated with the set of input criteria. The user communication data includes all tracing information and performance management data associated with the set of input criteria (e.g. location, services, devices, users) selected for the tracing operation.

At 608 the performance analysis engine 502 analyses, ranks and/or filters the received user communication data to identify those users and UEs experiencing service performance issue(s)/problem(s) and/or poor user experience. At 610, the identified users experiencing performance issue(s)/problem(s) and/or poor user experience are stored in a database 508. The associated user communications data may include key radio information for determining the cause of the performance issue(s)/problem(s), which may be stored in the database 508. As well, the associated performance issue(s)/problem(s) may also be stored in the database 508. For example, at this stage, a user profile for each identified user may be generated and stored in the database. The user profile for a user may include a user identifier, the user communication data associated with the UE of the user, and the performance issue(s)/problem(s) associated with the UE of the user. Although the user profile is described herein with reference to figures 6a-6c, it is to be appreciated by the skilled person that the term user profile has been used for simplicity and by way of example only and that other profiles as described with reference to figure 5b that may be associated with one or more users and their UEs may be generated and used in place of the user profile as used and described, by way of example only, with reference to figures 6a-6c.

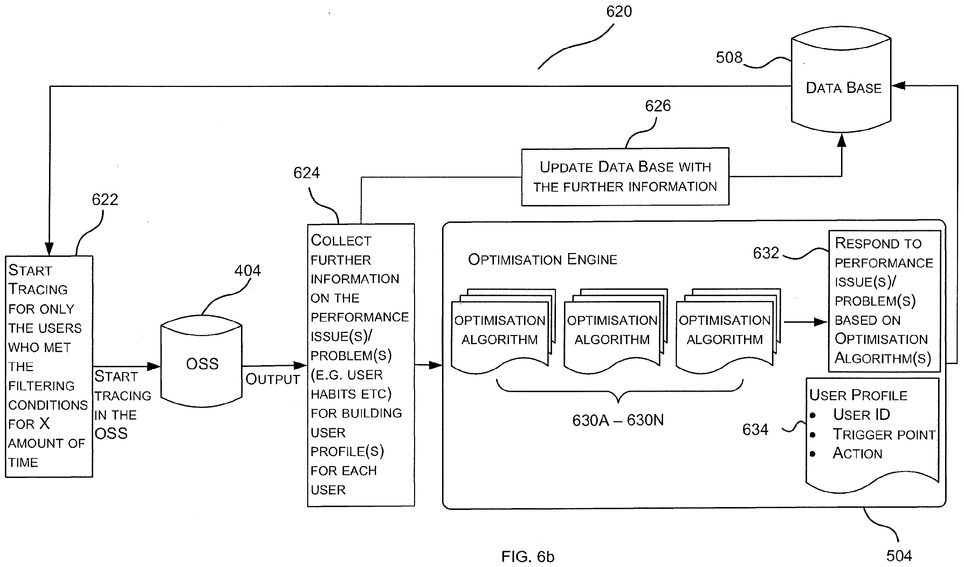

Figure 6b is a flow diagram of an example method performed by the optimization engine 504 of the SSON engine 500 of Figure 5a. The optimization engine 504 analyses the further user communication data for identifying one or more action(s)/response(s) corresponding to the UEs of each user with performance issue(s)/problem(s).

At 622 the optimization engine 504 retrieves the user profiles from the database 610 to identify the UEs of users with performance issue(s)/problem(s). The optimization engine 508 starts detailed tracing for only the users identified by the performance analysis engine 502 and method 600 that met the filtering conditions. The detailed trace may be performed by the OSS 404. The detailed tracing triggers the collection of further communication data for the UE of each user. The detailed tracing may be performed for a set period of time X. The detailed trace generates further user communication data for the UEs of users and also for network elements and/or network cells that have been identified causing performance issue(s)/problem(s) to the UEs of the users. At 624 the further user communication data associated with the performance issue(s)/problem(s) is collected for building the user profile(s) for each user. The further communication data for the UE of each user may include user habits etc. The further user communication data for the UE of each user is used by the optimization engine 504 to build a historical view of the performance issue(s)/problem(s) for the UE of each user. At 626 the user profile for each of the identified users in the database 508 may be updates with the further user communication data.

At 624, the further user communication data is also provided to one or more sets of optimization algorithm(s) 630A-630N for evaluation. The one or more sets of optimization algorithm(s) 630A-630N analyses the further user communication data for the UE of each user. Based on the analysis and evaluation at 624, at 632 the optimization engine 504 determines one or more proposed optimization action(s)/response(s) associated with the identified performance issue(s)/problem(s) for the UE of each user. Once the action(s)/response(s) are identified the optimization engine 504 updates the database by including in the user profile for each user data representative of the proposed optimization action(s)/response(s), which includes data representative of the specific desired action(s)/response(s) and the corresponding trigger point(s) for executing the action(s)/response(s).

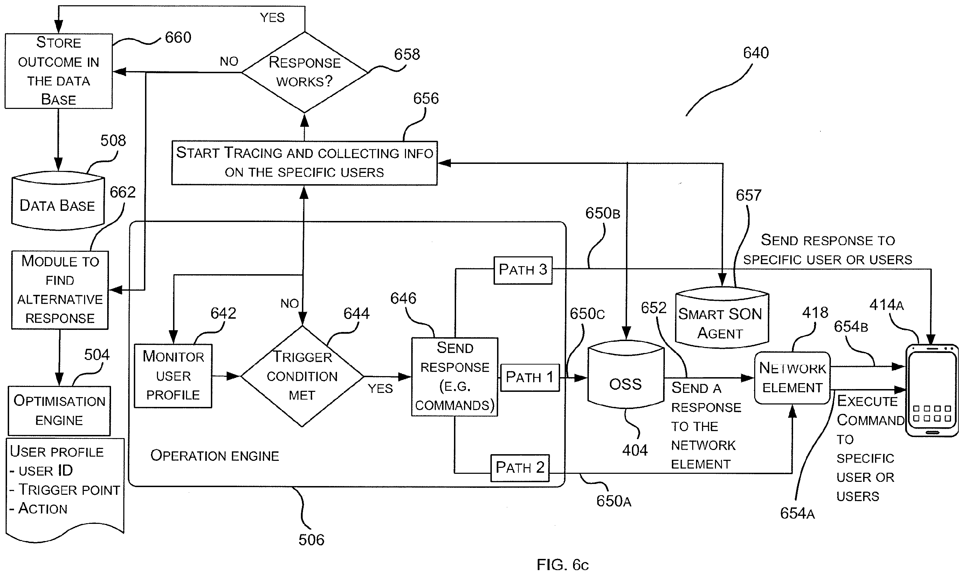

Figure 6c is a further flow diagram of an example method performed by the operation engine 506 of the SSON engine 500 of Figure 5a. The operation engine 506 analyses monitors the user profile and user communication data for the UE of each user in real time to determine when to execute the action(s)/response(s) associated with the performance issue(s)/problem(s) for the UE of each user.

At 642, the operation engine 506 monitors the user profile for each user and in 656 is configured to start tracing and collecting detailed user communication data and information associated with the UEs of each specific user having performance issue(s)/problem(s) (e.g. users with poor performance experiences). The detailed user communication data may be generated by the OSS 404 and/or a SSON agent 657. During monitoring of the user profile for each user, the operation engine 506 evaluates the detailed user communication data to determine various trigger parameters such as, by way of example only and not limited to, location of the UE in real time, service information associated with the UE in real time, communication conditions of the UE in real time, configuration of the UE in real time, and/or user experiences of the user using the UE in real time. At 644, if the trigger parameters for the UE of the user meet the conditions defined by the trigger point(s) associated with an action/response stored in the user profile for the user, then the operation proceeds to 646. The action/response is associated with mitigating or avoiding a corresponding performance issue/problem for the UE of the user.

At 646, the operation engine 506 sends a response in the form of command messages to the associated network element 418/component 404 and/or command the UE 414a to perform the action(s)/response(s) for specifically modifying the configuration of the UE 414a to mitigate or avoid the corresponding performance issue(s)/problem(s) for the UE 414a. The command message includes data representative of implementing the action(s)/response(s) associated with the corresponding performance issue(s)/problem(s) for the UE.

In this example, the operation engine may send a command message over one or more communication paths, e.g. communication path 1 650c to OSS 404, communication path 2 650a to network element 418, and/or communication path 3 650b to UE 414a. If the command message is sent down communication path 2 650a to the network element 418, the network element 418 receives the command message and is configured to either a) send a corresponding configuration message on path 654a to the UE 414a for modifying the configuration of the UE and thereby executing the command and mitigating and/or avoiding the performance issue/problem for the UE of the user; or b) execute the command message to modify or control the configuration of the UE at the network element 418 to mitigate and/or avoid the performance issue/problem for the UE of the user. Figures 10-15 describe various examples of the network element 418 modifying/controlling the configuration of the UE 414a.

If the command message is sent down communication path 3 650b to the UE 414a, the UE 414a receives and executes the command message and is configured to modify the configuration of the UE and thereby executing the command and mitigating and/or avoiding the performance issue/problem for the UE of the user. Figures 10-15 describe various examples of the UE 414a being configured to modify the configuration of the UE 414a.

If the command message is sent down communication path 1 650c to the OSS 404, the OSS 404 is configured to send the command message to the network element 418 via communication path 652. When the network element 418 receives the command message it is configured to either a) send a corresponding configuration message on path 654b to the UE 414a for modifying the configuration of the UE and thereby executing the command and mitigating and/or avoiding the performance issue/problem for the UE of the user; or b) execute the command message to modify or control the configuration of the UE 414a from the network element 418 to mitigate and/or avoid the performance issue/problem for the UE 414a of the user. Figures 10-15 describe various examples of the network element 418 modifying/controlling the configuration of the UE 414a.

At 656, when the operations engine 506 is configured to start tracing and collecting detailed user communication data and information associated with the UEs of each specific user having performance issue(s)/problem(s), then at 658 each action/response performed can be evaluated by the performance analysis engine 502 and/or optimization engine 504 to determine whether the identified performance issue(s)/problem(s) for the UE of the user have been resolved, mitigated or avoided. At 658, if, based on the evaluation, the identified performance issue(s) have been resolved, then at 660 the corresponding action(s)/response(s) are stored in the database 508 in the user profile for the user. This allows the UE of the user to avoid the performance issue(s)/problem(s).

However, at 658, if one or more identified performance issue(s)/problem(s) persist after executing the corresponding action(s)/response(s), then in 662 a module of the optimization engine 504 may evaluate further user communication data for the UE of the user to identify one or more alternative or further action(s)/response(s) for mitigating and/or avoiding the corresponding performance issue(s)/problems for the UE of the user. The user profile of the user may then be updated based on the alternative or further action(s)/response(s). The SSON engine 500 may be configured to perform one or more of the methods 600, 620 and 640 and/or functions of the performance analysis engine 502, optimization engine 504 and/or operation engine 506 for optimizing the user experience for the UE of each user and for maintaining an optimal user experience for the UE of each user.

Although figures 5b-5g and figures 6a-6c describe examples of SSON engine 500 of figure 5a, it is to be appreciated by the skilled person that this is by way of example only and that the SSON engine 500 of figure 5a is not limited to only the SSON engine 500 of figure 5b or the SSON engine 500 of figure 6a, but that the SSON engine 500 of figure 5a may be further modified to include one or more features of the SSON engine 500 of figures 5b-5g and/or one or more features of the SSON engine 500 as described with reference to figures 6a-6c, and/or one or more combinations of features of SSON engine 500 of figures 5b-5g and/or of SSON engine 500 of figures 6a-6c.

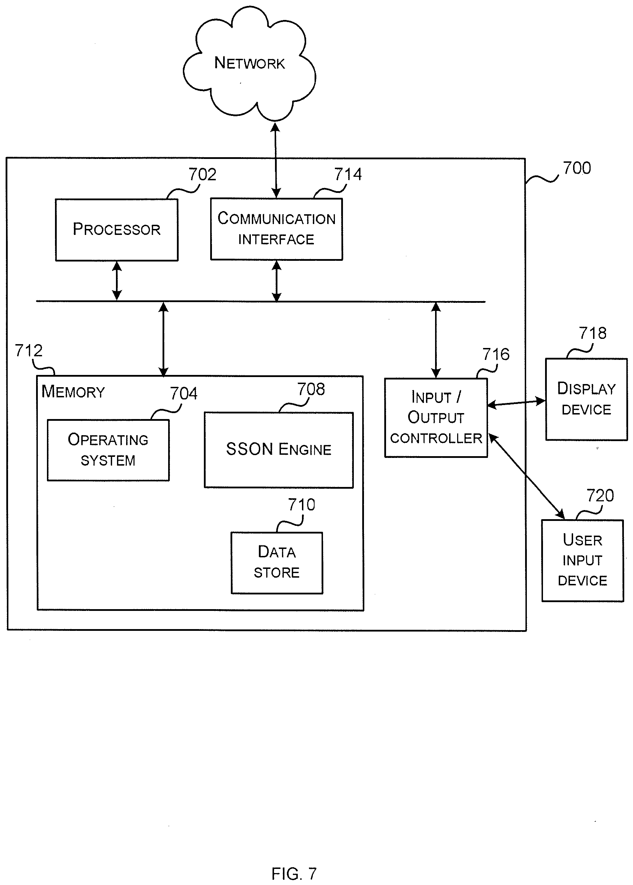

Figure 7 is another schematic diagram of an exemplary computing-based device 700 which may be implemented as any form of a computing, electronic device and/or server, and in which embodiments or examples of the SSON engine and/or functionality and other aspects as described herein may be implemented.

Computing-based device 700 comprises one or more processors 702 which may be microprocessors, controllers or any other suitable type of processors for processing computer executable instructions to control the operation of the device 700 in order to receive user communication data and measurements from the network or via a communication link using communication interface 714, analyse the user communication data for UEs of each user for identifying performance issues/problems associated with the UE of each user, determining and executing actions/responses associated with the identified performance issues/problems to thereby mitigate and/or avoid said performance issues/problems thus optimizing the user experience.

In some examples, for example where a system on a chip architecture is used, the processors 502 may include one or more fixed function blocks (also referred to as accelerators) which implement at least a part of the methods and/or apparatus as described herein in hardware (rather than software or firmware).

Platform software and/or computer executable instructions comprising an operating system 704 or any other suitable platform software may be provided at the computing-based device 700 to enable application software to be executed on the device. Depending on the functionality and capabilities of the computing device 700 and application of the computing device 700, software and/or computer executable instructions may include, and as described with reference to figures 1a-6c and 10-15, one or more of SSON engines and/or functionality (e.g. optimization modules 406a-406n, performance analysis engine 502, optimization engine 504, operations engine 506) may be provided at the computing-based device 700 and data store 710 may hold a database 508 including user profiles for each user. Alternatively or additionally, the database 508 may be located externally to the computing-based device 700 and accessed by communication interface 714.

For example, computing device 700 may be used to implement SSON engine 206, 406 and/or 500 or as described herein with reference to Figures 1-6c and 10-15 and may include software and/or computer executable instructions that may include SSON functionality or mechanisms 708. Computer storage media may include, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 712) is shown within the computing-based device 700 it will be appreciated that the storage may be distributed or located remotely and accessed via a network or other communication link (e.g. using communication interface 714).

The computing-based device 700 may also optionally or if desired comprises an input/output controller 716 arranged to output display information to a display device 718 which may be separate from or integral to the computing-based device 700. The display information may provide a graphical user interface. The input/output controller 716 is also arranged to receive and process input from one or more devices, such as a user input device 720 (e.g. a mouse or a keyboard). This user input may be used to set input criteria for operating the SSON engine 708 and view optimisation results. In an embodiment the display device 718 may also act as the user input device 720 if it is a touch sensitive display device. The input/output controller 716 may also output data to devices other than the display device, e.g. a locally connected printing device.

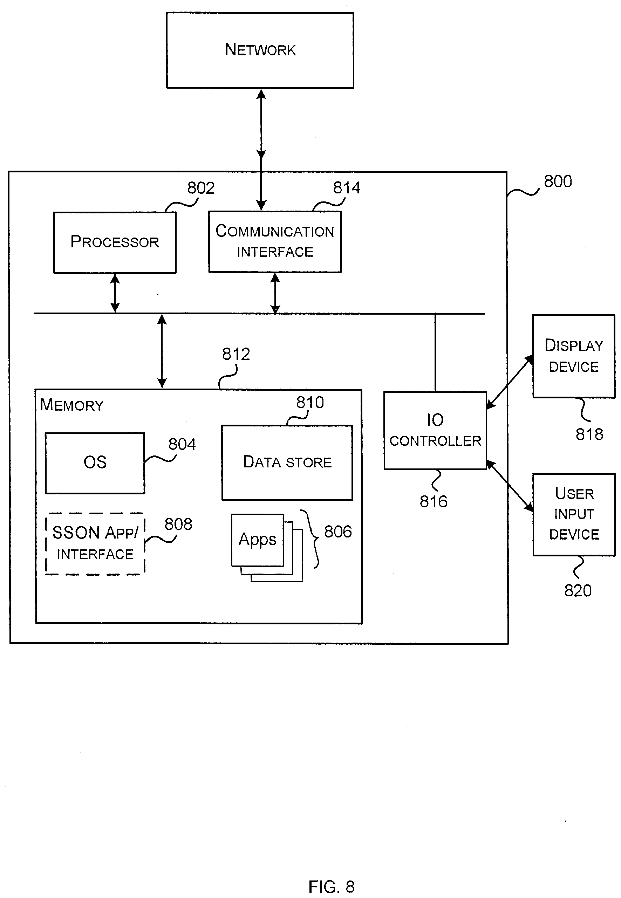

Figure 8 is another schematic diagram of an exemplary UE device 800 which may be implemented as any form of a computing or electronic device for communicating with a telecommunications network and receiving commands and/or communicating with examples of the SSON engine and/or functionality. Computing-based device 800 comprises one or more processors 802 which may be microprocessors, controllers or any other suitable type of processors for processing computer executable instructions to control the operation of the device 800 in order to receive commands or communicate measurements or configuration information to a SSON engine or functionality in the network or via a communication link using communication interface 814. The commands from the SSON engine may be analysed and processed to execute the corresponding actions/responses for modifying the configuration of the UE device 800 as described herein to thereby mitigate and/or avoid said performance issues/problems thus optimizing the user experience.

In some examples, for example where a system on a chip architecture is used, the processors 802 may include one or more fixed function blocks (also referred to as accelerators) which implement at least a part of the methods and/or apparatus as described herein in hardware (rather than software or firmware). Platform software and/or computer executable instructions comprising an operating system 804 or any other suitable platform software may be provided at the UE device 800 to enable application software 806 to be executed on the device. Depending on the functionality and capabilities of the UE device 800 and application of the UE device 800, software and/or computer executable instructions may include, and as described with reference to figures 1a-6c and 10-15, one or more of SSON apps or interfaces 808 and/or functionality may be provided at the UE device 800 including user profiles for each user. The data store 810 may be used for storing received commands from the SSON engine or functionality via network using communications interface 814.

For example, UE device 800 may be used to implement SSON app and/or interface as described herein with reference to Figures 1-6c and 10-15 and may include software and/or computer executable instructions that may include SSON app/interface functionality or mechanisms 808. Computer storage media may include, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 812) is shown within the UE device 800 it will be appreciated that the storage may be distributed or located remotely and accessed via a network or other communication link (e.g. using communication interface 814).

The UE device 800 may also optionally or if desired comprises an input/output controller 816 arranged to output display information to a display device 818 which may be separate from or integral to the UE device 800. The display information may provide a graphical user interface. The input/output controller 816 is also arranged to receive and process input from one or more devices, such as a user input device 820 (e.g. a mouse or a keyboard). This user input may be used to operate the UE device 800 for performing voice and data services. In an embodiment the display device 818 may also act as the user input device 820 if it is a touch sensitive display device. The input/output controller 816 may also output data to devices other than the display device, e.g. a locally connected printing device.

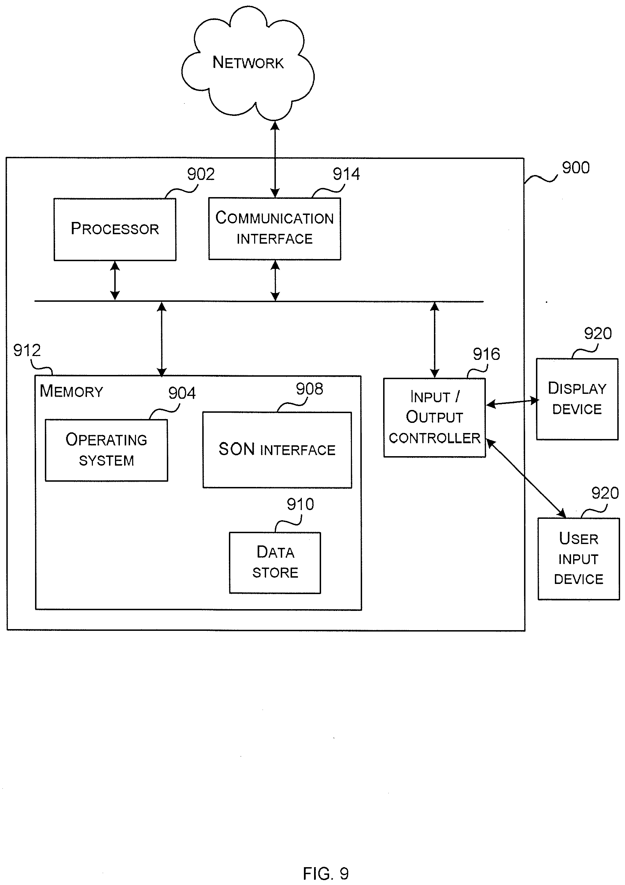

Figure 9 is another schematic diagram of an exemplary network element device 900 which may be implemented as any form of a computing, electronic device, or server for operating as a network controller element (e.g. BSC, RNC, MME, Wi-Fi controller, femto cell or there radio access technology etc.) or other type of network element (e.g. base station, Node B, eNodeB, access point, femto cell, etc.) in a telecommunications network and for receiving commands and/or communicating with examples of the SSON engine and/or functionality.

Network element device 900 comprises one or more processors 902 which may be microprocessors, controllers or any other suitable type of processors for processing computer executable instructions to control the operation of the device 900 in order to receive commands or communicate measurements or configuration information to a SSON engine or functionality in the network or via a communication link using communication interface 914. The commands from the SSON engine may be analysed and processed to execute the corresponding actions/responses for modifying the configuration of the UE device 800 as described herein to thereby mitigate and/or avoid said performance issues/problems thus optimizing the user experience.

In some examples, for example where a system on a chip architecture is used, the processors 902 may include one or more fixed function blocks (also referred to as accelerators) which implement at least a part of the methods and/or apparatus as described herein in hardware (rather than software or firmware). Platform software and/or computer executable instructions comprising an operating system 904 or any other suitable platform software may be provided at the network element device 900 to enable application software to be executed on the device 900. Depending on the functionality and capabilities of the network element device 900 and application of the network element device 900, software and/or computer executable instructions may include, and as described with reference to figures 1a-6c and 10-15, one or more of SSON interfaces 908 and/or functionality may be provided at the network element device 900. The data store 910 may be used for storing received commands from the SSON engine or functionality via network using communications interface 914.

For example, network element device 900 may be used to implement the SSON interface as described herein with reference to Figures 1-6c and 10-15 and may include software and/or computer executable instructions that may include SSON interface functionality or mechanisms 908. Computer storage media may include, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 912) is shown within the network element device 900 it will be appreciated that the storage may be distributed or located remotely and accessed via a network or other communication link (e.g. using communication interface 914).

The network element device 900 may also optionally or if desired comprises an input/output controller 916 arranged to output display information to a display device 918 which may be separate from or integral to the network element device 900. The display information may provide a graphical user interface. The input/output controller 916 is also arranged to receive and process input from one or more devices, such as a user input device 920 (e.g. a mouse or a keyboard). This user input may be used to operate the network element device 900. In an embodiment the display device 918 may also act as the user input device 920 if it is a touch sensitive display device. The input/output controller 916 may also output data to devices other than the display device, e.g. a locally connected printing device.

Figure 10 is a signalling diagram of an example signal flow 1000 between an example SSON engine 206, network element(s) 218c and UE 214d in response to performance issue(s). Although the SSON engine 206 of figures 2a and 2b is referenced, it is to be appreciated by the skilled person that any SSON engine or combinations thereof as described herein with reference to Figure 1-9 may be used in this example signal flow 1000.

At 1002, the SSON engine has stored a user profile for each user including the user communication data for the user such as user key activity along with action(s)/response(s) for mitigating or avoiding one or more performance issue(s)/problem(s) associated with the UE of each user, and also trigger points/conditions for determining when to execute the action(s)/response(s) associated with the one or more performance issue(s)/problem(s). The SSON engine 206 evaluates further user communication data of the UE for each user in real time to determine the status of the UE and whether a trigger point has been reached. When a trigger point in relation to an action/response has been reached, at 1004, the SSON engine 206 sends an action command message associated with the action/response for mitigating/avoiding the corresponding performance issue/problem. The action command message includes data representative of the action/response.

At 1006, the network element 218c (e.g. an RNC) receives the action command message from the SSON engine 206 and, based on the data representative of the action/response, determines the parameters for controlling the configuration for the UE based on the action command. At 1008 the network element 218c sends a configuration control message to the UE for use by the UE 214d to change the configuration for the UE 214d in relation to the action/response. At 1010, the UE 214d receives the configuration control message and, based on the parameters to control the configuration for the UE, the UE modifying/changes the configuration of the UE 214d.

At 1012, the UE 214d with the changed configuration communicates with the telecommunication network via the network element 218c. The changed configuration of the UE 214d may modify the behaviour of the UE 214d when communicating with the telecommunication network and thus mitigate the performance issue/problem associated with the triggered action/response. In 1014, the UE 214d may send a report of the UE communications data to the SSON engine 206 for determining whether the triggered action/response resolved the corresponding performance issue(s)/problem(s).

If the triggered action/response did resolve the corresponding performance issue(s)/problem(s), then the action/response is stored in the user profile of the user for later use when triggered. If the triggered action/response did not resolve the corresponding performance issue(s)/problems then the SSON engine may re-evaluate the user profile of the user and the user communication data for the UE 214d of the user to determine alternative or further action(s)/response(s) that may resolve the performance issue(s)/problem(s) associated with the UE 214d.

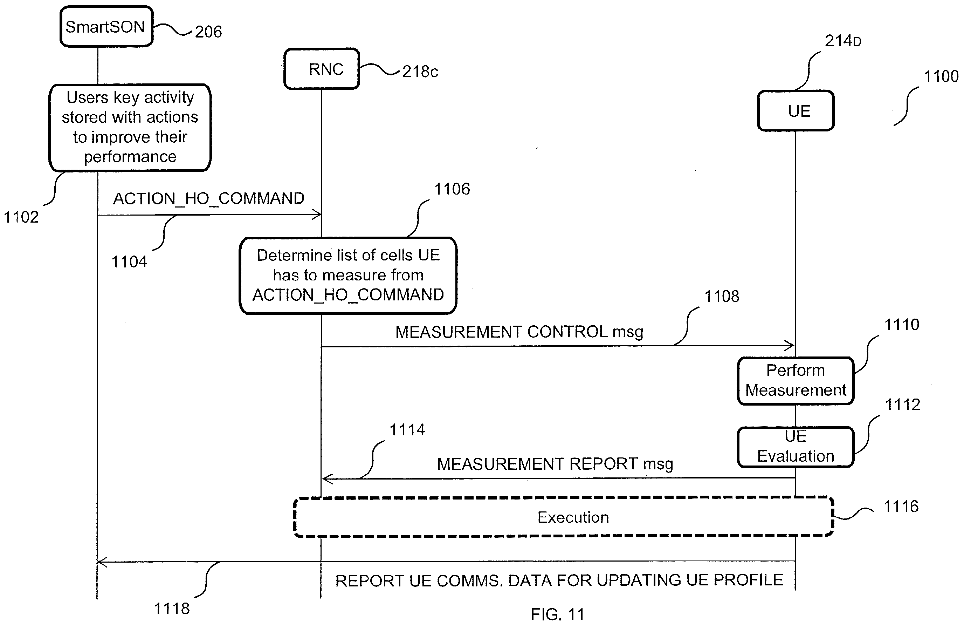

Figure 11 is a signalling diagram of an example signal flow 1100 between an example SSON engine 206, network element(s) 218c and UE 214d in response to handover performance issue(s). Although the SSON engine 206 of figures 2a and 2b is referenced, it is to be appreciated by the skilled person that any SSON engine or combinations thereof as described herein with reference to Figures 1-10 and 12-15 may be used in this example signal flow 1100.

At 1102, the SSON engine 206 has stored a user profile for each user including the user communication data for the user such as user key activity along with action(s)/response(s) for improving the performance and/or mitigating or avoiding the one or more performance issue(s)/problem(s) associated with the UE 214d of the user, and also trigger points/conditions for determining when to execute the action(s)/response(s) associated with the one or more performance issue(s)/problem(s). In this example, the performance issue/problem associated with the UE 214d is a handover failure or degradation of performance when a handover occurs at the same location. For example, the UE 214d may be travelling from London to Newbury and when stopped at Reading station the UE 214d always hands over to another cell resulting in performance degradation or even a hand over failure. The action/response for the handover performance issue/problem is determined to be that when the UE 214d stops in Reading again, that the UE 214d does not hand over to the other cell. The trigger point is based on the location of the UE 214d, and is triggered when the UE 214d is located in Reading.

The SSON engine 206 evaluates the further user communication data for the UE 214d of the user in real time to determine the status of the UE and whether the trigger point has been reached. When the UE 214d arrives in Reading, it is determined from the user communication data that the trigger point in relation to the action/response has been reached. At 1104 the SSON engine 206 sends an action handover command message associated with the handover action/response for mitigating/avoiding the corresponding handover performance issue/problem. The action command message includes data representative of the action/response. In this case, the data representative of the action/response includes a list of neighbour cells that the UE 214d has to measure, in which the list of neighbour cells is restricted to exclude the cell causing the handover failure or degradation in performance.

At 1106, the network element 218c (e.g. an RNC) receives the action command message from the SSON engine 206 and, based on the data representative of the list of neighbour cells, the RNC is modified to determine from the parameters that a measurement control message is required for sending the list of neighbour cells excluding the cell causing the handover performance issue(s). This can be used for controlling the configuration for the UE 214d. At 1108 the network element 218c sends a measurement control message to the UE including the list of neighbour cells excluding the cell causing the handover issues. At 1110, on receipt of the measurement control message from the network element 218c, the UE 214d is configured to only measure the cells from the received list of neighbour cells. At 1110, the UE 214d is configured to perform the cell measurements and at 1112 the UE 214d performs an evaluation to determine the best cell for handing over to, if necessary.

At 1114, the UE 214d is configured to send a measurement report message including the measurements performed at 1110 to the network element 218c. The network element 218c uses the measurements in handover procedure of the UE 214d to the best cell based on the measurements by the UE 214d. Given that the other cell causing the handover performance issue was not on the list of neighbour cells, the UE 214d was configured not to measure the other cell and thus the action handover command sent by the SSON engine 206 has avoided the performance issue/problem and optimized the user experience.

At 1116, the UE 214d with the changed configuration communicates with the telecommunication network via the newly handed over cell. The changed configuration of the UE 214d has modified the behaviour of the UE 214d when communicating with the telecommunication network and has mitigated the handover performance issue/problem associated with the triggered handover action/response. In 1118, the UE 214d may send a report of the UE communications data to the SSON engine 206 for determining whether the triggered handover action/response resolved the corresponding handover performance issue(s)/problem(s).

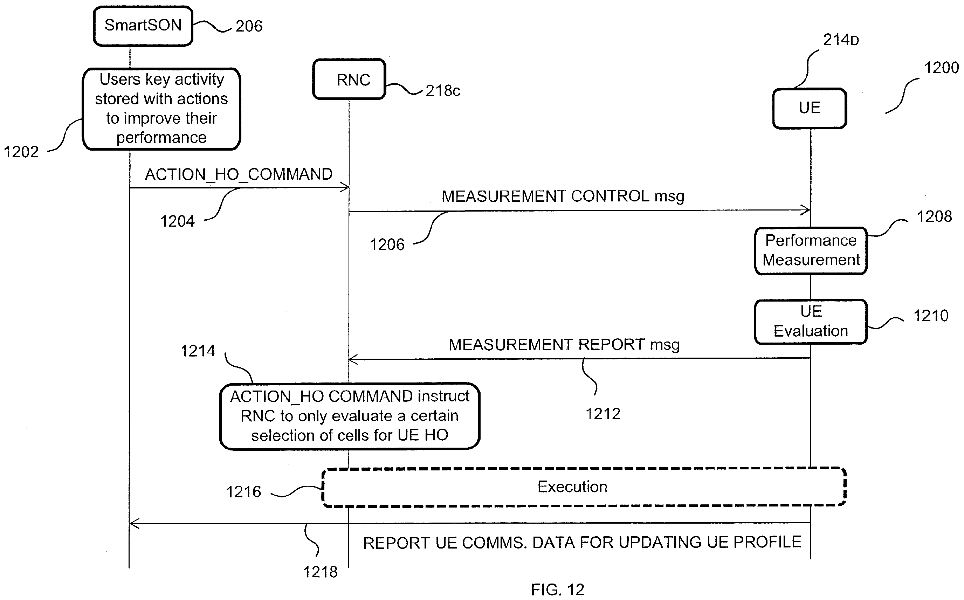

Figure 12 is an alternative signalling diagram of another example signal flow 1200 between a SSON engine 206, network element(s) 218c and a UE 214d in response to handover performance issue(s) experienced by the UE 214d and user of UE 214d. Although the SSON engine 206 of figures 2a and 2b is referenced, it is to be appreciated by the skilled person that any SSON engine or combinations thereof as described herein with reference to Figures 1-11 and 13-15 may be used in this example signal flow 1200.

At 1202, the SSON engine 206 has stored a user profile for each user including the user communication data for the user such as user key activity (e.g. user communication data) along with action(s)/response(s) for improving the performance and/or mitigating or avoiding the one or more performance issue(s)/problem(s) associated with the UE 214d of the user. The user profile for the user may also have stored therein trigger points/conditions for determining when to execute the action(s)/response(s) associated with the one or more performance issue(s)/problem(s).

In this example, the performance issue/problem associated with the UE 214d is a handover failure or degradation of performance when a handover occurs at the same location. For example, the UE 214d may be travelling on a train from London to Newbury and when stopped at Reading station the UE 214d, for some reason, always hands over to another cell resulting in performance degradation or even a hand over failure. As previously described herein, SSON engine 206 has performed an analysis and optimisation on the user communication data associated with the user using UE 214d to determine that a handover performance issue(s)/problem(s) exist and to determine one or more handover action(s)/response(s) and trigger point(s)/conditions for overcoming the handover performance issue(s)/problem(s). These are stored in the user profile of the user for UE 214d.

In this case, the handover action/response for the handover performance issue/problem is determined to be that when the UE 214d stops in Reading again, that the UE 214d does not hand over to the other cell. The trigger point is based on the location of the UE 214d, and is triggered when the UE 214d is located in Reading.

The SSON engine 206 evaluates the further user communication data for the UE 214d of the user in real time to determine the status of the UE and whether the trigger point has been reached. When the UE 214d arrives in Reading, it is determined from the user communication data that the trigger point in relation to the action/response has been reached. At 1204 the SSON engine 206 sends an action handover command message (e.g. ACTION_HO_COMMAND) to the network element (e.g. in this example, this is RNC 218c) associated with the handover action/response for mitigating/avoiding the corresponding handover performance issue/problem. The action command message includes data representative of the handover action/response. In this case, the data representative of the action/response includes a list of neighbour cells for the UE 214d to measure that is restricted to exclude the cell causing the handover failure or degradation in performance.

However, in this case, the network element 218c is configured to modify its response to the measurement report of the UE 214d and thus indirectly modify the configuration of the UE 214d by performing the action/response transparently to the UE 214d. That is, the network element 214d reconfigures or modifies the configuration of the UE 214d by not informing the UE 214d of the handover action/response message but instead modifying the communication connection and/or handover procedures in relation to the UE 214d, when needed, based on the handover action/response received. That is, the ACTION_HO_COMMAND may be used to instruct the network element 218c to only evaluate a certain selection of cells or restricted list of neighbour cells for the handover procedure of the UE 214d, without notifying the UE 214d of the selection or restricted list of neighbour cells.

For example, at 1204, the network element 218c (e.g. an RNC) receives the action command message from the SSON engine 206 and, based on the data representative of the list of neighbour cells, the RNC 218c is configured or instructed to determine from the parameters that only the cells in the restricted cell neighbour list should be used in a handover of the UE 214d. However, instead of informing the UE 214d of the restricted cell neighbour list derived by the SSON engine 206, the RNC 218c sends a measurement control message requesting the UE 214d to perform/evaluate cell measurements for the UE's 214d current cell neighbour list. The current cell neighbour list of the UE 214d has not been modified based on the restricted list of neighbour cells to exclude the cell causing the handover performance issue/problem.

At 1208, on receipt of the measurement control message from the network element 218c, the UE 214d is configured to perform the cell measurements as normal and at 1210 the UE 214d performs an evaluation to determine the best cell for handing over to, if necessary. At 1212, the UE 214d is configured to send a measurement report message including the measurements performed at 1208 and 1210 to the network element 218c. The measurement report includes the required measurements/parameters etc. the UE 214d measured/evaluated in relation to the current list of neighbour cells (including the cell causing the handover performance issue/problem).

At 1214, the network element 218c uses the measurements in conjunction with the ACTION_HO_COMMAND instructing the network element 218c to evaluate, from the received measurement data of the measurement report received from UE 214d, only those cells from the restricted list of neighbour cells in the handover procedure of the UE 214d. Given the RNC 218c has been instructed by the ACTION_HO_COMMAND not to consider the other cell causing the handover performance issue, i.e. this will not be on the selected list of cells for consideration or the restricted list of neighbour cells, then the cell causing the handover performance issue will not be considered as a handover candidate. The handover procedure of the UE 214d and hence the configuration of the UE 214d has been modified to not consider the other cell, and instead to handover, if necessary, to another cell that should not cause the associated handover performance issue(s)/problem(s). Thus the action handover command sent by the SSON engine 206 has avoided the handover performance issue/problem and optimized the user experience.

At 1216, the UE 214d with the modified configuration (i.e. the communication connection has been modified by the RNC 218c) communicates with the telecommunication network via the newly handed over cell. The changed configuration of the UE 214d has modified the behaviour of the network element 218c in relation to the UE 214d and has mitigated the handover performance issue/problem associated with the triggered handover action/response. In 1218, the UE 214d may send a report of the UE communications data to the SSON engine 206 for determining whether the triggered handover action/response resolved the corresponding handover performance issue(s)/problem(s).

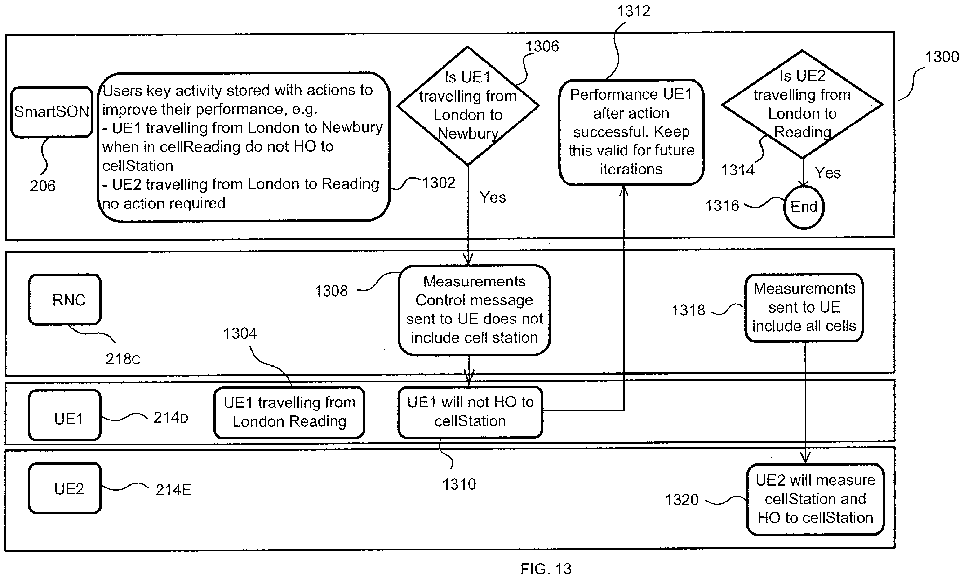

Figure 13 is a flow diagram illustrating example method(s) 1300 performed by the SSON engine 206, network elements (e.g. RNC 218c), and UEs 214d and 214e (e.g. UE1 and UE2, respectively) of two users for the situation in which the user of UE 214d (e.g. UE1) experiences handover performance issue(s) as described with reference to Figures 11 or 12. Although not described, the user of UE 214e (e.g. UE2) may experience other performance issue(s). Although the SSON engine 206, RNC 218c and UEs 214d and 214e are referenced with respect to figures 2a and 2b, it is to be appreciated by the skilled person that any SSON engine, network element or UE or combinations thereof as described herein with reference to Figures 1-12 and 14-15 may also be used.

At 1302, the SSON engine 206 has stored a user profile for each user associated with UEs 214d and 214e (e.g. UE1 and UE2, respectively). The user profile for each user includes key activity data (e.g. user communication data) for the corresponding UE 214d or 314e along with action(s)/response(s) for improving the performance and/or mitigating or avoiding the one or more performance issue(s)/problem(s) associated with the corresponding UE 214d or 214e of each user. The user profile for each user may also have stored therein trigger points/conditions for determining when to execute the action(s)/response(s) associated with the one or more performance issue(s)/problem(s).

In this example, after performing an analysis and optimisation on the user communications data associated with UE 214d (e.g. UE1) as described with reference to any one of Figures 1-12 and 14-15, the SSON engine 206 determines that UE 214d when travelling on a train from London to Newbury experiences a handover performance issue/problem, which is a handover failure of the UE 214d from a first cell called cellReading to a second cell called cellStation. The SSON engine 206 also determines a handover action/response for overcoming the performance issue to be when it is detected that UE 214d is likely to be travelling from London to Newbury, then when the UE 214d gets to cellReading do not handover to cellStation. The handover action(s)/response(s) may include data representative of a selected set of cells or a list of neighbour cells for the UE 214d to measure that is restricted to exclude cellStation causing the handover failure or degradation in performance.

In addition, the SSON engine 206 determines a set of one or more trigger point(s)/conditions for detecting when the handover action/response should be triggered/executed in the network for overcoming the handover performance issue(s)/problem(s). For this example, these trigger point(s) may include, by way of example only, information including one or more rules or policies for detecting whether the UE 214d is travelling from London to Newbury and also information including one or more rule(s) or policies for detecting whether the UE 214d enters cellReading. These are also stored in the user profile of the user of UE 214d. Similarly, the user profile of the user of UE 214e will also include various performance issue(s)/problem(s) and corresponding action(s)/response(s) and trigger point(s)/condition(s) associated with improving the user experience of UE 214e.

At 1304, the user of the UE 214d decides to travel from London to Newbury. During the trip, one or more network elements/components and/or the UE 214d may send the SSON engine 206 further user communication data that allows the SSON engine 206 to evaluate the behaviour of the user and/or UE 214d and, based on the user profile of the user, whether the status of the UE 214d satisfies any of the trigger point(s)/condition(s) associated with action(s)/response(s) for mitigating one or more performance issue(s)/problem(s) for UE 214d of the user. For example, the collection and analysis by the SSON engine 206 of this further user communication data may be performed in real time to determine the status of the UE 214d and whether one or more trigger point(s) have been reached.

At 1306, the SSON engine 206 determines from the further user communication data collected from the network and/or from the UE 214d that the UE 214d is travelling from London to Newbury. This may be based on the historical behaviour of the user of UE 214d (e.g. from the analysis of historical user communication data of UE 214d such that the SSON engine 206 has determined the user of UE 214d routinely takes this route every week or every day while commuting to/from work etc.) The SSON engine 206 may also monitor, from analysis of further user communication data, the current status of the UE 214d e.g. monitoring/analysing further user communication data associated with the UE 214d such as, by way of example only but not limited to, the location of the UE 214d, how fast the UE 214d is travelling, through which cells the UE 214d passes through etc. Based on the historical behaviour of the user and/or on the monitored further user communication data associated with the status of the UE 214d, the SSON engine 206 may determine that the UE 214d is likely to be travelling from London to Newbury.

For this example, one of the trigger point(s) from the user profile for the user of UE 214d is triggered as the SSON engine 206 detects the UE 214d to be travelling from London to Newbury. Once the SSON engine 206 detects that the UE 214d enters cellReading, then the trigger point(s) for the handover action(s)/response(s) in relation to the handover performance issue(s)/problem(s) for UE 214d will then trigger the execution of the corresponding handover action/response.

Prior to, concurrently or substantially concurrently or after 1306, the SSON engine 206 may also analyse and evaluate further user communication data for UEs of other users. In this example, the SSON engine 206 may determine from the further user communication data collected from the network and/or from the UE 214e that the UE 214e is also travelling from London to Newbury, or at least from London to Reading. This may also be based on the historical behaviour of the user of UE 214e. The SSON engine 206 may also monitor, from analysis of further user communication data, the current status of the UE 214e (e.g. monitoring/analysing further user communication data associated with the UE 214e such as, by way of example only but not limited to, the location of the UE 214e, how fast the UE 214d is travelling, through which cells the UE 214e passes through etc.) Based on the historical behaviour of the user and/or on the monitored further user communication data associated with the status of the UE 214e, the SSON engine 206 may determine that the UE 214e is likely to be travelling from London to Newbury.

At 1308, the SSON engine 206 has determined that the UE 214d is indeed travelling from London to Newbury via Reading. When all trigger point(s) have been satisfied or reached, the SSON engine 206 sends the network element 218c (e.g. an RNC) responsible for the telecommunications network in the region of Reading and Reading Station an action handover command message associated with the handover action(s)/response(s) to the corresponding handover performance issue(s)/problem(s) for UE 214d.

At 1308 the SSON engine 206 sends the action handover command message (e.g. ACTION_HO_COMMAND) to the network element (e.g. in this example, this is RNC 218c) associated with the handover action/response for mitigating/avoiding the corresponding handover performance issue/problem. The action command message includes data representative of the handover action/response, which in this case includes data representative of the set of selected cells or a list of neighbour cells for the UE 214d to measure that is restricted to exclude cellStation causing the handover failure or degradation in performance.

At 1308, the network element 218c (e.g. an RNC) receives the action command message from the SSON engine 206 and, based on the data representative of the selected cells or the list of neighbour cells that exclude cellStation, the RNC is configured to determine that a measurement control message should be sent to the UE 214d that includes the selected cells or the list of neighbour cells excluding the cellStation causing the handover performance issue(s) for UE 214d. The network element 218c sends a measurement control message including the necessary parameters or data representative of the selected cells or restricted list of neighbour cells that the UE 214d should use to make measurements to determine which cell is appropriate for a handover procedure. It is apparent that the measurement control message is used for controlling the configuration for the UE 214d.

At some point e.g. prior to, concurrently, or even after 1308, at 1314 the SSON engine 206 also determines that the UE 214e (e.g. UE2) is indeed also travelling from London to Newbury via Reading, or at least from London to Reading. However, in this case, at step 1316 it is determined that UE 214e may have a different handover performance issue/problem and may be required to measure all cells i.e. all cells in relation to cellReading and cellStation. Thus, on determining that all trigger point(s)/condition(s) based on the current status of UE 214e are satisfied, the SSON engine 206 sends the network element 218c (e.g. an RNC) responsible for the telecommunications network in the region of Reading and Reading Station an action handover command message in relation to UE 214e to network element 218c for instructing UE 214e to measure all cells.

At 1318, the network element 218c (e.g. an RNC) receives the action command message in relation to UE 214e from the SSON engine 206 and, based on the data representative of the list of neighbour cells, which in this case also includes cellStation, the RNC 218c is configured to send a measurement control message to the UE 214e causing UE 214e to measure all cells including cellStation, which is causing handover performance issue(s) for UE 214d. The network element 218c sends a measurement control message including the necessary parameters or data representative of all the cells including cellStation to allow UE 214e make all the necessary measurements appropriate for a handover procedure, if necessary. It is apparent that the measurement control message is also used for controlling the configuration for the UE 214e.

At 1310, on receipt of the measurement control message from the network element 218c, the UE 214d is configured to only measure the cells from the received list of neighbour cells. The UE 214d performs the cell measurements based only on the restricted list of neighbour cells (excluding cellStation) and evaluates the cell measurements to determine the best cell for use in a handover procedure, if necessary.

In this case, the UE 214d may be configured to send a measurement report message including the measurements for only those cells in the restricted list of neighbour cells to the network element 218c (not shown). The network element 218c uses only the received measurements in a handover procedure for the UE 214d. Given that the cellStation cell that previously caused a handover performance issue for UE 214d is not on the restricted list of neighbour cells and that the UE 214d was configured to not make measurements in relation to the cellStation cell, it is apparent that the action handover command sent by the SSON engine 206 to network element 218c in relation to UE 214d has avoided the performance issue/problem and optimized the user experience.

This means that the user would not have experienced a performance issue associated with a hand over from cellReading to cellStation and thus the user experience is optimised. The UE 214d with the changed configuration communicates with the telecommunication network via the newly handed over cell. The changed configuration of the UE 214d has modified the behaviour of the UE 214d when communicating with the telecommunication network and has mitigated the handover performance issue/problem associated with the triggered handover action/response.

At 1312, the SSON engine 206 may evaluate the performance of UE 214d after the action to determine whether the action was successful and/or whether any further action(s)/response(s) may be necessary for optimising the user experience. For example, the UE 214d may send a report of the UE communications data to the SSON engine 206 for determining whether the triggered handover action/response resolved the corresponding handover performance issue(s)/problem(s). If the action/response was successful, then the SSON engine 206 retains the action/response in the user profile of the user for UE 214d for future instances when UE 214d travels, for example, from London to Reading. If the action/response was no successful, then the SSON engine 206 may, as described herein with reference to Figures 1-12 and 14-15, perform a further analysis/optimisation to determine further action(s)/response(s) in relation to the handover performance issue(s)/problem(s) or for that matter any other type of performance issue/problem associated with UE 214d.

At 1320, on receipt of the measurement control message from the network element 218c, the UE 214e is configured to measure all cells including cellStation. The UE 214e performs the cell measurements and evaluates the cell measurements to determine the best cell for use in a handover procedure, if necessary. These are sent back to the RNC 218c and, if necessary, the UE 214e may be handed over to cellStation depending on the handover procedure based on the measurements of UE 214e.

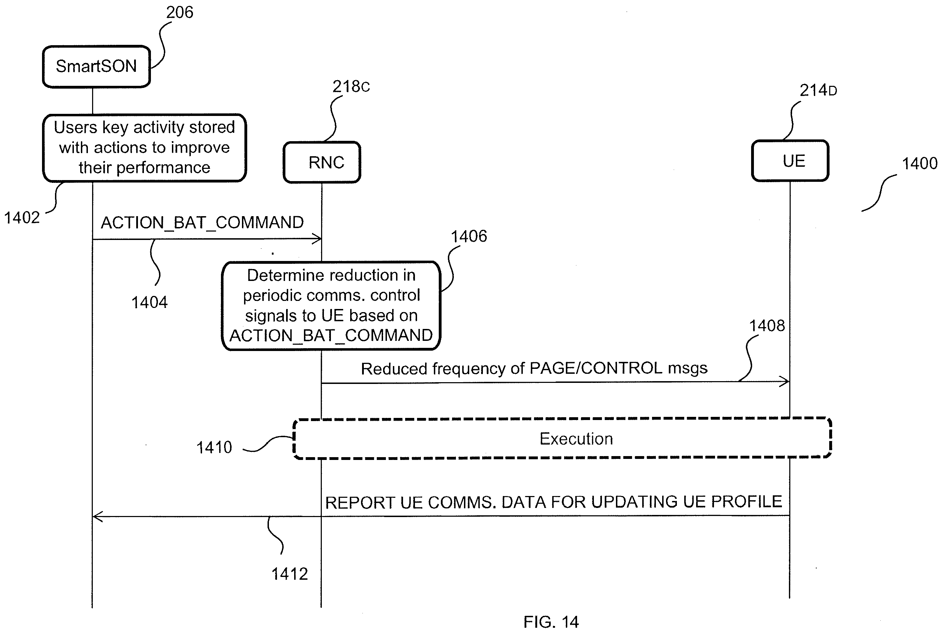

Figure 14 is a signalling diagram of another example signal flow 1400 between a SON engine 206, network element(s) 218c, and a UE 214d in response to power consumption performance issue(s) experienced by the UE 214d and user of UE 214d. Although the SSON engine 206 of figures 2a and 2b is referenced, it is to be appreciated by the skilled person that any SSON engine or combinations thereof as described herein with reference to Figures 1-13 and 15 may be used.

At 1402, the SSON engine 206 has stored a user profile for each user including the user communication data for the user such as user key activity (e.g. user communication data) along with action(s)/response(s) for improving the performance and/or mitigating or avoiding the one or more performance issue(s)/problem(s) associated with the UE 214d of the user. The user profile for the user may also have stored therein trigger points/conditions for determining when to execute the action(s)/response(s) associated with the one or more performance issue(s)/problem(s).

In this example, the performance issue/problem associated with the UE 214d is related to excessive power consumption or a low battery indication or level of UE 214d, which may result in poor communications performance or even a communications outage (i.e. a loss in communications) during use of UE 214d. For example, this may also occur at the same location (e.g. in the office, at home or while commuting) due to the behaviour or environment the user regularly finds themselves in e.g. forgetting to charge the device, lack of power sockets, plugs or adaptors available for charging UE 214d (e.g. during commuting or in the office etc.)

As previously described herein, SSON engine 206 has performed an analysis and optimisation on the user communication data including historical user behaviour etc. associated with the user using UE 214d to determine whether a power consumption performance issue(s)/problem(s) exist and to determine one or more power consumption action(s)/response(s) and trigger point(s)/conditions may be used for overcoming the power consumption performance issue(s)/problem(s). These are stored in the user profile of the user for UE 214d.

In this case, the power consumption action/response for the power consumption performance issue/problem is determined, by way of example only, to be that when the UE 214d is stationary (e.g. stops at home or in the office), that the network element 218c involved in communicating with the UE 214d reduces transmission of any unnecessary communication signals and/or reduces the requirement for the UE 214d to transmit any unnecessary communication signals to the network element 218c or to associated network elements.

For example the SSON engine 206 during its analysis/optimisation procedures may identify a set of communications signals for reducing unnecessary communications with the UE 214d based on the mobility status of the UE 214d. For example, when the UE 214d is stationary or even when it is non-stationary. In this example, it is assumed that the UE 214d is stationary for a period of time.

The set of communications signals may be selected or based on, by way of example only, one or more communication signals from the group of: paging signals associated with the UE 214d, power control signals associated with the UE 214d, measurement signals associated with the UE 214d, location services signals associated with the UE 214d, and any other communication signal associated with the UE 214d that originates from a network element (e.g. RNC 218c) of the telecommunications network.

Reducing the number of communication signals transmitted/received will assist in reducing the power consumption of the UE 214d. In this example, the trigger point(s) may be based on the location of the UE 214d and may be triggered when the UE 214d is stationary in a location for a period of time (e.g. at home or at the office). This means that it can be assumed the UE 214d will stay in the same location and not require any further communications signalling to allow the network to determine where the UE 214d is located etc.

The SSON engine 206 evaluates the further user communication data for the UE 214d of the user in real time to determine the status of the UE and whether the trigger point has been reached. When the UE 214d is stationary for a period of time, or is in and around particular location or cell for a period of time, it may be determined from the user communication data that the trigger point in relation to the action/response has been reached. The trigger point may also require that the UE 214d be at a certain location such as the office, or at home of the user, or in a particular cell associated with either home or office or any other location that the UE 214d may, historically, have been stationary for a period of time.

At 1404 the SSON engine 206 sends an action battery or power consumption command message (e.g. ACTION_BAT_COMMAND) to the network element (e.g. in this example, this is RNC 218c) associated with the UE 214d when the UE 214d is stationary in the particular location for mitigating/avoiding the corresponding excessive power consumption or battery consumption performance issue/problem. The action command message may further include data representative of the possible set of communication signals that are not required to be transmitted/received while the UE 214d is stationary or substantially stationary at the particular location.

In this case, the network element 218c is configured to determine from receipt of the ACTION_BAT_COMMAND the required reduction in the frequency of the communication signalling to/from the UE 214d. The network element 218c may also send a page/control message to the UE 214d for use by the UE 214d in reducing transmission of communication signalling to the network element 218c or associated network elements. Thus, the configuration of the UE 214d is modify both indirectly by the network element 218c in reducing the set of communication signalling messages and/or directly by the network element 218c sending the UE 214d a message for configuring/reducing the communication signalling required to be transmitted to the network element 218c from the UE 214d.

The ACTION_BAT_COMMAND may be used to instruct the network element 218c to only reduce communications signalling from the set of communications signals to be transmitted to the UE 214d, without notifying the UE 214d of the reduction in communication signalling. Alternatively or additionally, the ACTION_BAT_COMMAND may be used to instruct the network element 218c to not only reduce communications signalling from the set of communications signals to be transmitted to the UE 214d, but also to notify the UE 214d to reduce communications signalling from the UE 214d to the network element 218c or associated network elements. These scenarios result in the ACTION_BAT_COMMAND modifying the configuration of the UE 214d, where the configuration of the UE 214d includes the communications between network element 218c and the UE 214d.

For example, at 1406, the network element 218c (e.g. an RNC) receives the ACTION_BAT_COMMAND message from the SSON engine 206 and, based on the data representative of the set of communication signals, the RNC 218c is configured or instructed to determine the reduction in the frequency and type of communication signals that it needs to send to and/or receive from the UE 214d. In addition, the RNC 218c may also notify the UE 214d the necessary information required to allow the UE 214d to modify the configuration of the UE 214d for reducing the communications signals in the set of communication signals transmitted from the UE 214d to the network element 218c or associated network elements.

At 1408, the network element 218c sends communication signals from the set of communication signals at a reduced frequency, such that the power consumption of the UE 214d is reduced, which conserves the available power usable by the UE 214d. As well, at 1408, on receipt of the paging/control message from the network element 218c, the UE 214d is configured to reduce the transmission of communication signals from the set of communication signals to the network element 218c or associated network elements. Thus, the UE 214d is further configured to conserve power by not transmitting communication signals from the set of communication signals as frequently.

At 1410, the UE 214d communicates with the RNC 218c or associated network elements at the reduced frequency set for providing communication signals from the set of communication signals. Should the UE 214d receive a call from another UE, then the UE 214d communicates with the other UE in the normal fashion. However, after the call, the UE 214d continues to communicate communication signals from the set of communication signals with the network elements 218c etc., at the reduced rate. Basically, the UE 214d with the modified configuration (i.e. the communication connection has been modified by the RNC 218c) communicates with the telecommunication network at the reduced frequency of communication signalling. The changed configuration of the UE 214d has modified the behaviour of the network element 218c in relation to the UE 214d and has mitigated the excessive power consumption performance issue/problem associated with the triggered power consumption/battery action/response. In 1412, the UE 214d may send a report of the UE communications data to the SSON engine 206 for determining whether the triggered power consumption/battery action/response resolved the corresponding excessive power consumption/battery level handover performance issue(s)/problem(s).

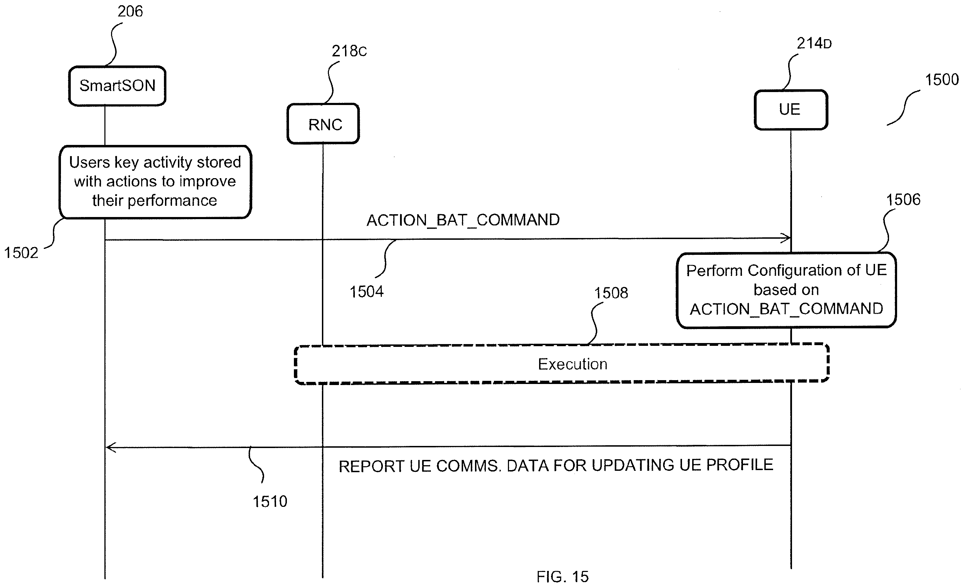

Figure 15 is another signalling diagram of the signal flow 1500 between a SON engine 206, network element(s) 218c, and a UE 214d in response to power consumption performance issue(s) experienced by the UE 214d and user of UE 214d. Although the SSON engine 206 of figures 2a and 2b is referenced, it is to be appreciated by the skilled person that any SSON engine or combinations thereof as described herein with reference to Figures 1-14 may be used.

At 1502, the SSON engine 206 has stored a user profile for each user including the user communication data for the user such as user key activity (e.g. user communication data) along with action(s)/response(s) for improving the performance and/or mitigating or avoiding the one or more performance issue(s)/problem(s) associated with the UE 214d of the user. The user profile for the user may also have stored therein trigger points/conditions for determining when to execute the action(s)/response(s) associated with the one or more performance issue(s)/problem(s).

In this example, the performance issue/problem associated with the UE 214d is related to excessive power consumption or a low battery indication or level of UE 214d, which may result in poor communications performance or even a communications outage (i.e. a loss in communications) during use of UE 214d. For example, this may also occur at the same location (e.g. in the office, at home or while commuting) due to the behaviour or environment the user regularly finds themselves in e.g. forgetting to charge the device, lack of power sockets, plugs or adaptors available for charging UE 214d (e.g. during commuting or in the office etc.)

As previously described herein, SSON engine 206 has performed an analysis and optimisation on the user communication data and also on the hardware/software configuration of the UE 214d and usage of hardware/software on the UE 214d, which includes historical user behaviour etc. associated with the user using UE 214d to determine whether and/or when power consumption performance issue(s)/problem(s) exist and to determine one or more power consumption action(s)/response(s) and trigger point(s)/conditions may be used for overcoming the power consumption performance issue(s)/problem(s). These are stored in the user profile of the user for UE 214d.

In this case, the power consumption action/response for the power consumption performance issue/problem is determined, by way of example only, to be when the hardware/software configuration of the UE 214d is configured such that there is excessive power consumption of the UE 214d. This may occur when the UE 214d is stationary or non-stationary. This may occur due to the UE 214d executing multiple applications or using a large amount of computing resources that may lead to an excessive power consumption and hence poor user experience due to the UE 214d running out of power.

For example the SSON engine 206 during its analysis/optimisation procedures may identify a set of applications or hardware components that may be causing excessive power consumption and which, whilst still allowing the user of UE 214d to use the UE 214d, may be terminated or the use of the hardware components reduced or switched to a sleep mode/low power consumption mode depending on the status of the battery level or estimated battery life of the UE 214d.

The SSON engine 206 evaluates the further user communication data for the UE 214d of the user in real time to determine the status of the UE (e.g. the number of applications executing on the UE, the hardware components being used) and whether the trigger point has been reached. That is, when the battery level of the UE 214d is below a certain level, or when it is estimated the UE 214d has a certain amount of time left before it runs out of power. It may be determined from the user communication data from the UE 214d that the trigger point in relation to the action/response has been reached.

At 1504 the SSON engine 206 sends an action battery or power consumption command message (e.g. ACTION_BAT_COMMAND) directly to the UE 214d (or via network element (e.g. in this example, this is RNC 218c)) when it is determined that the UE 214d maybe excessively using too much power and that the battery life of the UE 214d has been shortened such that the user will experience a communication or power failure. The action command message may further include data representative of the possible set of applications, software or hardware components that are not required to be used by the UE 214d and which will assist in reducing the power consumption of the UE 214d and thus extend the battery life of the UE 214d.

In this case, the UE 218d is configured to determine from receipt of the ACTION_BAT_COMMAND the required modifications to the hardware/software configuration of the UE 214d based on the ACTION_BAT_COMMAND. Thus, the configuration of the UE 214d is modified to terminate one or more applications executing on the UE 214d, and/or reduce the power consumption of one or more hardware component(s) on the UE 214d (e.g. switching one or more hardware components to a low power mode), or both reducing software/applications that are using hardware components resulting in excessive power consumption of the UE 214d.

At 1508, the UE 214d with the modified configuration communicates with the telecommunication network using the modified configuration (e.g. a low power configuration) depending on the action/response of the ACTION_BAT_COMMAND. In 1510, the UE 214d may send a report of the UE communications data to the SSON engine 206 for determining whether the triggered power consumption/battery action/response resolved the corresponding excessive power consumption/battery level handover performance issue(s)/problem(s).

The methods, apparatus, network elements, UEs, system(s), SSON engine(s) and module(s) and/or combinations thereof and as described herein may also be operable to interface with other non-conventional technologies and systems to implement UE specific optimisations. The system(s) may include the organised Wi-Fi network described in patent application number EP 3 048 839 A1 and the aggregated radio access network described in patent application EP 3 010 271 A1. Both of the described systems optionally incorporate a central controller for managing the functionality of the nodes. In each case the methods, apparatus, network elements, UEs, system(s), SSON engine(s) and module(s) and/or combinations thereof as described in the present application may interface directly with the nodes or instruct the central controller. The methods, apparatus, network elements, UEs, system(s), SSON engine(s) and module(s) and/or combinations thereof described in the present application will, based on a user profile, determine that optimisations are possible and instruct the controller or nodes to implement a change.

The terms 'computer', 'user equipment' and 'network element device' are used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

In an example, the network element is configured to modify the configuration of the UE by directing the UE to a selected radio access technology.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or example or may relate to several embodiments or examples. The embodiments and/or examples are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

It will be understood that the above description of a preferred embodiment or example is given by way of example only and that various modifications may be made by those skilled in the art. Although various embodiments and/or examples have been described above with a certain degree of particularity, or with reference to one or more individual embodiments or examples, those skilled in the art could make numerous alterations to the disclosed embodiments or examples without departing from the scope of this invention.

## Claims

1. A computer-implemented method for a self-organising network, SON, engine in a telecommunications network, the telecommunications network comprising a plurality of user equipment, UE, the method comprising:
receiving, by the SON engine, communications data associated with one or more of the plurality of UEs;
analysing, by the SON engine, the communications data to determine a targeted set of users with UEs experiencing communication issues;
retrieving, by the SON engine for each of the targeted set of users, a profile associated with each user of a UE communicating over the telecommunications network, wherein the profile comprises historical data on the communications behaviour of the user in the telecommunications network and one or more actions based on the status of the UE within the telecommunications network;
analysing, by the SON engine, the retrieved profile in relation to the current status of the UE and determining one or more optimisation strategies for overcoming the communication issues and one or more actions for modifying the network configuration for the UE to optimise the user experience at the UE for each of the targeted set of users;
selecting, by the SON engine, an optimisation strategy for each UE of the targeted set of users based on the current status of each UE;
sending, by the SON engine, one or more commands associated with the determined optimisation strategy to modify the network configuration for each UE of the targeted set of users; and
updating, by the SON engine, the profile to include the determined optimisation strategies and/or actions associated with each UE of the targeted set of users.

2. The method of claim 1, further comprising:
receiving, by each UE of the targeted set of users, the one or more commands from the SON engine for modifying the configuration for the UE, wherein the command is based on a determined action for controlling the UE to respond to one or more communication or performance issues associated with the UE;
determining, by the UE, a modification to the configuration for each UE based on the command; and
modifying, by the UE, the configuration for the UE to optimize the user experience.

3. The method as claimed in claim 2, wherein the at least one command includes one or more parameters that directs the UE to modify the communication configuration of the UE.

4. The method as claimed in claims 2 or 3, wherein the at least one command directs the UE to modify the configuration of the UE to optimize the user experience.

5. The method as claimed in any one of claims 2-4, wherein optimizing the user experience comprises responding to communication or performance issues associated with at least one from the group of:
a handover failure from a first base station to a second base station; and
an excessive power consumption associated with the UE.

6. The method of claim 1, further comprising:
receiving, by a network element in the telecommunications network, a command from the SON engine for modifying the configuration for a user equipment, UE, of the targeted set of users, wherein the command is based on a determined action for controlling the network element to modify the configuration of the UE to optimize the user experience;
determining, by a network element in the telecommunications network, a modification to the communication configuration for the UE based on the command; and
modifying, by a network element in the telecommunications network, the communication configuration of the UE.

7. The method as claimed in claim 6, wherein the command directs the network element to send one or more configuration messages to the UE, wherein a configuration message includes one or more parameters associated with the action for use by the UE to modify the configuration for the UE.

8. The method as claimed in claims 6 or 7, wherein the command directs the network element to modify the configuration for the UE transparently to the UE.

9. The method as claimed in any one of claims 6 to 8, further comprising modifying the configuration of the UE by directing, by a network element in the telecommunications network, the UE to a selected radio access technology and/or by directing, by a network element in the telecommunications network, the network element to reduce unnecessary communications between the UE and the telecommunications network and/or by reallocating network resources available to the UE.

10. A self-organizing network, SON, engine for use in a telecommunications network, the SON engine comprising a processor, memory and a communication interface, the processor connected to the memory and the communication interface, wherein the memory comprises computer instructions stored thereon which, when executed on the processor, causes the processor to perform any one of the steps of the computer-implemented method as claimed in claim 1.

11. A telecommunications network comprising:
a self-organizing network engine as claimed in claim 10;
a user equipment comprising a processor, memory and a communication interface, the processor connected to the memory and the communication interface, wherein the memory comprises computer instructions stored thereon which, when executed on the processor, causes the processor to perform any one of the steps of the computer-implemented method as claimed in any one of claims 2 to 5; and
a network element comprising a processor, memory and a communication interface, the processor connected to the memory and the communication interface, wherein the memory comprises computer instructions stored thereon which, when executed on the processor, causes the processor to perform any one of the steps of the computer-implemented method as claimed in any one of claims 6 to 9.

## Patentansprüche

1. Computerimplementiertes Verfahren für eine selbstorganisierende Netzwerkmaschine (Self-Organising Network, SON-Maschine) in einem Telekommunikationsnetz, wobei das Telekommunikationsnetz eine Vielzahl an Benutzergeräten (User Equipment, UE) umfasst, wobei das Verfahren Folgendes umfasst:
Empfangen, durch die SON-Maschine, von Kommunikationsdaten im Zusammenhang mit einem oder mehreren der Vielzahl an UE;
Analysieren, durch die SON-Maschine, der Kommunikationsdaten, um einen gezielten Satz von Benutzern mit UE zu ermitteln, bei denen Kommunikationsprobleme auftreten.
Abrufen, durch die SON-Maschine für jeden des gezielten Satzes von Benutzern, eines Profils im Zusammenhang mit jedem Benutzer eines über das Telekommunikationsnetz kommunizierenden UE, wobei das Profil historische Daten zum Kommunikationsverhalten des Benutzers in dem Telekommunikationsnetz und eine oder mehrere Aktionen basierend auf dem Status des UE im Telekommunikationsnetz umfasst;
Analysieren, durch die SON-Maschine, des abgerufenen Profils im Zusammenhang mit dem aktuellen Status des UE und Bestimmen einer oder mehrerer Optimierungsstrategien zur Behebung der Kommunikationsprobleme und einer oder mehrerer Aktionen zur Änderung der Netzwerkkonfiguration für das UE, um die Benutzerfreundlichkeit am UE für jeden des gezielten Satzes von Benutzern zu optimieren;
Auswählen, durch die SON-Maschine, einer Optimierungsstrategie für jedes UE des gezielten Satzes von Benutzern basierend auf dem aktuellen Status jedes UE;
Senden, durch die SON-Maschine, eines oder mehrerer Befehle im Zusammenhang mit der bestimmten Optimierungsstrategie, um die Netzwerkkonfiguration für jedes UE des gezielten Satzes von Benutzern zu ändern; und
Aktualisieren, durch die SON-Maschine, des Profils, damit es die bestimmten Optimierungsstrategien und/oder Aktionen im Zusammenhang mit jedem UE des gezielten Satzes von Benutzern umfasst.

2. Verfahren nach Anspruch 1, weiter umfassend:
Empfangen, durch jedes UE des gezielten Satzes von Benutzern, des einen oder der mehreren Befehle von der SON-Maschine zur Änderung der Konfiguration für das UE, wobei der Befehl auf einer bestimmten Aktion basiert, mit der das UE so gesteuert wird, dass es auf ein oder mehrere Kommunikations- oder Leistungsprobleme im Zusammenhang mit dem UE reagiert;
Bestimmen, durch das UE, einer Änderung an der Konfiguration für jedes UE basierend auf dem Befehl; und
Ändern, durch das UE, der Konfiguration für das UE, um die Benutzerfreundlichkeit zu optimieren.

3. Verfahren nach Anspruch 2, wobei der mindestens eine Befehl einen oder mehrere Parameter umfasst, die das UE zur Änderung der Kommunikationskonfiguration des UE anweisen.

4. Verfahren nach Anspruch 2 oder 3, wobei der mindestens eine Befehl das UE anweist, die Konfiguration des UE zur Optimierung der Benutzerfreundlichkeit zu ändern.

5. Verfahren nach einem der Ansprüche 2 bis 4, wobei die Optimierung der Benutzerfreundlichkeit umfasst, dass auf Kommunikations- oder Leistungsprobleme im Zusammenhang mit mindestens einem aus der Gruppe von Folgendem reagiert wird:
ein Fehlschlagen der Übergabe von einer ersten Basisstation an eine zweite Basisstation; und
ein übermäßiger Stromverbrauch im Zusammenhang mit dem UE.

6. Verfahren nach Anspruch 1, weiter umfassend:
Empfangen, durch ein Netzelement in dem Telekommunikationsnetz, eines Befehls von der SON-Maschine zur Änderung der Konfiguration für ein Benutzergerät (User Equipment, UE) des gezielten Satzes von Benutzern, wobei der Befehl auf einer bestimmten Aktion basiert, mit der das Netzelement so gesteuert wird, dass es die Konfiguration des UE zur Optimierung der Benutzerfreundlichkeit ändert;
Bestimmen, durch ein Netzelement in dem Telekommunikationsnetz, einer Änderung an der Kommunikationskonfiguration für das UE basierend auf dem Befehl; und
Ändern, durch ein Netzelement in dem Telekommunikationsnetz, der Kommunikationskonfiguration des UE.

7. Verfahren nach Anspruch 6, wobei der Befehl das Netzelement anweist, eine oder mehrere Konfigurationsnachrichten an das UE zu senden, wobei eine Konfigurationsnachricht einen oder mehrere Parameter im Zusammenhang mit der Aktion umfasst, anhand derer das UE die Konfiguration für das UE ändern kann.

8. Verfahren nach Anspruch 6 oder 7, wobei der Befehl das Netzelement anweist, die Konfiguration für das UE transparent für das UE zu ändern.

9. Verfahren nach einem der Ansprüche 6 bis 8, ferner umfassend die Änderung der Konfiguration des UE, indem das UE durch ein Netzelement in dem Telekommunikationsnetz zu einer ausgewählten Funkzugangstechnologie geleitet wird und/oder indem das Netzelement durch ein Netzelement in dem Telekommunikationsnetz angewiesen wird, eine unnötige Kommunikation zwischen dem UE und dem Telekommunikationsnetz zu reduzieren, und/oder indem für das UE verfügbare Netzressourcen neu zugewiesen werden.

10. Selbstorganisierende Netzwerkmaschine (Self-Organising Network, SON-Maschine) zur Verwendung in einem Telekommunikationsnetz, wobei die SON-Maschine eine Verarbeitungseinheit, einen Speicher und eine Kommunikationsschnittstelle umfasst, wobei die Verarbeitungseinheit mit dem Speicher und der Kommunikationsschnittstelle verbunden ist, wobei der Speicher darin gespeicherte Computeranweisungen umfasst, die bei Ausführung auf der Verarbeitungseinheit veranlassen, dass die Verarbeitungseinheit einen der Schritte des computerimplementierten Verfahrens nach Anspruch 1 durchführt.

11. Telekommunikationsnetz, umfassend:
eine selbstorganisierende Netzwerkmaschine nach Anspruch 10;
ein Benutzergerät, umfassend eine Verarbeitungseinheit, einen Speicher und eine Kommunikationsschnittstelle, wobei die Verarbeitungseinheit mit dem Speicher und der Kommunikationsschnittstelle verbunden ist, wobei der Speicher darin gespeicherte Computeranweisungen umfasst, die bei Ausführung auf der Verarbeitungseinheit veranlassen, dass die Verarbeitungseinheit einen der Schritte des computerimplementierten Verfahrens nach Anspruch 2 bis 5 durchführt; und
ein Netzelement, umfassend eine Verarbeitungseinheit, einen Speicher und eine Kommunikationsschnittstelle, wobei die Verarbeitungseinheit mit dem Speicher und der Kommunikationsschnittstelle verbunden ist, wobei der Speicher darin gespeicherte Computeranweisungen umfasst, die bei Ausführung auf der Verarbeitungseinheit veranlassen, dass die Verarbeitungseinheit einen der Schritte des computerimplementierten Verfahrens nach Anspruch 6 bis 9 durchführt.

## Revendications

1. Un procédé mis en oeuvre par ordinateur destiné à un moteur de réseau auto-organisateur, SON, dans un réseau de télécommunications, le réseau de télécommunications comprenant une pluralité d'équipements d'utilisateur, UE, le procédé comprenant :
la réception, par le moteur SON, de données de communications associées à un ou plusieurs UE de la pluralité d'UE,
l'analyse, par le moteur SON, des données de communications de façon à déterminer un ensemble ciblé d'utilisateurs avec des UE rencontrant des problèmes de communication,
la récupération, par le moteur SON pour chaque utilisateur de l'ensemble ciblé d'utilisateurs, d'un profil associé à chaque utilisateur d'un UE communiquant par l'intermédiaire du réseau de télécommunications, où le profil comprend des données d'historique sur le comportement de communication de l'utilisateur dans le réseau de télécommunications et une ou plusieurs actions basées sur le statut de l'UE à l'intérieur du réseau de télécommunications,
l'analyse, par le moteur SON, du profil récupéré en relation avec le statut actuel de l'UE et la détermination d'une ou de plusieurs stratégies d'optimisation destinées à la résolution des problèmes de communication et d'une ou de plusieurs actions destinées à la modification de la configuration de réseau pour l'UE de façon à optimiser l'expérience de l'utilisateur au niveau de l'UE pour chaque utilisateur de l'ensemble ciblé d'utilisateurs,
la sélection, par le moteur SON, d'une stratégie d'optimisation pour chaque UE de l'ensemble ciblé d'utilisateurs en fonction du statut actuel de chaque UE,
l'envoi, par le moteur SON, d'une ou de plusieurs commandes associées à la stratégie d'optimisation déterminée de façon à modifier la configuration de réseau pour chaque UE de l'ensemble ciblé d'utilisateurs, et
l'actualisation, par le moteur SON, du profil de façon à inclure les stratégies d'optimisation déterminées et/ou les actions associées à chaque UE de l'ensemble ciblé d'utilisateurs.

2. Le procédé selon la Revendication 1, comprenant en outre :
la réception, par chaque UE de l'ensemble ciblé d'utilisateurs, des une ou plusieurs commandes à partir du moteur SON destinées à la modification de la configuration pour l'UE, où la commande est basée sur une action déterminée destinée à la commande de l'UE de façon à répondre à un ou plusieurs problèmes de communication ou de performance associés à l'UE,
la détermination, par l'UE, d'une modification à la configuration pour chaque UE en fonction de la commande, et
la modification, par l'UE, de la configuration pour l'UE de façon à optimiser l'expérience de l'utilisateur.

3. Le procédé selon la Revendication 2, où la au moins une commande comprend un ou plusieurs paramètres qui dirigent l'UE de façon à modifier la configuration de communication de l'UE.

4. Le procédé selon l'une quelconque des Revendications 2 ou 3, où la au moins une commande dirige l'UE de façon à modifier la configuration de l'UE de façon à optimiser l'expérience de l'utilisateur.

5. Le procédé selon l'une quelconque des Revendications 2 à 4, où l'optimisation de l'expérience de l'utilisateur comprend la réponse à des problèmes de communication ou de performance associés à au moins un élément du groupe se composant de :
un échec de transfert à partir d'une première station de base vers une deuxième station de base, et
une consommation d'énergie excessive associée à l'UE.

6. Le procédé selon la Revendication 1, comprenant en outre :
la réception, par un élément de réseau dans le réseau de télécommunications, d'une commande à partir du moteur SON destinée à la modification de la configuration pour un équipement d'utilisateur, UE, de l'ensemble ciblé d'utilisateurs, où la commande est basée sur une action déterminée pour la commande de l'élément de réseau de façon à modifier la configuration de l'UE de façon à optimiser l'expérience de l'utilisateur,
la détermination, par un élément de réseau dans le réseau de télécommunications, d'une modification à la configuration de communication pour l'UE en fonction de la commande, et
la modification, par un élément de réseau dans le réseau de télécommunications, de la configuration de communication de l'UE.

7. Le procédé selon la Revendication 6, où la commande dirige l'élément de réseau de façon à envoyer un ou plusieurs messages de configuration à l'UE, où un message de configuration comprend un ou plusieurs paramètres associés à l'action pour une utilisation par l'UE de façon à modifier la configuration pour l'UE.

8. Le procédé selon l'une quelconque des Revendications 6 ou 7, où la commande dirige l'élément de réseau de façon à modifier la configuration pour l'UE de manière transparente à l'UE.

9. Le procédé selon l'une quelconque des Revendications 6 à 8, comprenant en outre la modification de la configuration de l'UE par la direction, par un élément de réseau dans le réseau de télécommunications, de l'UE vers une technologie d'accès radio sélectionnée et/ou par la direction, par un élément de réseau dans le réseau de télécommunications, de l'élément de réseau de façon à réduire des communications non nécessaires entre l'UE et le réseau de télécommunications et/ou par la réattribution de ressources de réseau disponibles à l'UE.

10. Un moteur de réseau auto-organisateur, SON, destiné à une utilisation dans un réseau de télécommunications, le moteur SON comprenant un processeur, une mémoire et une interface de communication, le processeur étant raccordé à la mémoire et à l'interface de communication, où la mémoire contient des instructions informatiques conservées en mémoire sur celle-ci qui, lorsqu'elles sont exécutées sur le processeur, amènent le processeur à exécuter l'une quelconque des opérations du procédé mis en oeuvre par ordinateur selon la Revendication 1.

11. Un réseau de télécommunications comprenant :
un moteur de réseau auto-organisateur selon la Revendication 10,
un équipement d'utilisateur comprenant un processeur, une mémoire et une interface de communication, le processeur étant raccordé à la mémoire et à l'interface de communication, où la mémoire contient des instructions informatiques conservées en mémoire sur celle-ci qui, lorsqu'elles sont exécutées sur le processeur, amènent le processeur à exécuter l'une quelconque des opérations du procédé mis en oeuvre par ordinateur selon l'une quelconque des Revendications 2 à 5, et
un élément de réseau comprenant un processeur, une mémoire et une interface de communication, le processeur étant raccordé à la mémoire et à l'interface de communication, où la mémoire contient des instructions informatiques conservées en mémoire sur celle-ci qui, lorsqu'elles sont exécutées sur le processeur, amènent le processeur à exécuter l'une quelconque des opérations du procédé mis en oeuvre par ordinateur selon l'une quelconque des Revendications 6 à 9.
